# EUROPÄISCHE PATENTSCHRIFT

(11) **EP 1 248 826 B1**
(45) Veröffentlichungstag und Bekanntmachung des Hinweises auf die Patenterteilung: **28.10.2009**
(21) Anmeldenummer: 00989991.5
(22) Anmeldetag: 18.12.2000
(51) Int. Cl.: C09K 19/30

(54) **FLÜSSIGKRISTALLINES MEDIUM**
LIQUID CRYSTALLINE MEDIUM
MILIEU CRISTALLIN LIQUIDE

(30) Priorität: 21.12.1999 DE 19961702
(43) Veröffentlichungstag der Anmeldung: 16.10.2002
(73) Patentinhaber: Merck Patent GmbH, 64271 Darmstadt (DE)
(72) Erfinder: HECKMEIER, Michael, 64625 Bensheim (DE); SCHULER, Brigitte, 63762 Grossostheim (DE); GÖTZ, Achim, 64665 Hähnlein (DE); KIRSCH, Peer, 64293 Darmstadt (DE); POETSCH, Eike, 64367 Mühltal (DE); PAULUTH, Detlef, 64372 Ober-Ramstadt (DE)
(86) Internationale Anmeldenummer: PCT/EP2000/012891
(87) Internationale Veröffentlichungsnummer: WO 2001/046336

(56) Entgegenhaltungen:
- EP-A- 0 786 445
- EP-A- 0 786 508
- EP-A- 0 786 509
- EP-A- 1 002 848
- DE-A- 10 002 462

## Beschreibung

Die vorliegende Erfindung betrifft ein flüssigkristallines Medium, sowie dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens erkannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit grosser positiver dielektrischer Anisotropie, breiten nematischen Phasen, relative niedriger Doppelbrechung, sehr hohem spezifischen Widerstand, guter UV- und Temperaturstabilität und geringerem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygrösse, da auch die modulartige Zusammensetzung verschiedener Teildisplays an den Stössen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit grosser Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKOGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten: Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Änzeigen aus dem Stand der Technik genügen somit nicht den heutigen Anforderungen.

Es besteht somit immer noch ein grosser Bedarf nach MFK-Anzeigen mit sehr hohem spezifischen Widerstand bei gleichzeitig grossem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- lagerstabil, auch bei extrem tiefen Temperaturen
- Schaltbarkeit bei extrem tiefen Temperaturen (out-door-use, Automobil, Avionik)
- erhöhte Beständigkeit gegenüber UV-Strahlung (längere Lebensdauer)

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannung und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Die Druckschriften EP-A-0786509, EP-A-0786508 und EP-A-0786445 offenbaren flüssigkristalline Mischungen enthaltend Verbindungen mit einer Difluormethylenoxy-Brücke. Die Druckschriften DE 10002462 A1 und EP-A-1002848 offenbaren flüssigkristalline Mischungen enthaltend Verbindungen mit zwei bis drei Ringen und einer terminalen Alkenylgruppe.

Der Erfindung liegt die Aufgabe zugrunde, Medien insbesondere für derartige MFK-, TN- oder STN-Anzeigen bereitzustellen, die die oben angegebenen Nachteile nicht oder nur in geringerem Maße, und vorzugsweise gleichzeitig sehr hohe spezifische Widerstände und niedrige Schwellenspannungen aufweisen.

Es wurde nun gefunden, dass diese Aufgabe gelöst werden kann, wenn man in Anzeigen erfindungsgemäße Medien verwendet.

Gegenstand der Erfindung ist somit ein flüssigkristallines Medium auf der Basis eines Gemisches von polaren Verbindungen mit positiver dielektrischer Anisotropie, **dadurch gekennzeichnet, dass** es eine oder mehrere Alkenylverbindungen der Formel I, 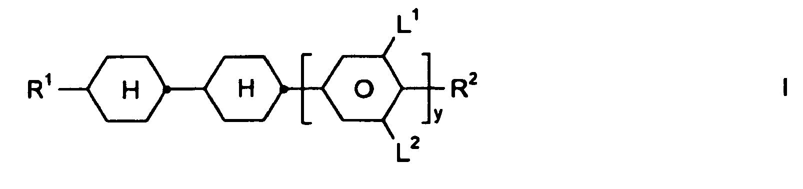 eine, zwei oder mehr Verbindungen der Formeln IA1-IA-15, 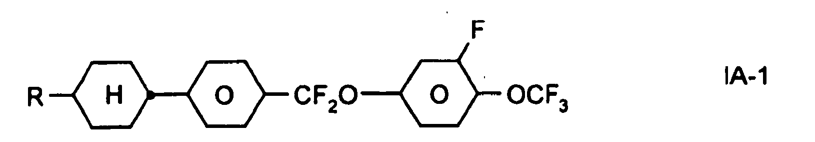 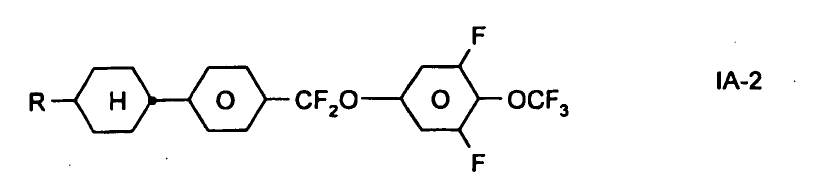 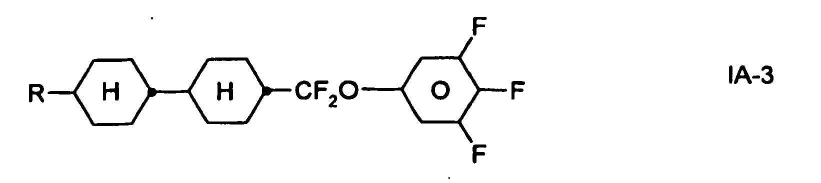 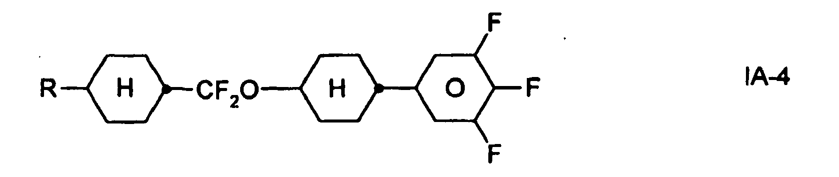 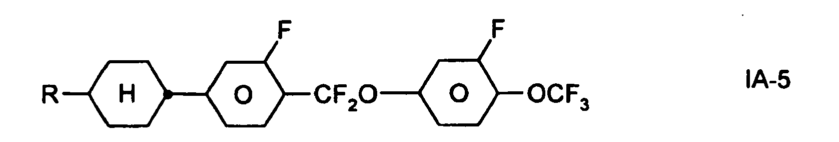 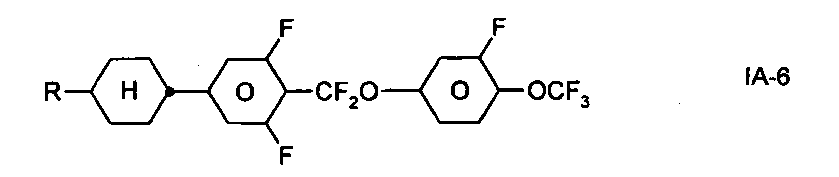 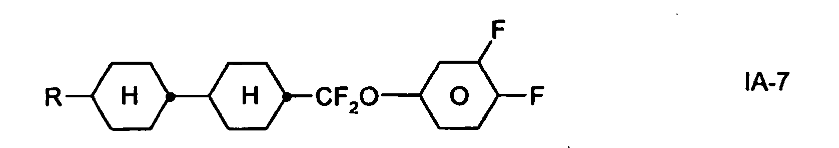 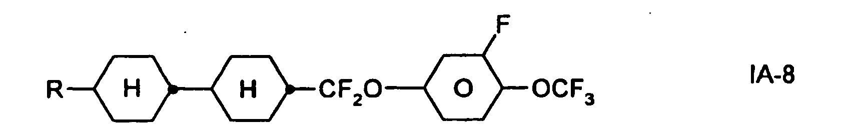 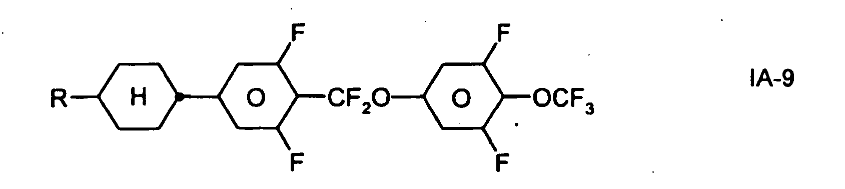 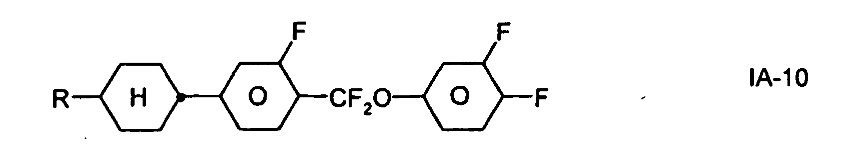 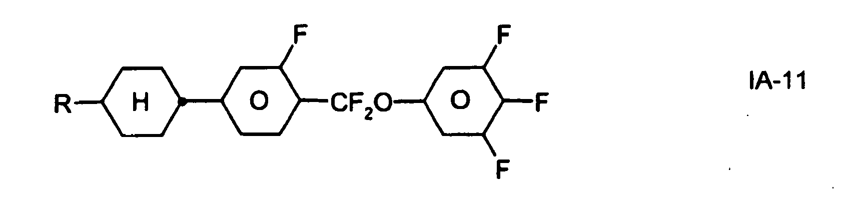 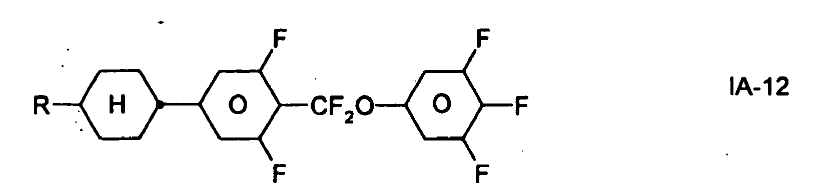 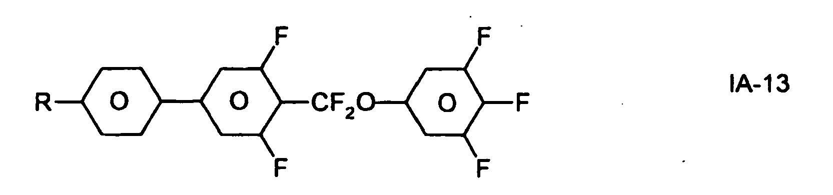 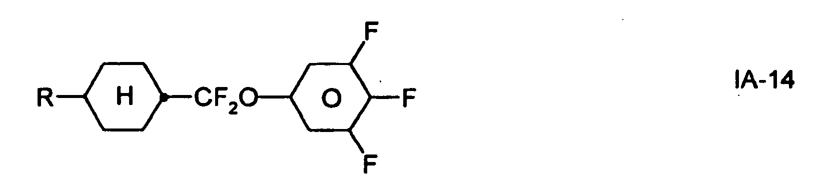 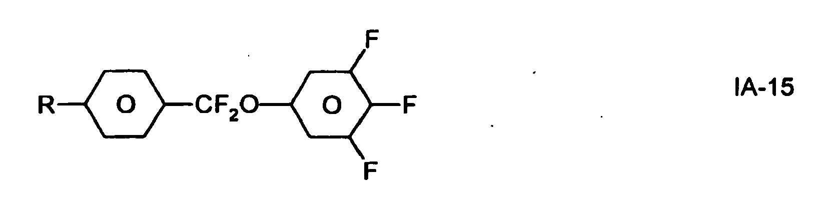 und
eine oder mehrere Verbindungen ausgewählt aus der Gruppe bestehend aus den allgemeinen Formeln II, III, IV, V und VI, 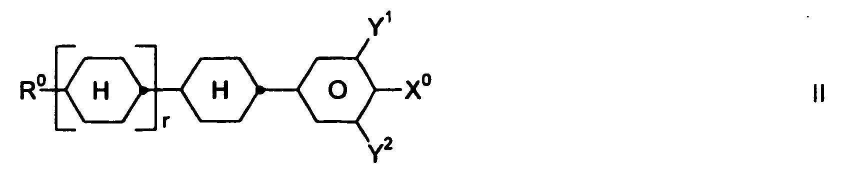 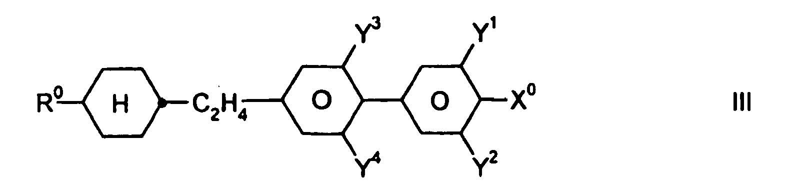 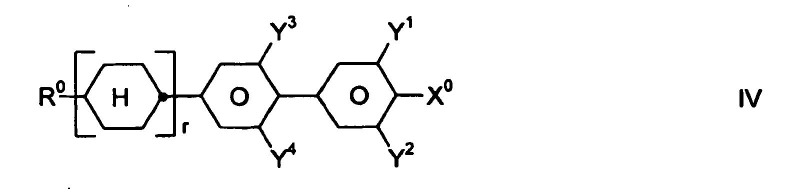 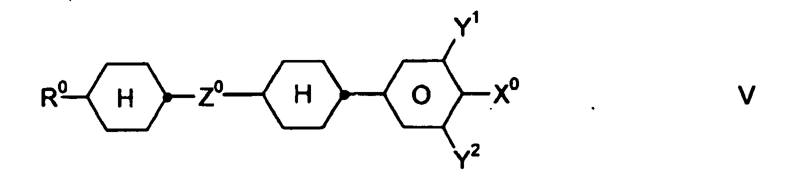 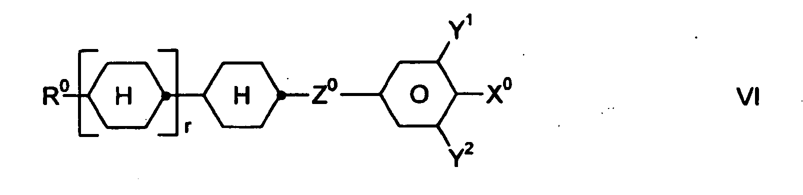 enthält, worin die einzelnen Reste folgende Bedeutungen besitzen:
- R: einen halogenierten oder unsubstituierten Alkyl- oder Alkoxyrest mit 1 bis 15 C-Atomen, wobei in diesen Resten auch eine oder mehrere CH₂-Gruppen jeweils unabhängig voneinander durch -C=C-, -CH=CH-, -O-, -CO-O- oder -O-CO- so ersetzt sein können, dass O-Atome nicht direkt miteinander verknüpft sind,
- R¹: ein Alkenylrest mit 2 bis 7 C-Atomen,
- R²: eine der Bedeutungen von R oder, falls y 1 oder 2 ist, auch Q-Y,
- Q: CF₂, OCF₂, CFH, OCFH, OCHFCF₂, OCF₂CHFCF₂ oder eine Einfachbindung,
- Y: F oder Cl,
- y: 0, 1 oder 2,
- L¹ und L²: jeweils unabhängig voneinander H oder F,
- R⁰: n-Alkyl, Oxaalkyl, Fluoralkyl oder Alkenyl mit jeweils bis zu 9 C-Atomen,
- X⁰: F, Cl, halogeniertes Alkyl, Alkenyl oder Alkoxy mit bis zu 6 C-Atomen,
- Z⁰: -C₂F₄-, -C₂H₄-, -(CH₂)₄-, -OCH₂- oder -CH₂O-,
- Y¹ und Y²: jeweils F,
- Y³ und Y⁴: jeweils unabhängig voneinander H oder F, und
- r: 0 oder 1.

Die Verbindungen der Formeln I und IA-1 bis IA-15 besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind; es können aber auch Verbindungen der Formeln I und IA-1 bis IA-15 flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Die Verbindungen der Formeln I und IA-1 bis IA-15 sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

Falls R einen Alkylrest und/oder einen Alkoxyrest bedeutet, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxymethyl), 2-(= Ethoxymethyl) oder 3-Oxybutyl (= 2-Methoxyethyl), 2-, 3- oder 4-Oxypentyl, 2-, 3-, 4- oder 5-Oxyhexyl, 2-, 3-, 4-, 5- oder 6-Oxyheptyl, 2-, 3-, 4-, 5-, 6-, oder 7-Oxaoctyl, 2-, 3-, 4-, 5-, 6-, 7- oder 8-Oxanonyl, 2-, 3-, 4-, 5-, 6-, 7-, 8- oder 9-Oxadexyl.

Falls R einen Alkylrest bedeutet, in dem eine CH₂-Gruppe durch -CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R einen Alkylrest bedeutet, in dem eine CH₂-Gruppe durch -O- und eine durch -CO- ersetzt ist, so sind diese benachbart. Somit beinhalten diese eine Acyloxygruppe -CO-O- oder eine Oxycarbonylgruppe -O-CO-. Vorzugsweise sind diese geradkettig und haben 2 bis 6 C-Atome. Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 2-Acetyloxypropyl, 3-Propionyl-oxypropyl, 4-Acetyl-oxybutyl, Methoxycarbonyl, Ethoxycarbonyl, Propoxy-carbonyl, Butoxycarbonyl, Pentoxycarbonyl, Methoxycarbonylmethyl, Ethoxycarbonylmethly, Propoxycarbonylmethyl, Butoxycarbonylmethyl, 2-(Methoxycarbonyl)ethyl, 2-(Ethoxycarbonyl)ethyl, 2-(Propoxycarbonyl)-ethyl, 3-(Methoxycarbonyl)-propyl, 3-(Ethoxy-carbonyl)-propyl oder 4-(Methoxycarbonyl)-butyl.

Falls R einen Alkylrest bedeutet, in dem eine CH₂-Gruppe durch unsubstituiertes oder substituiertes -CH=CH- und eine benachbarte CH₂-Gruppe durch CO-O oder O-CO ersetzt ist, so kann dieser geradkettig oder verzweigt sein. Vorzugsweise ist er geradkettig und hat 4 bis 12 C-Atome. Er bedeutet demnach besonders Acryloyloxymethyl, 2-Acryloyl-oxyethyl, 3-Acryloyloxypropyl, 4-Acryloyloxybutyl, 5-Acryloyloxypentyl, 6-Acryloyloxyhexyl, 7-Acryloyloxyheptyl, 8-Acryloyloxyoctyl, 9-Acryloyl-oxynonyl, 10-Acryloyloxydecyl, Methacryloyloxymethyl, 2-Methacryloyl-oxyethyl, 3-Methacryloyloxypropyl, 4-Methacryloyloxybutyl, 5-Methacryl-oyloxypentyl, 6-Methacryloyloxyhexyl, 7-Methacryloyloxyheptyl, 8-Methacryloyloxyoctyl, 9-Methacryloyloxynonyl.

Falls R einen einfach durch CF₃ substituerten Alkyl- oder Alkenylrest bedeutet, so ist dieser Rest vorzugsweise geradkettig. Die Substitution durch CF₃ ist in beliebiger Position.

Falls R einen mindestens einfach durch Halogen substituierten Alkyl- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Verbindungen mit verzweigten Flügelgruppen R können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugt verzweigte Reste R sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Falls R einen Alkylrest darstellt, in dem zwei oder mehr CH₂-Gruppen durch -O- und/oder -CO-O- ersetzt sind, so kann dieser geradkettig oder verzweigt sind. Vorzugsweise ist er verzweigt und hat 3 bis 12 C-Atome. Er bedeutet demnach besonders Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxy-carbonyl)-methyl, 2,2-Bis-(methoxycarbonyl)-ethyl, 3,3-Bis-(methoxy-carbonyl)-propyl, 4,4-Bis-(methoxycarbonyl)-butyl, 5,5-Bis-(methoxy--carbonyl)-pentyl, 6,6-Bis-(methocycarbonyl)-hexyl, 7,7-Bis-(methoxy-carbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-hexyl.

Die Verbindungen der Formeln I und IA-1 bis IA-15 werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Die Verbindungen der Formel IA-1 bis IA-15 sind z. B. bekannt aus der DE-OS-40 06 921.

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und dielektrischer Anisotropie übertreffen bei weitem bisherige Materialien aus dem Stand der Technik.

Die Forderung nach hohem Klärpunkt, nematischer Phase bei tiefer Temperatur sowie einem hohen Δε konnte bislang nur unzureichend erfüllt werden. Systeme wie z.B. ZLI-3119 weisen zwar vergleichbaren Klärpunkt und vergleichbar günstige Viskositäten auf, besitzen jedoch ein Δε von nur +3.

Andere Mischungssysteme besitzen vergleichbare Viskositäten und Werte von Δε, weisen jedoch nur Klärpunkte in der Gegend von 60 °C auf.

Die erfindungsgemäßen Flüssigkristallmischungen ermöglichen es bei Beibehaltung der nematischen Phase bis -20 °C und bevorzugt bis -30 °C, besonders bevorzugt bis -40 °C, Klärpunkt oberhalb 60 °C, vorzugsweise oberhalb 65 °C, besonders bevorzugt oberhalb 70 °C, gleichzeitig dielektrische Anisotropiewerte Δε ≥ 6, vorzugsweise ≥ 8 und einen hohen Wert für den spezifischen Widerstand zu erreichen, wodurch hervorragende STN- und MKF-Anzeigen erzielt werden können. Insbesondere sind die Mischungen durch kleine Operationsspannungen gekennzeichnet. Die TN-Schwellen liegen unterhalb 2,0 V, vorzugsweise unterhalb 1,5 V, besonders bevorzugt < 1,3 V.

Es versteht sich, dass durch geeignete Wahl der Komponenten der erfindungsgemäßen Mischungen auch höhere Klärpunkte (z.B. oberhalb 110 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Fließviskosität ν₂₀ bei 20 °C ist vorzugsweise < 60 mm²·s⁻¹, besonders bevorzugt < 50 mm²·s⁻¹. Die Rotationsviskosität γ₁ der erfindungsgemäßen Mischungen bei 20 °C ist vorzugsweise < 160 mPa·s, besonders bevorzugt < 150 mPa·s. Der nematische Phasenbereich ist vorzugsweise mindestens 90°, insbesondere mindestens 100°. Vorzugsweise erstreckt sich dieser Bereich mindestens von -20° bis +80°.

Bei Flüssigkristallanzeigen ist eine kleine Schaltzeit erwünscht. Dies gilt besonders für Anzeigen die Videowiedergabe-fähig sind. Für derartige Anzeigen werden Schaltzeiten (Summe: tₒₙ + t_{off}) von maximal 25 ms benötigt. Die Obergrenze der Schaltzeit wird durch die Bildwiederholfrequenz bestimmt. Neben der Rotationsviskosität γ₁ beeinflußt auch der Tiltwinkel die Schaltzeit. Insbesondere Mischungen mit ≥ 20 % der Verbindungen der Formel IA-1 bis IA-15 zeigen einen Tiltanstellwinkel von > 2,5, vorzugsweise > 3,0 im Vergleich zu dem Verkaufsprodukt ZLI-4792 der Fa. Merck KGaA.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel IA-1 bis IA-15 eine deutlich kleinere Abnahme des HR mit steigender Temperatur aufweisen als analoge Mischungen enthaltend anstelle den Verbindungen der Formel IA-1 bis IA-15 Cyanophenylcyclohexane der Formel 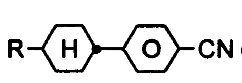 oder Ester der Formel

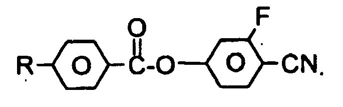

Auch die UV-Stabilität der erfindungsgemäßen Mischungen ist erheblich besser, d.h. sie zeigen eine deutlich kleinere Abnahme des HR unter UV-Belastung.

Formel I umfasst vorzugsweise folgende Verbindungen 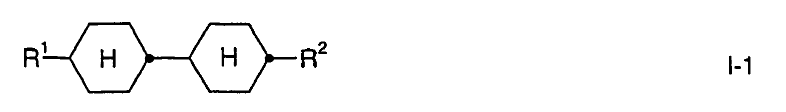 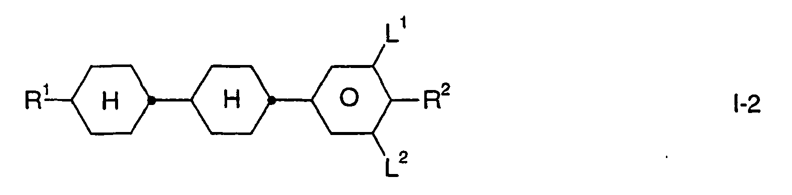 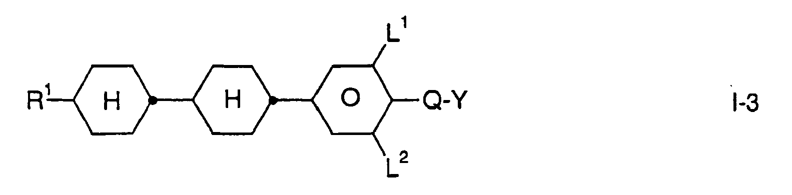 worin R¹, L¹, L², Q und Y die in Anspruch 1 angegebenen Bedeutungen besitzen, und R² eine der für R angegebenen Bedeutungen besitzt.

Besonders bevorzugt sind erfindungsgemäße Medien, die wenigstens eine Verbindung der Formel I-1 und/oder I-3, besonders bevorzugt jeweils wenigstens eine Verbindung der Formel I-1, enthalten.

In den Formeln I-1, I-2 und I-3, bedeutet R¹ besonders bevorzugt 1 E-Alkenyl oder 3 E-Alkenyl mit 2 bis 7 C-Atomen.

Besonders bevorzugte Verbindungen der Formel I-1 sind solche, worin R² Alkenyl mit 2 bis 7 C-Atomen bedeutet, insbesondere solche der folgenden Formeln 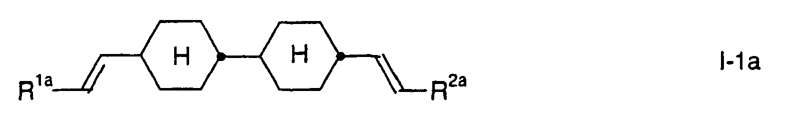 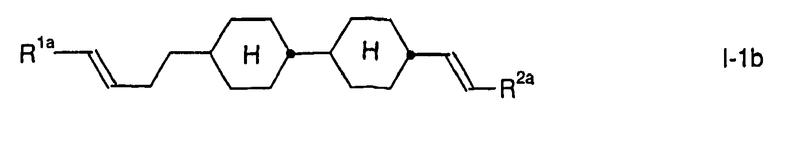 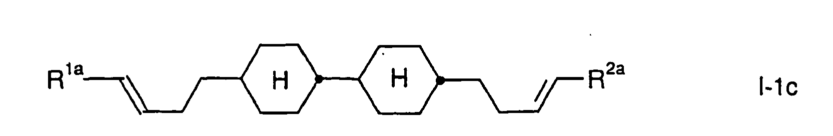 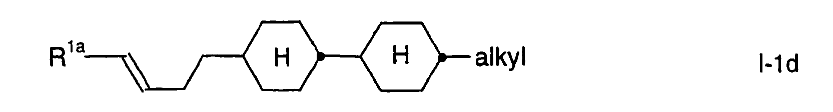 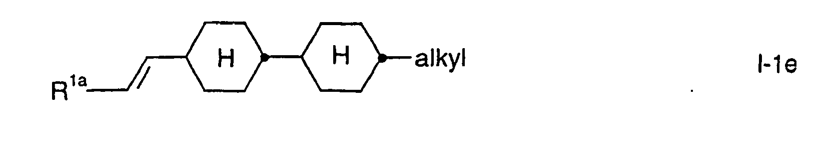 worin R^{1a} und R^{2a} jeweils unabhängig voneinander H, CH₃, C₂H₅ oder n-C₃H₇ und alkyl eine geradkettige Alkylgruppe mit 1 bis 7 C-Atomen bedeuten.

Besonders bevorzugt sind erfindungsgemäße Medien, die mindestens eine Verbindung der Formeln I-1a und/oder I-1c enthalten, in denen R^{1a} und R^{2a} jeweils dieselbe Bedeutung aufweisen, sowie Medien, die mindestens eine Verbindung der Formel I-1e enthalten.

In einer weiteren bevorzugten Ausführungsform enthalten die erfindungsgemäßen Medien eine oder mehrere Verbindungen der Formel I-2. Besonders bevorzugte Verbindungen der Formel I-2 sind solche, worin L¹ und L² H bedeuten, sowie solche, worin R² Alkyl mit 1 bis 8, insbesondere 1, 2 oder 3 C-Atomen und R¹ 1 E-Alkenyl oder 3E-Alkenyl mit 2 bis 7, insbesondere 2, 3 oder 4 C-Atomen bedeuten.

Besonders bevorzugte Verbindungen der Formel I-3 sind solche, worin L¹ und/oder L² F und Q-Y F oder OCF₃ bedeuten. Ferner bevorzugt sind Verbindungen der Formel I-3, worin R¹ 1 E-alkenyl oder 3E-alkenyl mit 2 bis 7, insbesondere 2, 3 oder 4 C-Atomen bedeutet.

Von den Verbindungen der Formal IA-1 bis IA-15 sind besonders bevorzugt solche der Formeln IA-1, IA-2, IA-3 und IA-4, insbesondere die der Formeln IA-1 und IA-2.

Die Verbindungen der Formel IA-1 bis IA-15 sind z. B. bekannt aus der DE-OS-4006921.

Bevorzugte Ausführungsformen sind im folgenden angegeben:
- Das Medium enthält ein, zwei oder mehr Verbindungen der Formeln IA-1 bis IA-12;
- Das Medium enthält zusätzlich eine oder mehrere Verbindungen ausgewählt aus der Gruppe bestehend aus den allgemeinen Formeln II bis VI: 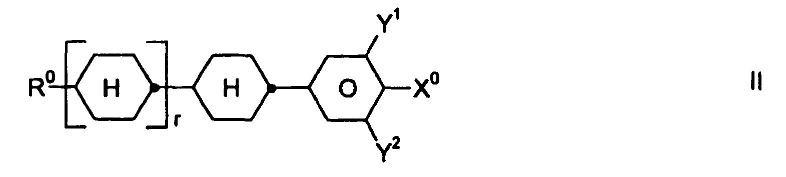 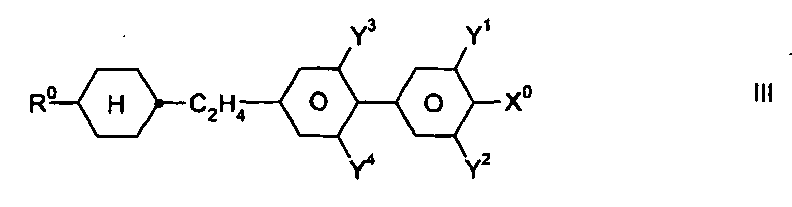 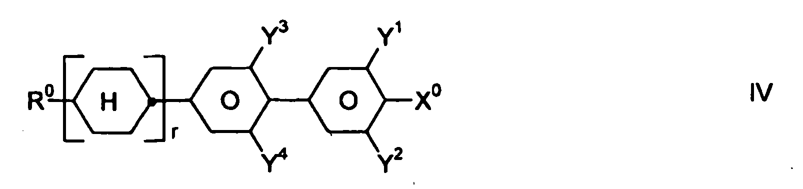 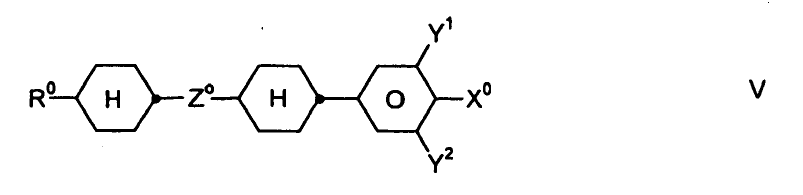 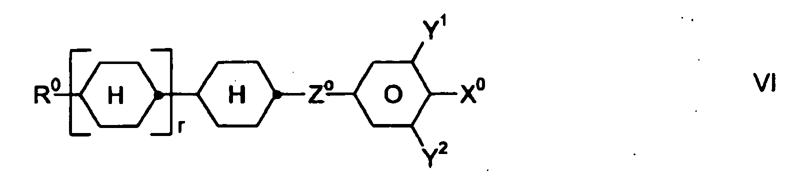
worin die einzelnen Reste die folgenden Bedeutungen haben:
- R⁰: n-Alkyl, Oxaalkyl, Fluoralkyl oder Alkenyl mit jeweils bis zu 9 C-Atomen,
- X⁰: F, Cl, halogeniertes Alkyl, Alkenyl, Alkenyloxy oder Alkoxy mit bis zu 6 C-Atomen,
- Z⁰: -C₂F₄-, -C₂H₄-, -(CH₂)₄-, -OCH₂- oder -CH₂O-,
- Y¹ und Y²: jeweils F,
- Y³ und Y⁴: jeweils unabhängig voneinander H oder F,
- r: 0 oder 1.

Die Verbindung der Formel IV ist vorzugsweise 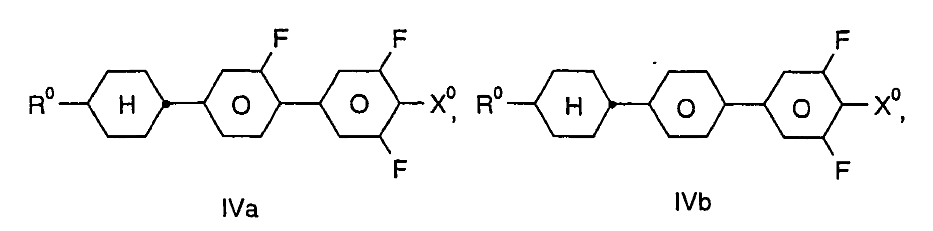 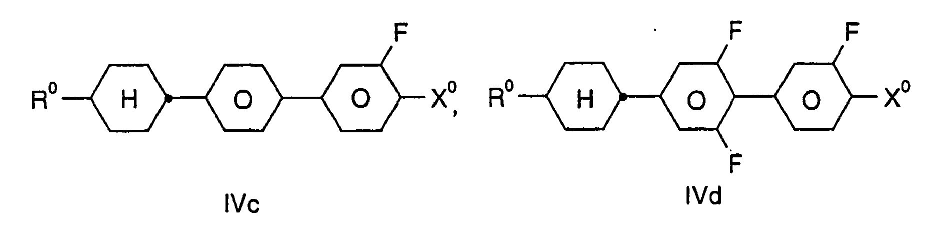 oder 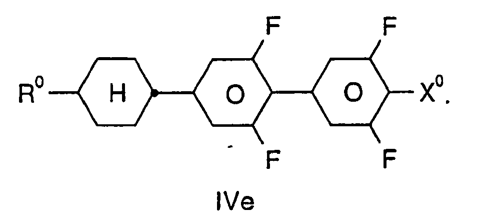
- Das Medium enthält zusätzlich eine oder mehrere Verbindungen ausgewählt aus der Gruppe bestehend aus den allgemeinen Formeln VII bis XIII: 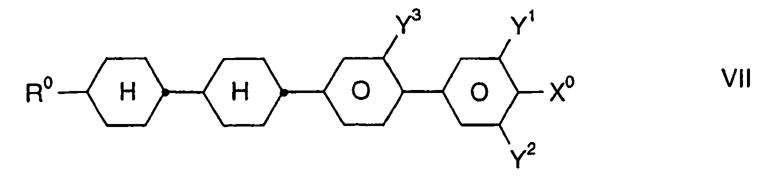 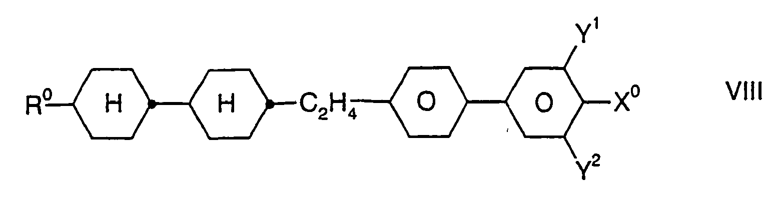 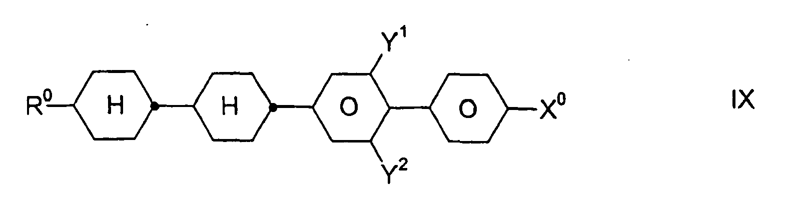 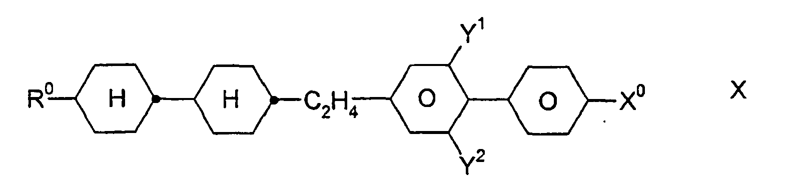 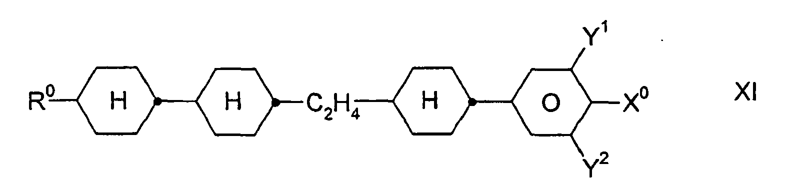 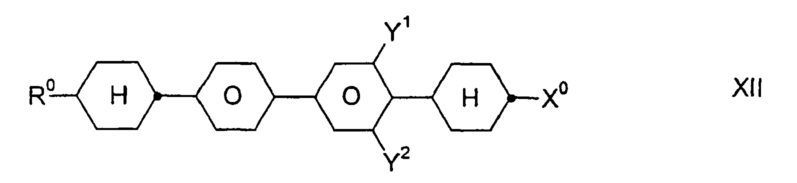 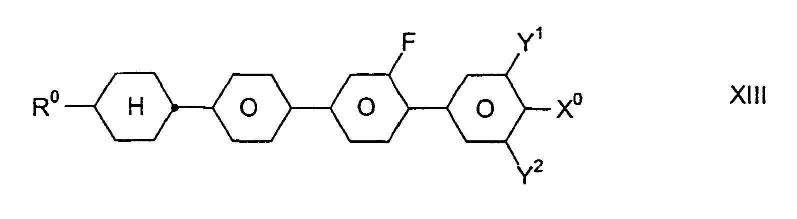
worin R⁰, X⁰, Y¹ und Y² jeweils unabhängig voneinander eine der in Anspruch 4 angegebene Bedeutung haben. Y³ bedeutet H oder F. X⁰ ist vorzugsweise F, Cl, CF₃, OCF₃, oder OCHF₂. R⁰ bedeutet vorzugsweise Alkyl, Oxaalkyl, Fluoralkyl oder Alkenyl mit jeweils bis zu 6 C-Atomen.
- Das Medium enthält zusätzlich eine oder mehrere Ester-Verbindungen der Formel n Ea bis Ed 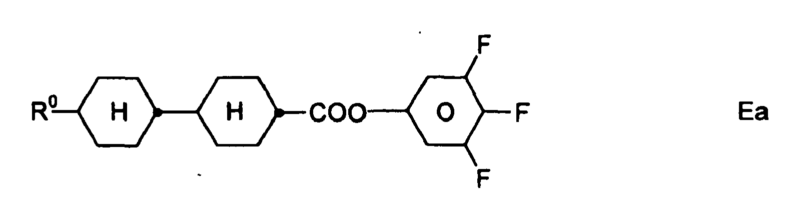 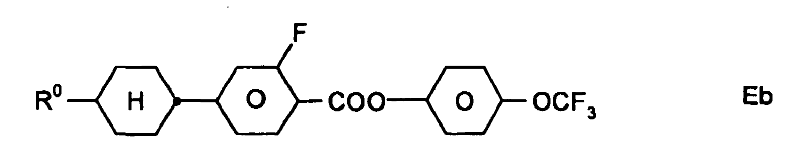 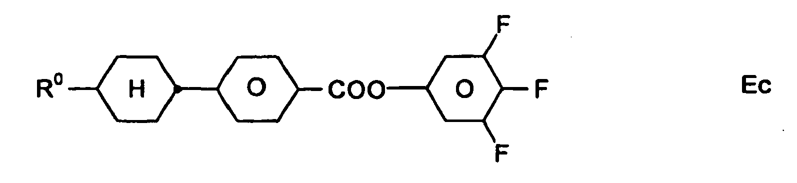 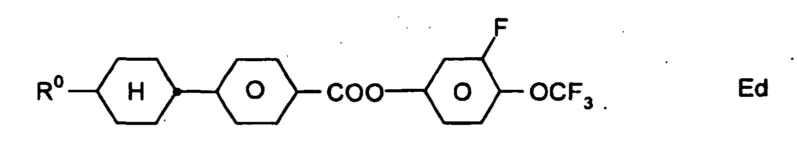
worin R⁰ die in Anspruch 1 angegebene Bedeutung hat;
- Der Anteil der Verbindung der Formeln Ea bis Ed ist vorzugsweise 10-30 Gew.%, insbesondere 15-25 Gew.%;
- Der Anteil an Verbindungen der Formeln IA-1 bis IA-15 und I bis VI zusammen beträgt im Gesamtgemisch mindestens 50 Gew.%;
- Der Anteil an Verbindungen der Formel I beträgt im Gesamtgemisch 0,5 bis 40, besonders bevorzugt 1 bis 30 Gew.%;
- Der Anteil an Verbindungen der Formel IA-1 bis IA-15 beträgt im Gesamtgemisch 1 bis 50, besonders bevorzugt 15 bis 40 Gew.%;
- Der Anteil an Verbindungen der Formeln II bis VI im Gesamtgemisch beträgt 30 bis 80 Gew.%; 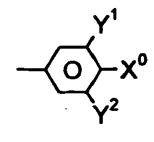 ist vorzugsweise 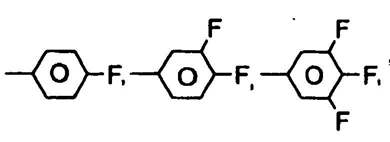 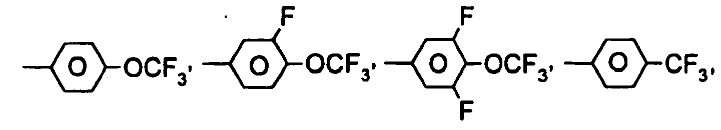 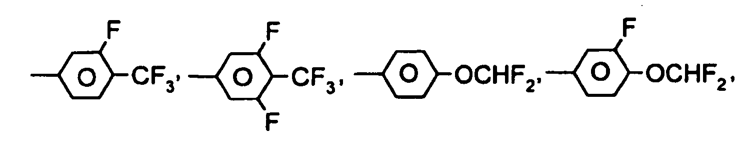 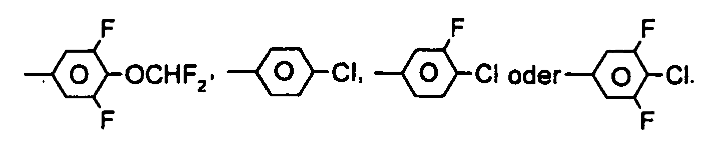
- Das Medium enthält Verbindungen der Formeln II, III, IV, V oder VI;
- R⁰ ist geradkettiges Alkyl oder Alkenyl mit 2 bis 7 C-Atomen;
- Das Medium besteht im wesentlichen aus Verbindungen der Formeln IA-1 bis IA-15, I bis VI und XIII;
- Das Medium enthält weitere Verbindungen, vorzugsweise ausgewählt aus der folgenden Gruppe bestehend aus den allgemeinen Formeln XIV bis XVII: 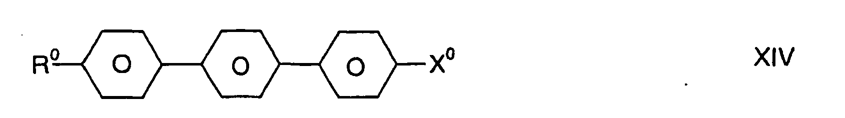 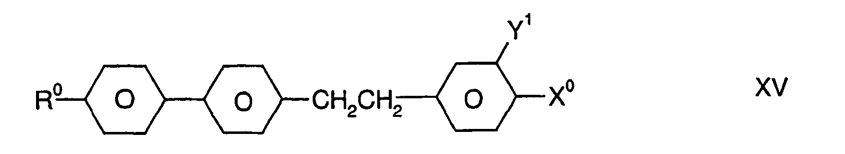 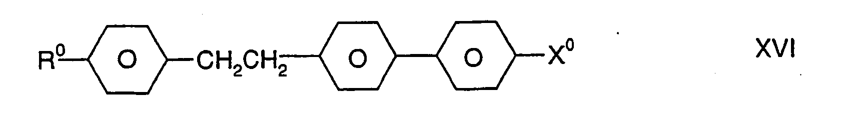 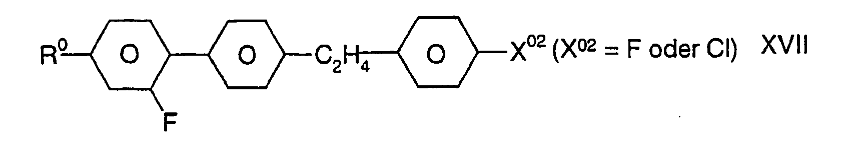
worin R⁰ und X⁰ die oben angegebene Bedeutung haben und die 1,4-Phenylenringe durch CN, Chlor oder Fluor substituiert sein können. Vorzugsweise sind die 1,4-Phenylenringe ein- oder mehrfach durch Fluoratome substituiert.
- Das Medium enthält zusätzlich ein oder mehrere Verbindungen der Formeln XVIII 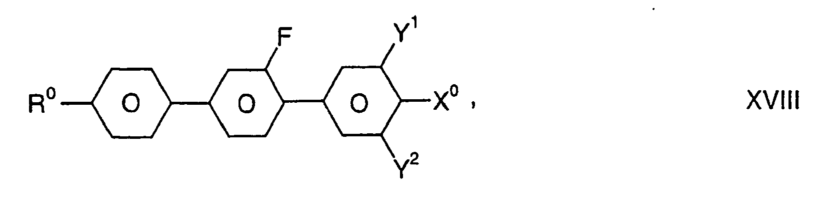
worin R⁰, X⁰, Y¹, Y² die oben angegebenen Bedeutungen haben
- Das Medium enthält zusätzlich ein, zwei, drei oder mehr, vorzugsweise zwei oder drei, Verbindungen der Formel 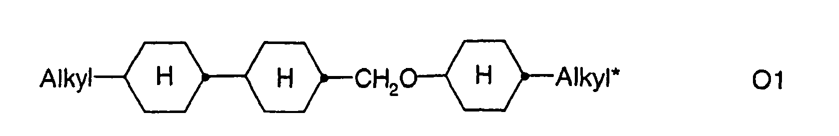 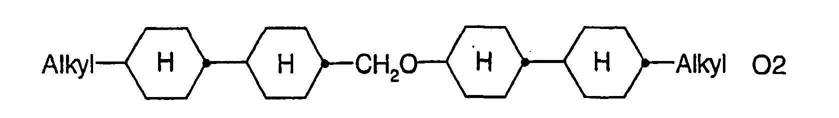
worin "Alkyl" und "Alkyl*" die nachfolgend angegebene Bedeutung haben.

Der Anteil der Verbindungen der Formeln O1 und/oder 02 in den erfindungsgemäßen Mischungen beträgt vorzugsweise 5-10 Gew.%
- Das Medium enthält vorzugsweise 5-35 Gew.% der Verbindung IVa.
- Das Medium enthält vorzugsweise ein, zwei oder drei Verbindungen der Formel IVa, worin X^{o} F oder OCF₃ bedeutet.
- Das Medium enthält vorzugsweise ein oder mehrere Verbindungen der Formeln IIa bis IIg, 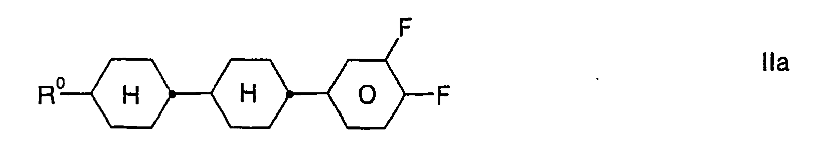 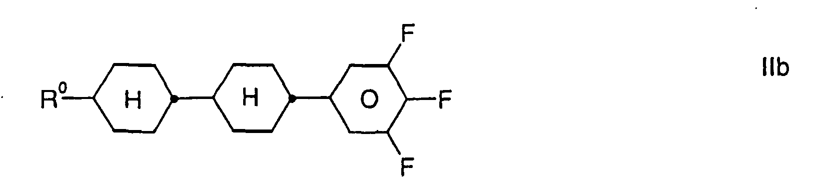 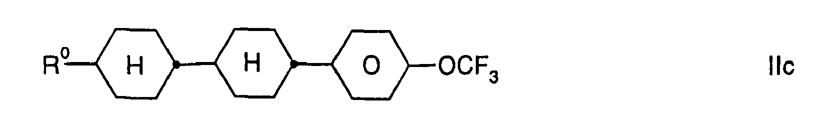 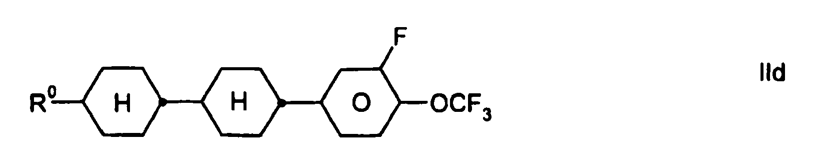 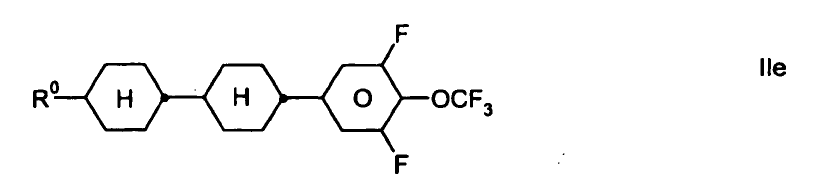 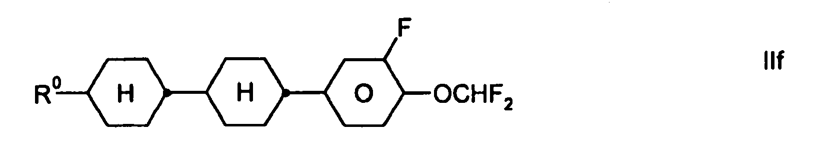 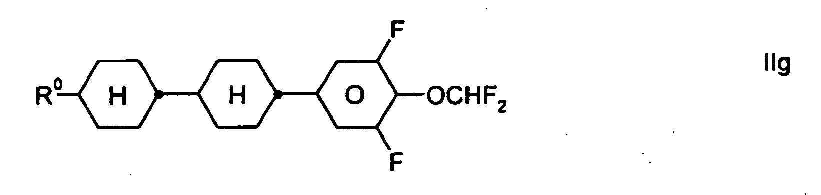
worin R⁰ die oben angegebenen Bedeutungen hat. In den Verbindungen der Formeln IIa-IIe bedeutet R⁰ vorzugsweise Ethyl, n-Propyl, n-Butyl und n-Pentyl_{.}
- Das Gewichtsverhältnis (I + IA-1 bis IA-15) : (II + III + IV + V + VI) ist vorzugsweise 1 : 10 bis 10 : 1.
- Medium besteht im wesentlichen aus Verbindungen ausgewählt aus der Gruppe bestehend aus den allgemeinen Formeln IA-1 bis IA-15 und I bis XIII.
- Der Anteil der Verbindungen der Formel IVb und/oder IVc, worin X^{o} Fluor und R⁰ C₂H₅, n-C₃H₇, n-C₄H₅ oder n-C₅H₁₁ bedeutet, beträgt im Gesamtgemisch 2 bis 20 Gew.%, insbesondere 2 bis 15 Gew.%;
- Medium enthaltend zusätzlich ein, zwei oder mehr Verbindungen mit annellierten Ringen der Formeln AN1 bis AN7: 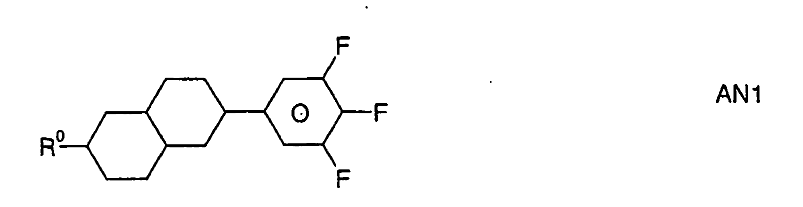 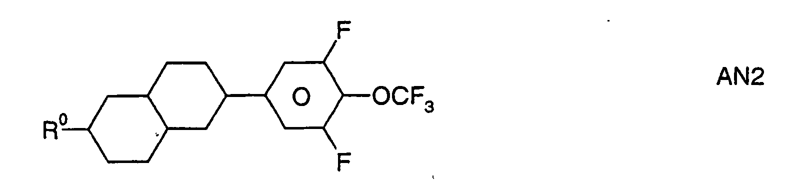 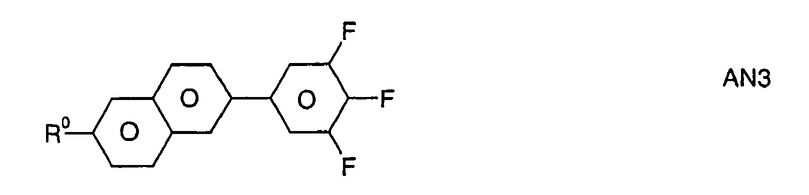 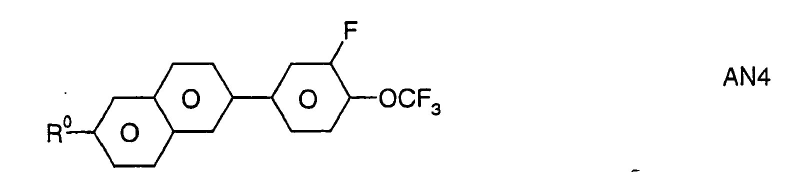 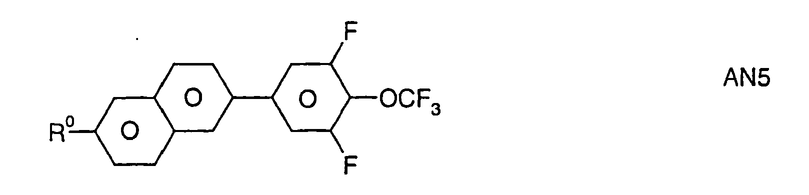 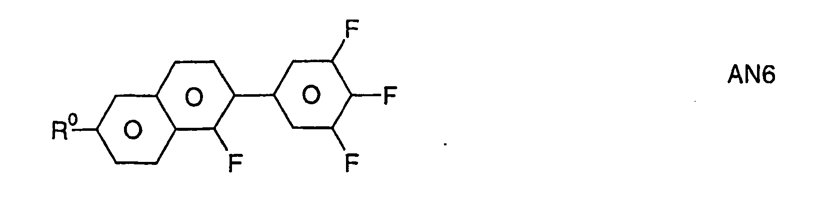 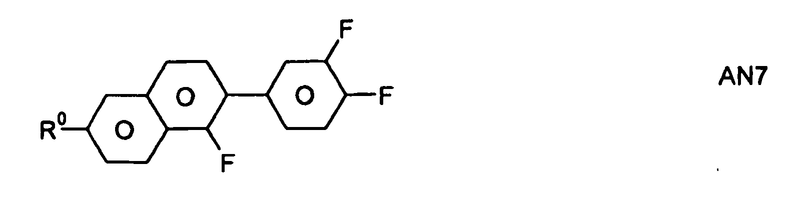
worin R⁰ die oben angegebenen Bedeutungen hat;

Es wurde gefunden, dass bereits ein relativ geringer Anteil an Verbindungen der Formeln I und IA-1 bis IA-15 im Gemisch mit üblichen Flüssigkristallmaterialien, insbesondere jedoch mit einer oder mehreren Verbindungen der Formeln II, III, IV, V und/oder VI zu einer beträchtlichen Erniedrigung der Schwellenspannung und zu niedrigen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Bevorzugt sind insbesondere Mischungen, die neben ein oder mehreren Verbindungen der Formeln I und IA-1 bis IA-15 ein oder mehrere Verbindungen der Formel IV enthalten, insbesondere Verbindungen der Formel IVa, worin X⁰ F oder OCF₃ bedeutet. Die Verbindungen der Formeln I bis VI sind farblos, stabil und untereinander und mit anderen Flüssigkristallmateriatien gut mischbar.

Der Ausdruck "Alkyl" bzw. "Alkyl*" umfasst geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 2-5 Kohlenastoffatomen sind im allgemeinen bevorzugt.

Der Ausdruck "Alkenyl" umfasst geradkettige und verzweigte Alkenylgruppen mit 2-7 Kohlenstoffatomen, insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele besonders bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfasst vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1 E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine -CH₂CH₂-Gruppe führt im allgemeinen zu höheren Werten von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I, IA-1 bis IA-15 und II + III + IV + V + VI hängt weitgehend von den gewünschten Eigenschaften, von der Wahl der Komponenten der Formeln I, IA-1 bis IA-15, II, III, IV, V und/oder VI und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der Formeln IA-1 bis IA-15 und I bis XIII in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln IA-1 bis IA-15 und I bis XIII sind.

In einer besonders bevorzugten Ausführungsform enthalten die erfindungsgemäßen Medien Verbindungen der Formel II bis VI (vorzugsweise II, III und/oder IV, insbesondere IVa), worin X⁰ F, OCF₃, OCHF₂, F, OCH=CF₂, OCF=CF₂ oder OCF₂-CF₂H bedeutet. Eine günstige synergistische Wirkung mit den Verbindungen der Formeln I und IA führt zu besonders vorteilhaften Eigenschaften. Insbesondere Mischungen enthaltend Verbindungen der Formel IA-1 bis IA-15 und der Formel IVa zeichnen sich durch ihre niedrige Schwellenspannung aus.

Die einzelnen Verbindungen der Formeln IA-1 bis IA-15 und I bis XVII und deren Unterformeln, die in den erfindungsgemäßen Medien verwendet werden können, sind entweder bekannt, oder sie können analog zu den bekannten Verbindungen hergestellt werden.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, S_{c} eine smektisch C, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,0fachen Wert von V₁₀. Δn bezeichnet die optische Anisotropie und nₒ den Brechungsindex. Δε bezeichnet die dielektrische Anisotropie (Δε = ε_{∥} - ε_{┴}, wobei ε_{∥} die Dielektrizitätskonstante parallel zu den Moleküllängsachsen und ε_{┴} die Dielektrizitätskonstante senkrecht dazu bedeutet). Die elektro-optischen Daten wurden in einer TN-Zelle im 1. Minimum (d.h. bei einem d · Δn-Wert von 0,5) bei 20 °C gemessen, sofern nicht ausdrücklich etwas anderes angegeben wird. Die optischen Daten wurden bei 20 °C gemessen, sofern nicht ausdrücklich etwas anderes angegeben wird.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n und m sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Acronym für den Grundkörper angegeben. Im Einzelfall folgt getrennt von Acronym für den Grundkörper mit einem Strick ein Code für die Substituenten R^{1*}, A^{2*}, L^{1*}, L^{2*} und L^{3*}:

| Code für R^{1*}, R^{2*}, L^{1*}, L^{2*}, L^{3*} | R^{1*} | R^{2*} | L^{1*} | L^{2*} | L^{3*} |
|---|---|---|---|---|---|
| nm | CₙH₂ₙ₊₁ | CₘH₂ₘ₊₁ | H | H | H |
| nOm | OCₙH₂ₙ₊₁ | CₘH₂ₘ₊₁ | H | H | H |
| nO.m | CₙH₂ₙ₊₁ | OCₘH₂ₘ₊₁ | H | H | H |
| n | CₙH₂ₙ₊₁ | CN | H | H | H |
| nN.F | CₙH₂ₙ₊₁ | CN | H | H | F |
| nN.F.F | CₙH₂ₙ₊₁ | CN | H | F | F |
| nF | CₙH₂ₙ₊₁ | F | H | H | H |
| nOF | OCₙH₂ₙ₊₁ | F | H | H | H |
| nF.F | CₙH₂ₙ₊₁ | F | H | H | F |
| nmF | CₙH₂ₙ₊₁ | CₘH₂ₘ₊₁ | F | H | H |
| nOCF₃ | CₙH₂ₙ₊₁ | OCF₃ | H | H | H |
| nOCF₃.F | CₙH₂ₙ₊₁ | OCF₃ | F | H | H |
| n-Vm | CₙH₂ₙ₊₁ | -CH=CH-CₘH₂ₘ₊₁ | H | H | H |
| nV-Vm | CₙH₂ₙ₊₁-CH=CH- | -CH=CH-CₘH₂ₘ₊₁ | H | H | H |

### Bevorzugte Mischungskomponenten finden sich in den Tabellen A und B.

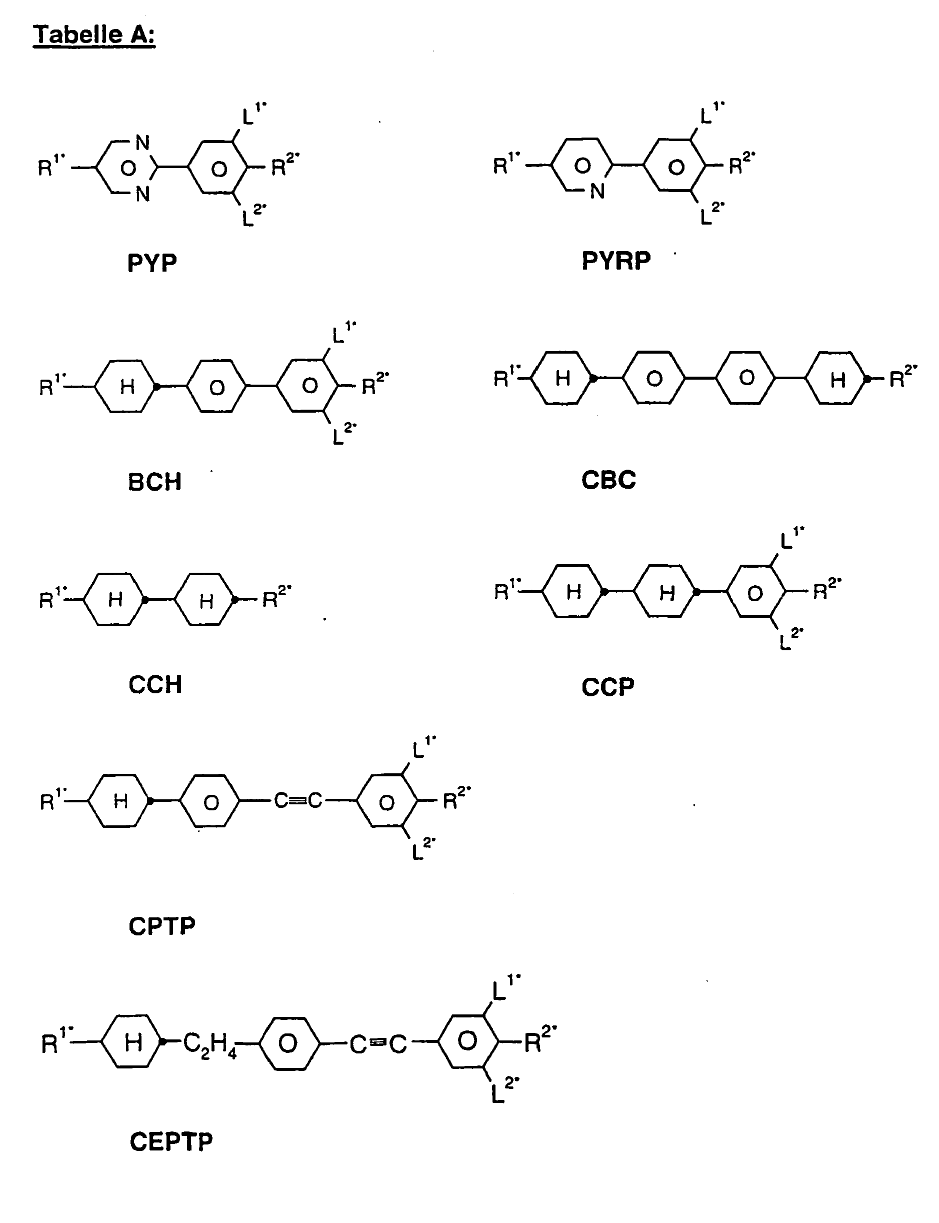

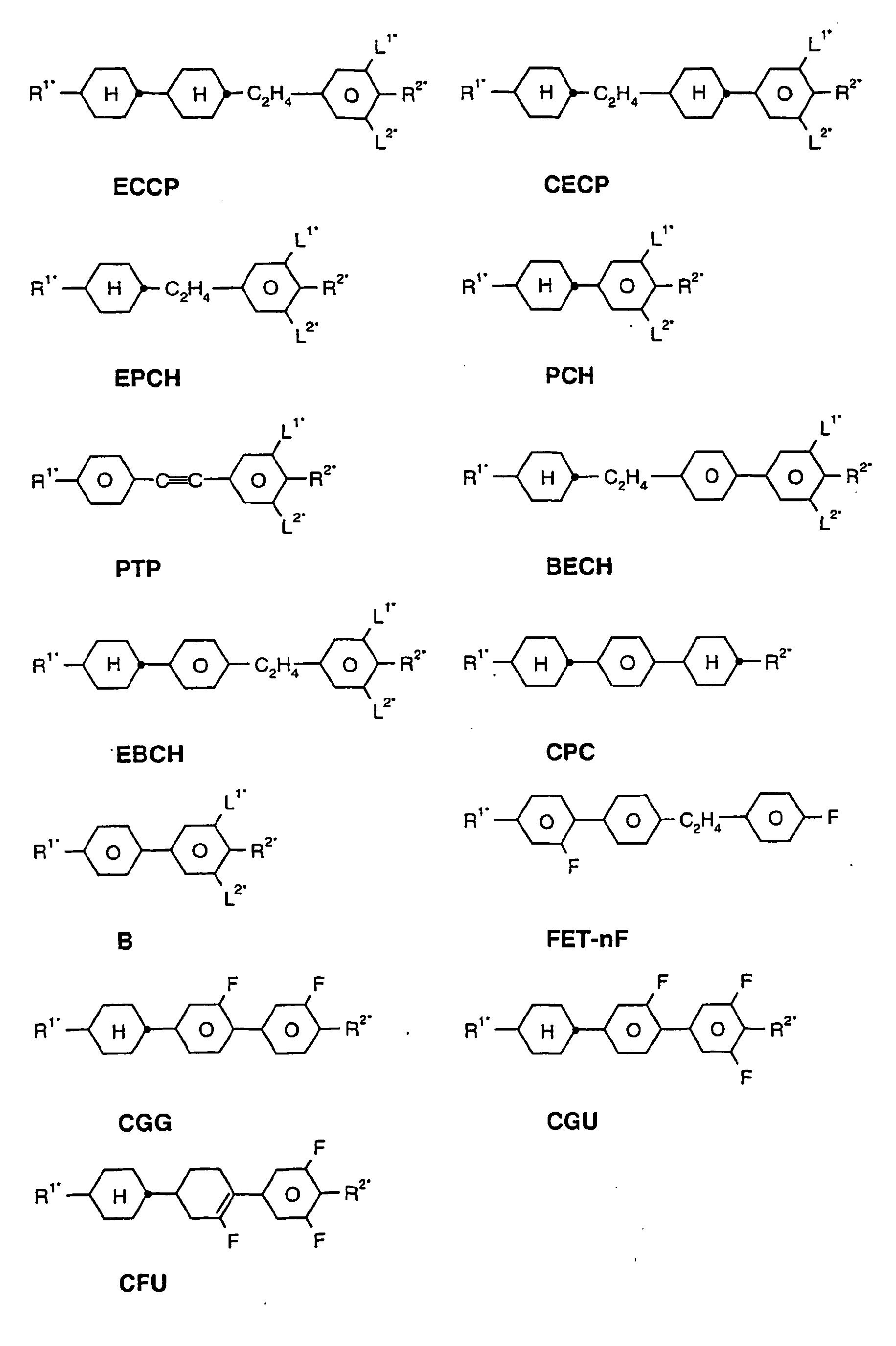

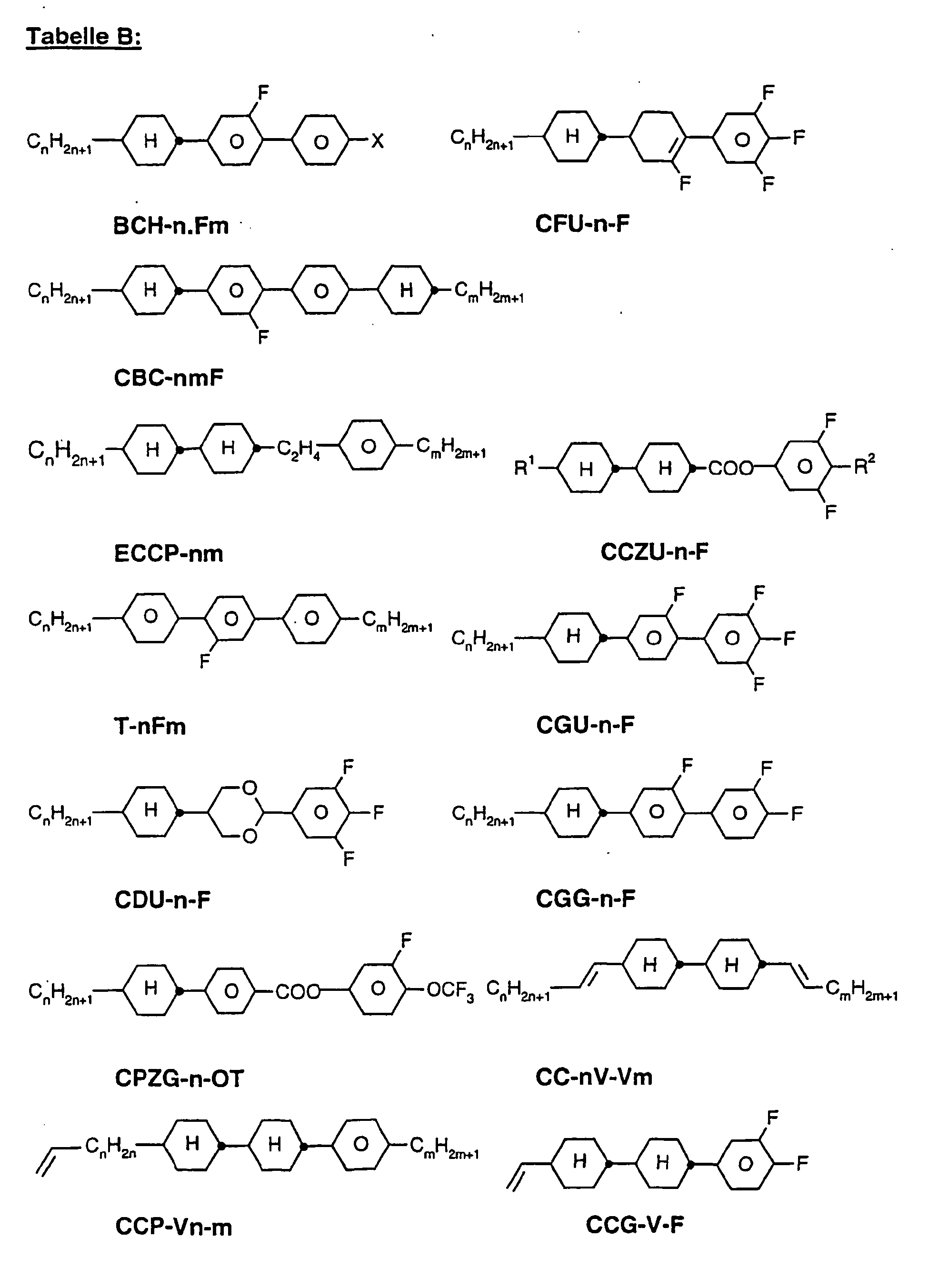

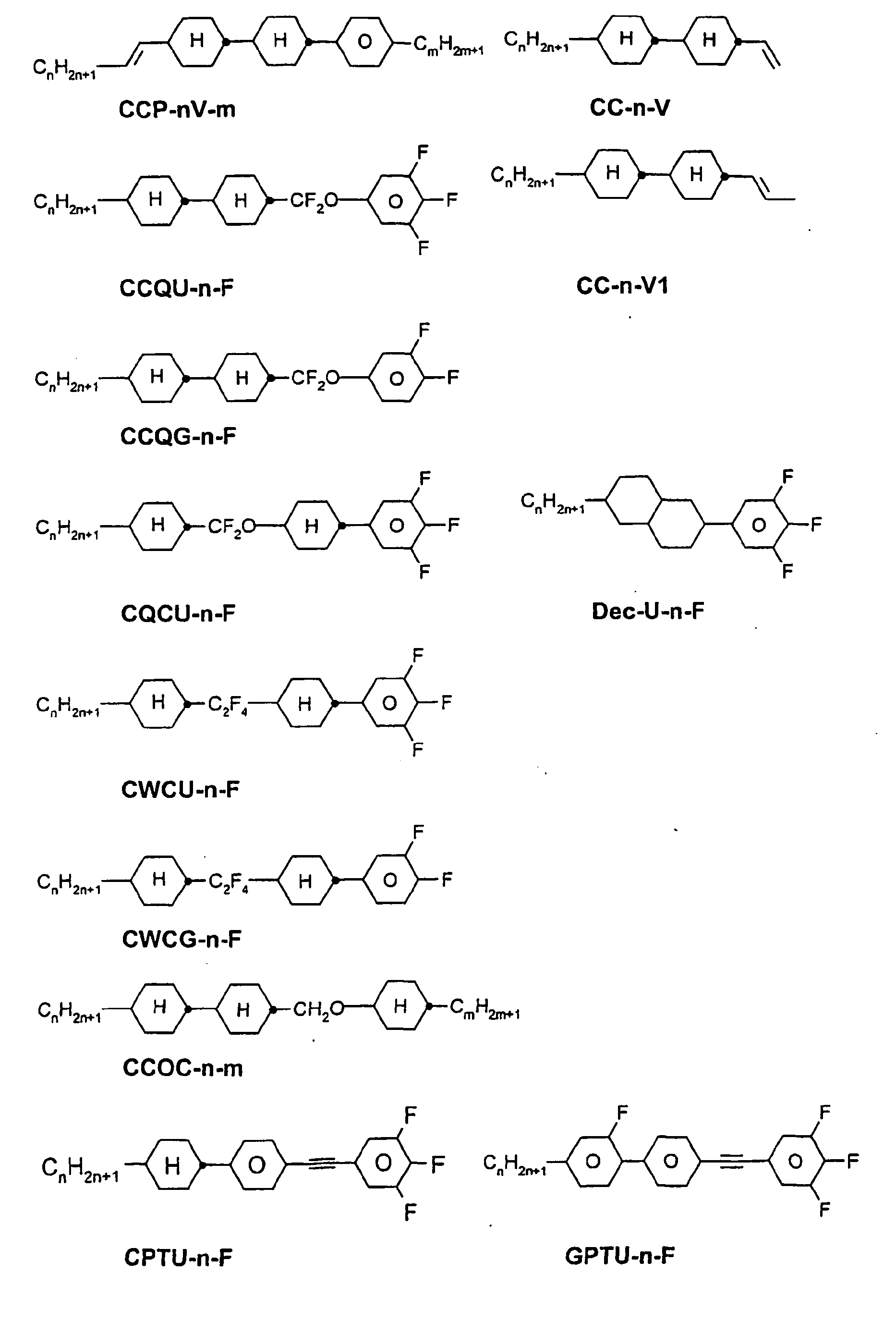

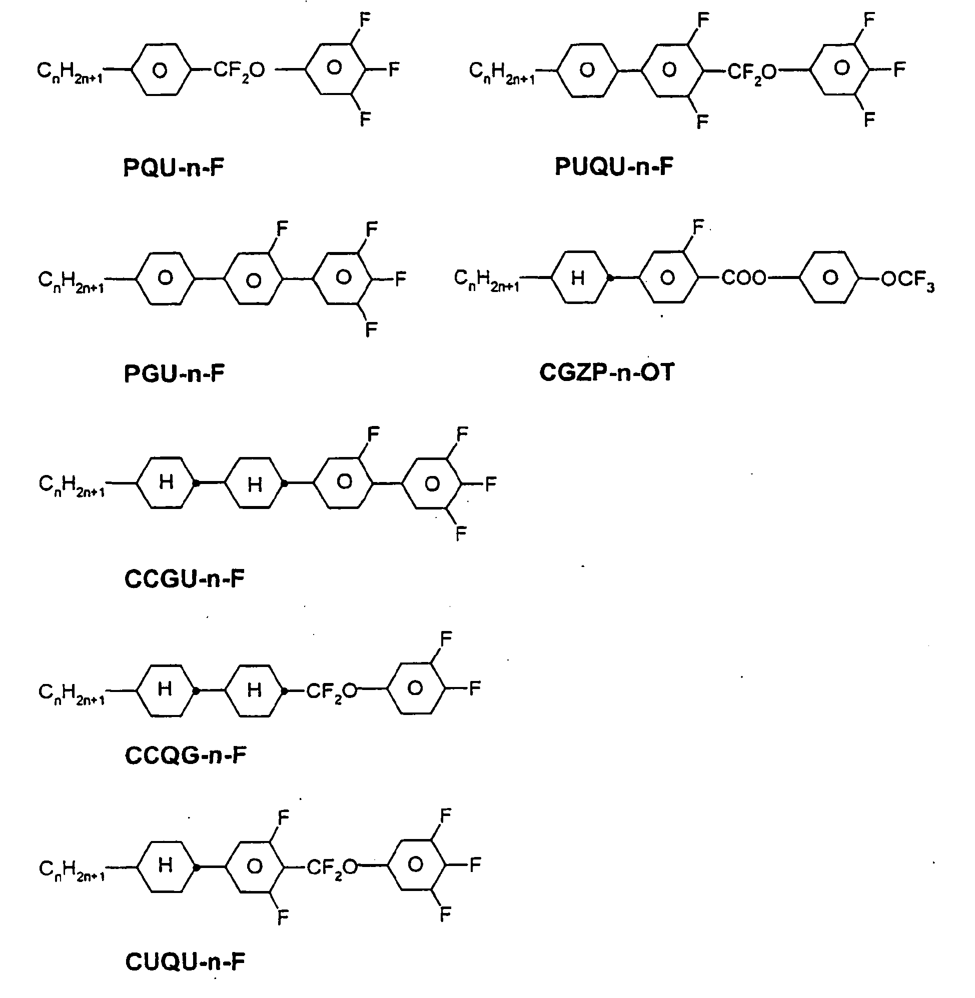

Besonders bevorzugt sind flüssigkristalline Mischungen, die neben den Verbindungen der Formeln I und IA-1 bis IA-15 mindestens ein, zwei, drei oder vier Verbindungen aus der Tabelle B enthalten.

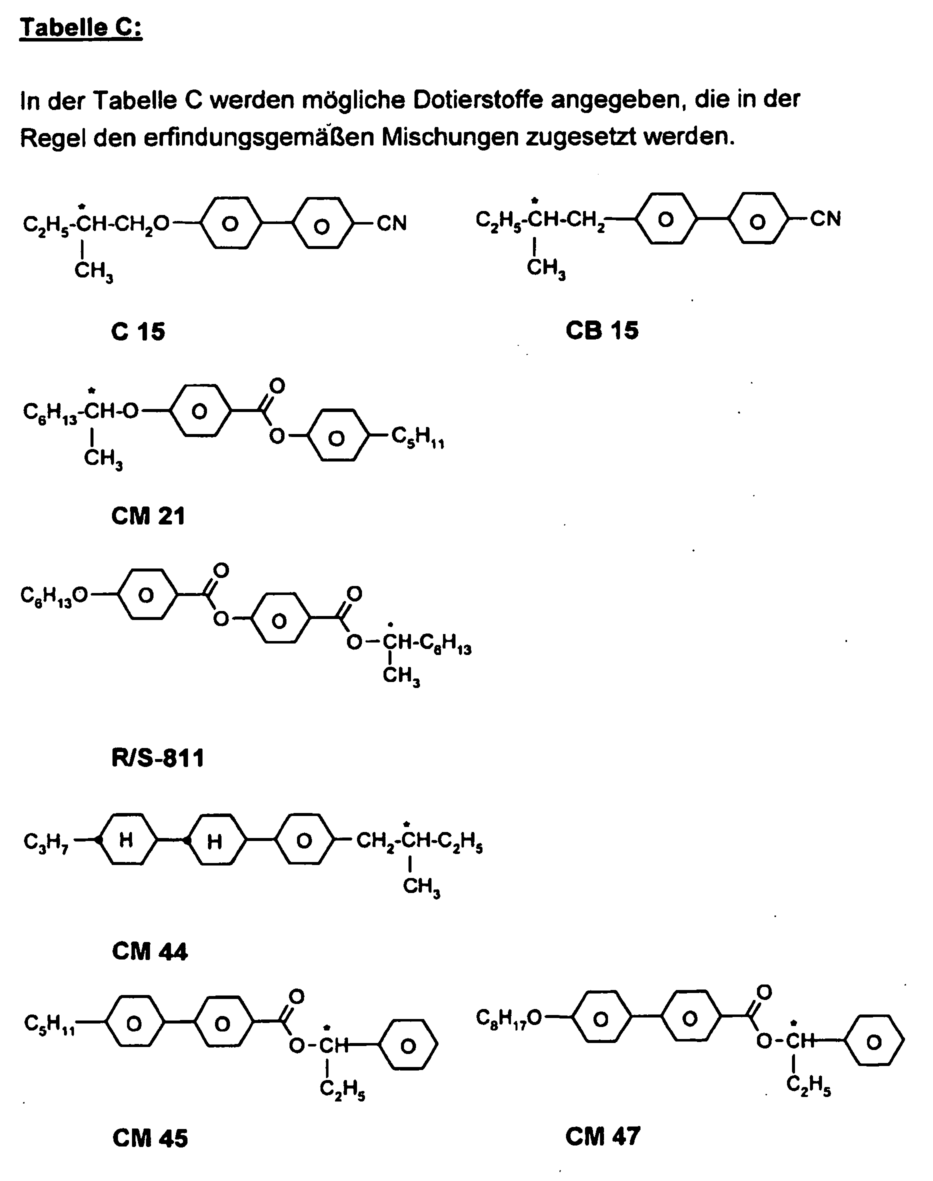

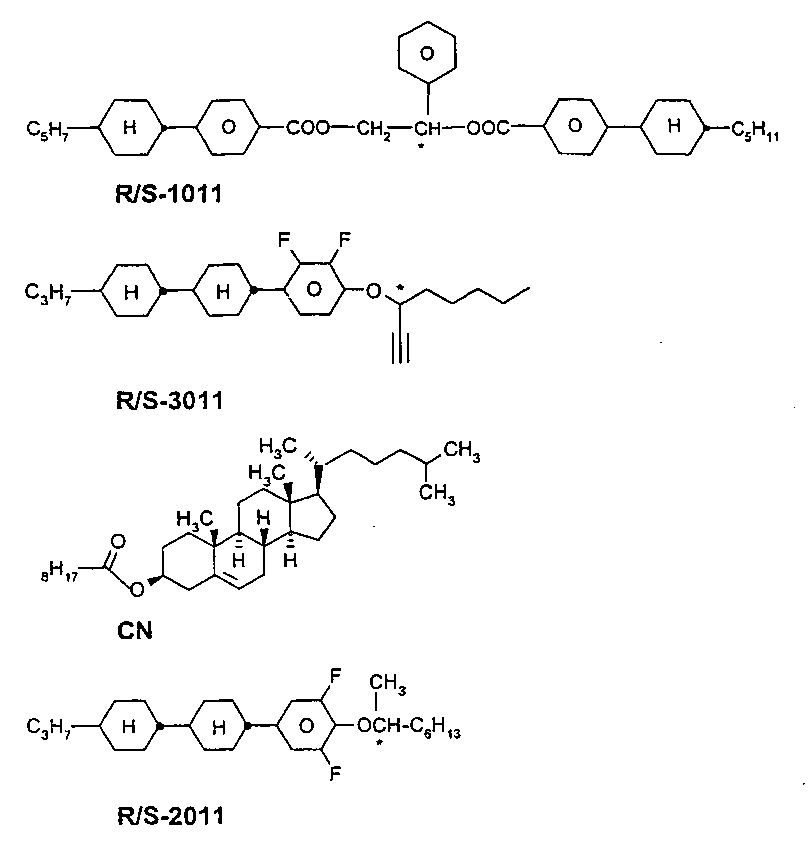

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C), die Fließviskosität ν₂₀ (mm²/sec) und die Rotationsviskosität γ₁ (mPa·s) wurden jeweils bei 20 °C bestimmt.

### Beispiel 1

| | | | |
|---|---|---|---|
| CC-5-V | 14,0 % | S → N [°C] | < -40 |
| CC-3-V1 | 8,0 % | Klärpunkt [°C]: | +72,5 |
| CCQU-3-F | 22,0 % | Δn [589 nm; 20 °C]: | +0,0838 |
| BCH-3F.F.F | 8,0 % | Δε: [1 kHz; 20 °C]: | 9,8 |
| CGU-2-F | 10,0 % | γ₁ [mPa·s; 20 °C]: | 103 |
| CGU-3-F | 11,0 % | d·Δn [µm; 20 °C]: | 0,50 |
| CCZU-2-F | 4,0 % | Verdrillung: | 90° |
| CCZU-3-F | 15,0 % | V_{10,0,20}: | 1,23 V |
| CCZU-5-F | 1,0 % | | |
| CCG-V-F | 7,0 % | | |

### Beispiel 2

| | | | |
|---|---|---|---|
| PCH-7F | 4,0 % | Klärpunkt [°C]: | 95,9 |
| CC-5-V | 12,0 % | Δn [589 nm; 20 °C]: | 0,085 |
| CCQU-3-F | 18,0 % | Δε [1 kHz; 20 °C]: | 6,9 |
| CCP-3F.F.F | 5,0 % | γ₁ [mPa·s; 20 °C]: | 135 |
| CCP-5F.F.F | 7,0 % | d·Δn [µm; 20 °C]: | 0,50 |
| CWCG-3-F | 8,0 % | Verdrillung: | 90° |
| CCP-2OCF₃ | 8,0 % | | |
| CCP-3OCF₃ | 8,0 % | | |
| CCP-4OCF₃ | 6,0 % | | |
| CCP-5OCF₃ | 8,0 % | | |
| BCH-2F.F | 8,0 % | | |
| BCH-3F.F | 8,0 % | | |

### Beispiel 3

| | | | |
|---|---|---|---|
| CCQU-3-F | 18,0 % | Klärpunkt [°C]: | 73,8 |
| CCP-5F.F.F | 5,0 % | Δn [589 nm; 20 °C]: | 0,087 |
| CWCU-3-F | 4,0 % | Δε [1 kHz; 20 °C]: | 11,2 |
| CCG-V-F | 1,0 % | γ₁ [mPa·s; 20 °C]: | 155 |
| CCP-3OCF₃ | 6,0 % | d·Δn [µm; 20 °C]: | 0,50 |
| CCP-5OCF₃ | 2,0 % | Verdrillung: | 90° |
| CGU-2-F | 11,0 % | | |
| CGU-3-F | 11,0 % | | |
| CGU-5-F | 10,0 % | | |
| BCH-3F.F.F | 4,0 % | | |
| CCZU-2-F | 7,0 % | | |
| CCZU-3-F | 14,0 % | | |
| CCZU-5-F | 7,0 % | | |

### Beispiel 4

| | | | |
|---|---|---|---|
| CC-3-V1 | 3,00 % | Klärpunkt [°C]: | 79,0 |
| CCP-2OCF₃ | 8,00 % | Δn [589 nm; 20 °C]: | 0,0849 |
| CCP-3OCF₃ | 8,00 % | Δε [1 kHz; 20 °C]: | 9,8 |
| CCP-4OCF₃ | 8,00 % | γ₁ [mPa·s; 20 °C]: | 129 |
| CCQU-2-F | 15,00 % | | |
| CCQU-3-F | 13,00 % | | |
| CCQU-5-F | 8,00 % | | |
| CCP-2F.F.F | 10,00 % | | |
| BCH-3F.F.F | 9,00 % | | |
| CGU-2-F | 10,00 % | | |
| CGU-3-F | 6,00 % | | |
| CBC-33 | 2,00 % | | |

### Beispiel 5

| | | | |
|---|---|---|---|
| CC-5-V | 12,00 % | Klärpunkt [°C]: | 66,7 |
| CC-3-V1 | 10,00 % | Δn [589 nm; 20 °C]: | 0,080 |
| CCQU-2-F | 15,00 % | Δε [1 kHz; 20 °C]: | 8,5 |
| CCQU-3-F | 12,00 % | γ₁ [mPa·s; 20 °C]: | 103 |
| BCH-3F.F.F | 8,00 % | | |
| BCH-2F.F.F | 2,00 % | | |
| CGU-2-F | 11,00 % | | |
| CGU-3-F | 10,00 % | | |
| CCZU-2-F | 4,00 % | | |
| CCZU-3-F | 12,00 % | | |
| BCH-32 | 4,00 % | | |

### Beispiel 6

| | | | |
|---|---|---|---|
| CCP-20CF₃ | 2,00 % | S → N [°C]: | < -40,0 |
| CCP-30CF₃ | 9,00 % | Klärpunkt [°C]: | +78,5 |
| CCP-2F.F.F | 9,00 % | Δn [589 nm, 20 °C:] | +0,1048 |
| CCP-3F.F.F | 3,00 % | d · Δn [20 °C]: | 0,50 |
| CGZP-2-OT | 14,00 % | Verdrillung [°]: | 90 |
| CGZP-3-OT | 10,00 % | V₁₀ [V]: | 0,93 |
| CCZU-2-F | 4,00 % | | |
| CCZU-3-F | 15,00 % | | |
| CCZU-5-F | 2,00 % | | |
| CGU-2-F | 3,00 % | | |
| PGU-2-F | 9,00 % | | |
| PGU-3-F | 2,00 % | | |
| CUQU-2-F | 6,00 % | | |
| CUQU-3-F | 6,00 % | | |
| CUQU-5-F | 2,00 % | | |
| CCP-V-1 | 4,00 % | | |

### Beispiel 7

| | | | |
|---|---|---|---|
| CCP-20CF₃ | 8,00 % | S → N [°C]: | < -40,0 |
| CCP-30CF₃ | 8,00 % | Klärpunkt [°C]: | +71,5 |
| CGZP-2-OT | 12,00 % | Δn [589 nm, 20 °C]: | +0,1047 |
| CGZP-3-OT | 8,00 % | γ₁ [20 °C, m Pa·s]: | 141 |
| CCZU-2-F | 5,00 % | d · Δn [20 °C]: | 0,50 |
| CCZU-3-F | 14,00 % | Verdrillung [°]: | 90 |
| CUQU-2-F | 6,00 % | V₁₀ [V]: | 0,97 |
| CUQU-3-F | 6,00 % | | |
| CUQU-5-F | 2,00 % | | |
| CGU-2-F | 6,00 % | | |
| CGU-3-F | 4,00 % | | |
| PGU-2-F | 8,00 % | | |
| PGU-3-F | 5,00 % | | |
| CC-3-V1 | 3,00 % | | |
| CCH-35 | 5,00 % | | |

### Beispiel 8

| | | | |
|---|---|---|---|
| CC-3-V1 | 3,00 % | S → N [°C]: | < -30,0 |
| CCH-35 | 5,00 % | Klärpunkt [°C]: | +74,0 |
| CC-5-V | 18,00 % | Δn [589 nm, 20 °C]: | +0,0796 |
| CUQU-2-F | 7,00 % | γ₁ [20 °C, m Pa·s]: | 94 |
| CUQU-3-F | 4,00 % | d · Δn [20 °C]: | 0,50 |
| CCP-30CF₃ | 8,00 % | Verdrillung [°]: | 90 |
| CCP-40CF₃ | 7,00 % | V₁₀ [V]: | 1,25 |
| CCP-2F.F.F | 6,00 % | | |
| CGU-2-F | 9,00 % | | |
| CCZU-2-F | 4,00 % | | |
| CCZU-3-F | 15,00 % | | |
| CGZP-2-OT | 11,00 % | | |
| CGZP-3-OT | 3,00 % | | |

### Beispiel 9

| | | | |
|---|---|---|---|
| CCP-2F.F.F | 10,00 % | S → N [°C]: | < -40,0 |
| CCP-3F.F.F | 10,00 % | Klärpunkt [°C]: | +80,5 |
| CCP-20CF₃ | 8,00 % | Δn [589 nm, 20 °C]: | +0,0775 |
| CCP-30CF₃ | 8,00 % | γ₁ [20 °C, m Pa.s]: | 105 |
| CCP-40CF₃ | 4,00 % | d · Δn [20 °C]: | 0,50 |
| CCZU-2-F | 5,00 % | Verdrillung [°]: | 90 |
| CCZU-3-F | 14,00 % | V₁₀ [V]: | 1,30 |
| CUQU-2-F | 6,00 % | | |
| CUQU-3-F | 6,00 % | | |
| CC-3-V1 | 9,00 % | | |
| CGZP-2-OT | 10,00 % | | |
| CC-5-V | 10,00 % | | |

### Beispiel 10

| | | | |
|---|---|---|---|
| CCH-35 | 5,00 % | S → N [°C]: | < -40,0 |
| CC-3-V1 | 3,00 % | Klärpunkt [°C]: | +71,0 |
| CC-5-V | 18,00 % | Δn [589 nm, 20 °C]: | +0,0778 |
| CUQU-2-F | 6,00 % | γ₁ [20 °C, m Pa.s]: | 95 |
| CUQU-3-F | 5,00 % | d · Δn [20 °C]: | 0,50 |
| CUQU-5-F | 2,00 % | Verdrillung [°]: | 90 |
| CCP-30CF₃ | 8,00 % | V₁₀ [V]: | 1,21 |
| CCP-2F.F.F | 9,00 % | | |
| CCP-3F.F.F | 6,00 % | | |
| BCH-3F.F.F | 3,00 % | | |
| CGU-2-F | 3.50 % | | |
| CCZU-2-F | 4,00 % | | |
| CCZU-3-F | 14.50 % | | |
| CGZP-2-OT | 10,00 % | | |
| CGZP-3-OT | 3,00 % | | |

### Beispiel 11

| | | | |
|---|---|---|---|
| CC-3-V1 | 10,00 % | S → N [°C]: | < -40,0 |
| PCH-53 | 3,00 % | Klärpunkt [°C]: | +80,0 |
| CC-5-V | 8,50 % | Δn [589 nm, 20 °C]: | +0,0846 |
| CCH-35 | 4,00 % | γ₁ [20 °C, m Pa·s]: | 85 |
| CCP-2F.F.F | 9,00 % | d · Δn [20 °C]: | 0,50 |
| CCP-3F.F.F | 9,00 % | Verdrillung [°]: | 90 |
| CCP-20CF₃ | 8,00 % | V₁₀ [V]: | 1,62 |
| CCP-30CF₃ | 8,00 % | | |
| CCP-50CF₃ | 5,00 % | | |
| PUQU-2-F | 5,50 % | | |
| PUQU-3-F | 9,00 % | | |
| CCP-V-1 | 6,00 % | | |
| CCG-V-F | 15,00 % | | |

### Beispiel 12

| | | | |
|---|---|---|---|
| CC-3-V1 | 10,00 % | S → N [°C]: | < -40,0 |
| PCH-53 | 1,00 % | Klärpunkt [°C]: | +80,5 |
| CC-5-V | 11,00 % | Δn [589 nm, 20 °C]: | +0,0808 |
| CCP-20CF₃ | 8,00 % | γ₁ [20 °C, m Pa·s]: | 81 |
| CCP-30CF₃ | 8,00 % | d · Δn [20 °C]: | 0,50 |
| CCG-V-F | 17,00 % | Verdrillung [°]: | 90 |
| BCH-2F.F | 8,00 % | V₁₀ [V]: | 1,82 |
| BCH-3F.F | 8,00 % | | |
| BCH-3F.F.F | 5,00 % | | |
| PUQU-2-F | 6,00 % | | |
| PUQU-3-F | 9,00 % | | |
| BCH-32 | 5,00 % | | |
| CCP-V-1 | 4,00 % | | |

### Beispiel 13

| | | | |
|---|---|---|---|
| CCH-35 | 4,00 % | S → N [°C]: | < -40,0 |
| CC-5-V | 12,00 % | Klärpunkt [°C]: | +80,5 |
| PCH-53 | 4,00 % | Δn [589 nm, 20 °C]: | +0,0808 |
| CC-3-V1 | 10,00 % | γ₁ [20 °C, m Pa·s]: | 81 |
| CCG-V-F | 20,00 % | d · Δn [20 °C]: | 0,50 |
| CCP-2F.F.F | 10,00 % | Verdrillung [°]: | 90 |
| CCP-3F.F.F | 10,00 % | V₁₀ [V]: | 1,82 |
| PUQU-3-F | 9,00 % | | |
| CCP-20CF₃ | 8,00 % | | |
| CCP-30CF₃ | 5,00 % | | |
| CCP-V-1 | 8,00 % | | |

### Beispiel 14

| | | | |
|---|---|---|---|
| PCH-53 | 4,50 % | S → N [°C]: | < -40,0 |
| CC-3-V1 | 10,00 % | Klärpunkt [°C]: | +80,0 |
| CC-5-V | 12,00 % | Δn [589 nm, 20 °C]: | +0,1040 |
| CCG-V-F | 20,00 % | γ₁ [20 °C, m Pa·s]: | 83 |
| BCH-3F.F.F | 11,00 % | d · Δn [20 °C]: | 0,50 |
| BCH-2F.F | 8,00 % | Verdrillung [°]: | 90 |
| BCH-3F.F | 8,00 % | V₁₀ [V]: | 1,79 |
| PUQU-3-F | 9,50 % | | |
| BCH-32 | 4,00 % | | |
| CCP-V-1 | 13,00 % | | |

### Beispiel 15

| | | | |
|---|---|---|---|
| CC-3-V1 | 11,00 % | S → N [°C]: | < -40,0 |
| PCH-53 | 1,00 % | Klärpunkt [°C]: | +80,0 |
| CC-5-V | 10,00 % | Δn [589 nm, 20 °C]: | +0,1038 |
| CCP-20CF₃ | 8,00 % | γ₁ [20 °C, m Pa·s]: | 85 |
| CCP-30CF₃ | 8,00 % | d · Δn [20 °C]: | 0,50 |
| CCG-V-F | 17,00 % | Verdrillung [°]: | 90 |
| BCH-2F.F | 8,00 % | V₁₀ [V]: | 1,60 |
| BCH-3F.F | 8,00 % | | |
| BCH-3F.F.F | 5,00 % | | |
| PUQU-2-F | 6,00 % | | |
| PUQU-3-F | 9,00 % | | |
| BCH-32 | 5,00 % | | |
| CCP-V-1 | 4,00 % | | |

### Beispiel 16

| | | | |
|---|---|---|---|
| CC-5-V | 8,00 % | S → N [°C]: | < -40,0 |
| CC-3-V1 | 11,00 % | Klärpunkt [°C]: | +79,0 |
| CCH-35 | 4,00 % | Δn [589 nm, 20 °C]: | +0,1046 |
| PUQU-2-F | 6,00 % | γ₁ [20 °C, m Pa·s]: | 99 |
| PUQU-3-F | 10,00 % | d · Δn [20°C]: | 0,50 |
| CGU-2-F | 10,00 % | Verdrillung [°]: | 90 |
| CGU-3-F | 10,00 % | V₁₀ [V]: | 1,26 |
| CGZP-2-OT | 11,00 % | | |
| CGZP-3-OT | 7,00 % | | |
| CCP-30CF₃ | 8,00 % | | |
| CCP-40CF₃ | 8,00 % | | |
| CCP-V-1 | 4,00 % | | |
| CBC-33 | 3,00 % | | |

### Beispiel 17

| | | | |
|---|---|---|---|
| CC-3-V1 | 11,00 % | S → N [°C]: | < +79,5 |
| PCH-53 | 2,00 % | Klärpunkt [°C]: | -40,0 |
| CC-5-V | 8,00 % | Δn [589 nm, 20 °C]: | +0,1040 |
| CCP-20CF₃ | 8,00 % | d · Δn [20 °C]: | 0,50 |
| CCP-30CF₃ | 8,00 % | Verdrillung [°]: | 90 |
| CCG-V-F | 16,00 % | V₁₀ [V]: | 1,79 |
| BCH-2F.F | 8,00 % | | |
| BCH-3F.F | 8,00 % | | |
| BCH-3F.F.F | 8,00 % | | |
| PUQU-2-F | 5,00 % | | |
| PUQU-3-F | 9,00 % | | |
| BCH-32 | 4,00 % | | |
| CCP-V-1 | 5,00 % | | |

### Beispiel 18

| | | | |
|---|---|---|---|
| CCH-35 | 4,00 % | S → N [°C]: | < -40,0 |
| CC-5-V | 9,00 % | Klärpunkt [°C]: | +80,0 |
| PCH-53 | 5,00 % | Δn [589 nm, 20 °C]: | +0,0821 |
| CC-3-V1 | 10,00 % | d · Δn [20 °C]: | 0,50 |
| CCG-V-F | 20,00 % | Verdrillung [°]: | 90 |
| CCP-2F.F.F | 9,00 % | V₁₀ [V]: | 1,79 |
| CCP-3F.F.F | 9,00 % | | |
| BCH-3F.F.F | 4,00 % | | |
| PUQU-3-F | 9,00 % | | |
| CCP-20CF₃ | 8,00 % | | |
| CCP-30CF₃ | 3,00 % | | |
| CCP-V-1 | 10,00 % | | |

### Beispiel 19

| | | | |
|---|---|---|---|
| CC-3-V | 20,00 % | Klärpunkt [°C]: | +81,0 |
| CC-3-V1 | 11,00 % | Δn [589 nm, 20°C]: | +0,0994 |
| CCP-30CF₃ | 8,00 % | d · Δn [20 °C]: | 0,50 |
| CCP-20CF₃ | 8,00 % | Verdrillung [°]: | 90 |
| PGU-2-F | 8,00 % | V₁₀ [V]: | 1,55 |
| PUQU-3-F | 12,00 % | | |
| CGZP-2-OT | 9,00 % | | |
| CCZU-2-F | 4,00 % | | |
| CCP-2F.F.F | 3,00 % | | |
| CCG-V-F | 2,00 % | | |
| CCP-V-1 | 11,00 % | | |
| BCH-32 | 4,00 % | | |

### Beispiel 20

| | | | |
|---|---|---|---|
| CC-5-V | 13,00, % | Klärpunkt [°C]: | +81,0 |
| CC-3-V1 | 9,00 % | Δn [589 nm, 20 °C]: | +0,1043 |
| CCH-35 | 5,00 % | γ₁ [20 °C, m Pa·s]: | 90 |
| CCZU-2-F | 5,00 % | d · Δn [20°C]: | 0,50 |
| PUQU-2-F | 7,00 % | Verdrillung [°]: | 90 |
| PUQU-3-F | 13,00 % | V₁₀ [V]: | 1,38 |
| PGU-2-F | 5,00 % | | |
| CGU-2-F | 1,00 % | | |
| CGZP-2-OT | 11,00 % | | |
| CGZP-3-OT | 7,00 % | | |
| CCP-30CF₃ | 8,00 % | | |
| CCP-20CF₃ | 7,00 % | | |
| CCP-V-1 | 8,00 % | | |
| CBC-33 | 1,00 % | | |

### Beispiel 21

| | | | |
|---|---|---|---|
| CCP-2F.F.F | 12,00 % | Klärpunkt [°C]: | +80,0 |
| CCP-3F.F.F | 11,00 % | Δn [589 nm, 20 °C]: | +0,0807 |
| CCP-5F.F.F | 6,00 % | d · Δn [20 °C]: | 0,50 |
| CCZU-2-F | 5,00 % | Verdrillung [°]: | 90 |
| CCZU-3-F | 15,00 % | V₁₀ [V]: | 1,19 |
| CCZU-5-F | 4,00 % | | |
| CCP-20CF₃ | 5,00 % | | |
| CCP-30CF₃ | 3,00 % | | |
| CCOC-3-3 | 3,00 % | | |
| CCOC-4-3 | 4,00 % | | |
| CCOC-3-5 | 3,00 % | | |
| CC-5-V | 11,00 % | | |
| PUQU-3-F | 8,00 % | | |
| PUQU-2-F | 10,00 % | | |

### Beispiel 22

| | | | |
|---|---|---|---|
| CCH-35 | 5,00 % | S → N [°C]: | < -40,0 |
| CC-5-V | 15,50 % | Klärpunkt [°C]: | +71,0 |
| CCH-3CF₃ | 3,50 % | Δn [589 nm, 20 °C]: | +0,0768 |
| CCP-20CF₃ | 6,00 % | γ₁ [20 °C, m Pa·s]: | 94 |
| CCP-40CF₃ | 8,00 % | d · Δn [20 °C]: | 0,50 |
| CCP-20CF₃.F | 5,00 % | Verdrillung [°]: | 90 |
| CCP-2F.F.F | 10,00 % | V₁₀ [V]: | 1,21 |
| CCP-3F.F.F | 10,00 % | | |
| CCZU-2-F | 4,00 % | | |
| CCZU-3-F | 15,00 % | | |
| CCZU-5-F | 3,00 % | | |
| PUQU-2-F | 9,00 % | | |
| PUQU-3-F | 6,00 % | | |

### Beispiel 23

| | | | |
|---|---|---|---|
| CCH-35 | 4,00 % | S → N [°C]: | < -20,0 |
| CCP-30CF₃ | 8,00 % | Klärpunkt [°C]: | +81,5 |
| CCP-40CF₃ | 8,00 % | Δn [589 nm, 20 °C]: | +0,1034 |
| CCP-2F.F.F | 10,00 % | γ₁ [20 °C, m Pa·s]: | 161 |
| CGZP-2-OT | 14,00 % | d · Δn [20 °C]: | 0,50 |
| CGZP-3-OT | 10,00 % | Verdrillung [°]: | 90 |
| CCZU-2-F | 4,00 % | V₁₀ [V]: | 0,94 |
| CCZU-3-F | 15,00 % | | |
| CCZU-5-F | 3,00 % | | |
| PGU-2-F | 2,00 % | | |
| PUQU-2-F | 11,00 % | | |
| PUQU-3-F | 11,00 % | | |

### Beispiel 24

| | | | |
|---|---|---|---|
| CCP-2F.F.F | 9,00 % | S → N [°C]: | < -40,0 |
| CCP-20CF₃ | 8,00 % | Klärpunkt [°C]: | +71,5 |
| CCP-30CF₃ | 5,00 % | Δn [589 nm, 20 °C]: | +0,1044 |
| CCP-40CF₃ | 4,00 % | γ₁ [20 °C, m Pa·s]: | 151 |
| CCQU-2-F | 10,00 % | d · Δn [20 °C]: | 0,50 |
| CCQU-3-F | 12,00 % | Verdrillung [°]: | 90 |
| CCQU-5-F | 8,00 % | V₁₀ [V]: | 0,92 |
| PUQU-2-F | 12,00 % | | |
| PUQU-3-F | 12,00 % | | |
| PGU-2-F | 9,00 % | | |
| PGU-3-F | 2,00 % | | |
| CCGU-3-F | 5,00 % | | |
| CBC-33 | 1,00 % | | |
| CCOC-3-3 | 3,00 % | | |

### Beispiel 25

| | |
|---|---|
| CCH-35 | 5,00 % |
| CC-5-V | 16,00 % |
| CCH-3CF₃ | 5,00 % |
| CCP-20CF₃ | 6,00 % |
| CCP-40CF₃ | 8,00 % |
| CCP-20CF₃.F | 3,00 % |
| CCP-2F.F.F | 10,00 % |
| CCP-3F.F.F | 10,00 % |
| CCZU-2-F | 3,50 % |
| CCZU-3-F | 15,00 % |
| CCZU-5-F | 2,50 % |
| PUQU-2-F | 8,00 % |
| PUQU-3-F | 7,00 % |
| CCOC-3-3 | 1,00 % |

### Beispiel 26

| | | | |
|---|---|---|---|
| CCH-35 | 4,50 % | S → N [°C]: | < -40,0 |
| CCP-30CF₃ | 8,00 % | Klärpunkt [°C]: | +80,0 |
| CCP-40CF₃ | 5,00 % | Δn [589 nm, 20 °C]: | +0,1025 |
| CCP-50CF₃ | 2,00 % | d · Δn [20 °C]: | 0,50 |
| CCP-2F.F.F | 9,50 % | Verdrillung [°]: | 90 |
| CCP-3F.F.F | 2,00 % | V₁₀ [V]: | 0,94 |
| CGZP-2-OT | 14,00 % | | |
| CGZP-3-OT | 10,00 % | | |
| CCZU-2-F | 3,50 % | | |
| CCZU-3-F | 15,00 % | | |
| CCZU-5-F | 2,50 % | | |
| PGU-2-F | 2,00 % | | |
| PUQU-2-F | 8,00 % | | |
| PUQU-3-F | 14,00 % | | |

### Beispiel 27

| | |
|---|---|
| CC-3-Vl | 4,00 % |
| CCH-35 | 5,00 % |
| CC-5-V | 17,00 % |
| CCH-3CF₃ | 2,00 % |
| CCP-20CF₃ | 8,00 % |
| CCP-30CF₃ | 6,50 % |
| CCP-2F.F.F | 10,00 % |
| CCP-3F.F.F | 9,00 % |
| CGZP-2-OT | 4,50 % |
| CCZU-2-F | 4,00 % |
| CCZU-3-F | 14,00 % |
| PUQU-3-F | 8,00 % |

### Beispiel 28

| | | | |
|---|---|---|---|
| CC-3-V1 | 4,00 % | S → N [°C]: | < -40,0 |
| CCH-35 | 5,00 % | Klärpunkt [°C]: | +71,0 |
| CC-5-V | 17,00 % | Δn [589 nm, 20 °C]: | +0,0797 |
| CCH-3CF₃ | 2,00 % | d · Δn [20 °C]: | 0,50 |
| CCP-20CF₃ | 8,00 % | Verdrillung [°]: | 90 |
| CCP-30CF₃ | 6,50 % | V₁₀ [V]: | 1,28 |
| CCP-2F.F.F | 10,00 % | | |
| CCP-3F.F.F | 9,00 % | | |
| CGZP-2-OT | 4,50 % | | |
| CCZU-2-F | 4,00 % | | |
| CCZU-3-F | 14,00 % | | |
| PUQU-3-F | 8,50 % | | |
| PUQU-3-F | 7,50 % | | |

### Beispiel 29

| | | | |
|---|---|---|---|
| CCP-2F.F.F | 12,00 % | Klärpunkt [°C]: | +82,0 |
| CCP-3F.F.F | 10,00 % | Δn [589 nm, 20 °C]: | +0,0800 |
| CCP-5F.F.F | 6,00 % | d · Δn [20 °C]: | 0,50 |
| CCZU-2-F | 5,00 % | Verdrillung [°]: | 90 |
| CCZU-3-F | 15,00 % | V₁₀ [V]: | 1,26 |
| CCZU-5-F | 4,00 % | | |
| CCP-20CF₃ | 3,00 % | | |
| CCP-30CF₃ | 2,00 % | | |
| CCP-50CF₃ | 3,00 % | | |
| CCOC-3-3 | 3,00 % | | |
| CCOC-4-3 | 4,00 % | | |
| CCOC-3-5 | 3,00 % | | |
| CC-5-V | 13,00 % | | |
| PUQU-3-F | 17,00 % | | |

### Beispiel 30

| | | | |
|---|---|---|---|
| CCP-2F.F.F | 9,00 % | S → N [°C]: | < -40,0 |
| CCP-20CF₃ | 8,00 % | Klärpunkt [°C]: | +74,5 |
| CCP-30CF₃ | 4,50 % | Δn [589 nm, 20 °C]: | +0,1056 |
| CCP-40CF₃ | 4,00 % | γ₁ [20 °C, m Pa·s]: | 152 |
| CCQU-2-F | 10,00 % | d · Δn [20 °C]: | 0,50 |
| CCQU-3-F | 12,00 % | Verdrillung [°]: | 90 |
| CCQU-5-F | 8,00 % | V₁₀ [V]: | 0,91 |
| PUQU-2-F | 12,00 % | | |
| PUQU-3-F | 12,00 % | | |
| PGU-2-F | 9,00 % | | |
| PGU-3-F | 1,50 % | | |
| CCGU-3-F | 5,00 % | | |
| CBC-33 | 2,00 % | | |
| CCOC-3-3 | 3,00 % | | |

### Beispiel 31

| | | | |
|---|---|---|---|
| CCP-2F.F.F | 10,00 % | S → N [°C]: | < -40,0 |
| CCP-20CF₃ | 8,00 % | Klärpunkt [°C]: | +69,0 |
| CCP-30CF₃ | 8,00 % | Δn [589 nm, 20 °C]: | +0,1044 |
| CCP-40CF₃ | 4,00 % | d · Δn [20 °C]: | 0,50 |
| CGZP-2-OT | 12,00 % | Verdrillung [°]: | 90 |
| CCZU-2-F | 4,00 % | V₁₀ [V]: | 0,94 |
| CCZU-3-F | 14,00 % | | |
| PUQU-2-F | 12,00 % | | |
| PUQU-3-F | 12,00 % | | |
| PGU-2-F | 8,00 % | | |
| CC-3-V1 | 6,00 % | | |
| CCP-V-1 | 2,00 % | | |

### Beispiel 32

| | | | |
|---|---|---|---|
| CCP-2F.F.F | 9,00 % | S → N [°C]: | < -40,0 |
| CCP-3F.F.F | 3,00 % | Klärpunkt [°C]: | +68,5 |
| CCP-20CF₃ | 8,00 % | Δn [589 nm, 20 °]: | +0,1052 |
| CCP-30CF₃ | 6,00 % | d · Δn [20 °C]: | 0,50 |
| CGZP-2-OT | 11,00 % | Verdrillung [°]: | 90 |
| CCZU-2-F | 4,00 % | V₁₀ [V]: | 0,96 |
| CCZU-3-F | 13,00 % | | |
| PUQU-2-F | 12,00 % | | |
| PUQU-3-F | 11,00 % | | |
| PGU-2-F | 9,00 % | | |
| CC-3-V1 | 9,00 % | | |
| CCP-V-1 | 5,00 % | | |

### Beispiel 33

| | | | |
|---|---|---|---|
| CCH-35 | 4,00 % | Klärpunkt [°C]: | +81,0 |
| CCP-20CF₃ | 2,00 % | Δn [589 nm, 20 °C]: | +0,1054 |
| CCP-30CF₃ | 7,00 % | γ₁ [20 °C, m Pa·s]: | 163 |
| CCP-40CF₃ | 6,50 % | d · Δn [20 °C]: | 0,50 |
| CCP-2F.F.F | 10,00 % | Verdrillung [°]: | 90 |
| CGZP-2-OT | 14,00 % | V₁₀ [V]: | 0,94 |
| CGZP-3-OT | 10,00 % | | |
| CCZU-2-F | 4,00 % | | |
| CCZU-3-F | 15,00 % | | |
| CCZU-5-F | 3,00 % | | |
| PGU-2-F | 4,50 % | | |
| PUQU-3-F | 20,00 % | | |

### Beispiel 34

| | | | |
|---|---|---|---|
| CC-3-V1 | 4,00 % | S → N [°C]: | < -30,0 |
| CCH-35 | 5,00 % | Klärpunkt [°C]: | +74,0 |
| CC-5-V | 18,00 % | Δn [589 nm, 20 °C]: | +0,0807 |
| CCP-20CF₃ | 8,00 % | γ₁ [20 °C, m Pa·s]: | 86 |
| CCP-30CF₃ | 8,00 % | d · Δn [20 °C]: | 0,50 |
| CCP-2F.F.F | 10,00 % | Verdrillung [°]: | 90 |
| CCP-3F.F.F | 8,00 % | V₁₀ [V]: | 1,31 |
| CGZP-2-OT | 4,00 % | | |
| CCZU-2-F | 4,00 % | | |
| CCZU-3-F | 15,00 % | | |
| PUQU-3-F | 16,00 % | | |

### Beispiel 35

| | | | |
|---|---|---|---|
| CCP-2F.F.F | 10,00 % | S → N [°C]: | < -40,0 |
| CCP-3F.F.F | 10,00 % | Klärpunkt [°C]: | +80,0 |
| CCP-20CF₃.F | 10,00 % | Δn [589 nm, 20 °C]: | +0,0804 |
| CCP-20CF₃ | 8,00 % | γ₁ [20 °C, m Pa·s]: | 112 |
| CCP-30CF₃ | 5,00 % | d · Δn [20°C]: | 0,50 |
| CCP-40CF₃ | 4,00 % | Verdrillung [°]: | 90 |
| CCZU-2-F | 5,00 % | V₁₀ [V]: | 0,96 |
| CCZU-3-F | 15,00 % | | |
| CCZU-5-F | 4,00 % | | |
| PUQU-3-F | 13,00 % | | |
| CCH-35 | 5,00 % | | |
| CC-5-V | 11,00 % | | |

### Beispiel 36

| | | | |
|---|---|---|---|
| CCP-2F.F.F | 10,00 % | S → N [°C]: | < -40,0 |
| CCP-20CF₃ | 8,00 % | Klärpunkt [°C]: | +71,0 |
| CCP-30CF₃ | 5,00 % | Δn [589 nm, 20 °C]: | +0,1047 |
| CGZP-2-OT | 12,00 % | γ₁ [20 °C, m Pa·s]: | 125 |
| CGZP-3-OT | 4,00 % | d · Δn [20 °C]: | 0,50 |
| CCZU-2-F | 5,00 % | Verdrillung [°]: | 90 |
| CCZU-3-F | 12,00 % | V₁₀ [V]: | 0,96 |
| PUQU-3-F | 20,00 % | | |
| CGU-2-F | 3,00 % | | |
| PGU-2-F | 8,00 % | | |
| CC-3-V1 | 3,50 % | | |
| CCH-35 | 5,00 % | | |
| CCP-V-1 | 4,50 % | | |

### Beispiel 37

| | | | |
|---|---|---|---|
| CCP-2F.F.F | 10,00 % | S → N [°C]: | < -40,0 |
| CCP-20CF₃ | 8,00 % | Klärpunkt [°C]: | +68,5 |
| CCP-30CF₃ | 8,00 % | Δn [589 nm, 20 °C]: | +0,1043 |
| CCP-40CF₃ | 4,00 % | γ₁ [20 °C, m Pa·s]: | 126 |
| CGZP-2-OT | 12,00 % | d · Δn [20 °C]: | 0,50 |
| CCZU-2-F | 5,00 % | Verdrillung [°]: | 90 |
| CCZU-3-F | 15,00 % | V₁₀ [V]: | 0,91 |
| PUQU-3-F | 22,00 % | | |
| PGU-2-F | 9,00 % | | |
| PGU-3-F | 1,00 % | | |
| CC-3-V1 | 3,50 % | | |
| CCH-35 | 2,50 % | | |

### Beispiel 38

| | | | |
|---|---|---|---|
| CCP-2F.F.F | 9,00 % | S → N [°C]: | < -40,0 |
| CCP-3F.F.F | 9,00 % | Klärpunkt [°C]: | +69,0 |
| CCP-20CF₃.F | 5,00 % | Δn [589 nm, 20 °C]: | +0,1049 |
| CCP-20CF₃ | 8,00 % | γ₁ [20 °C, m Pa·s]: | 144 |
| CCP-30CF₃ | 7,00 % | d · Δn [20 °C]: | 0,50 |
| CCP-40CF₃ | 4,00 % | Verdrillung [°]: | 90 |
| CCZU-2-F | 5,00 % | V₁₀ [V]: | 0,92 |
| CCZU-3-F | 15,00 % | | |
| PUQU-3-F | 25,00 % | | |
| PGU-2-F | 8,00 % | | |
| PGU-3-F | 2,00 % | | |
| CBC-33 | 3,00 % | | |

### Beispiel 39

| | | | |
|---|---|---|---|
| CC-3-V1 | 11,00 % | S → N [°C]: | < -79,5 |
| PCH-53 | 2,00 % | Klärpunkt [°C]: | +40,0 |
| CC-5-V | 8,00 % | Δn [589 nm, 20 °C]: | +0,1040 |
| CCP-20CF₃ | 8,00 % | d · Δn [20 °C]: | 0,50 |
| CCP-30CF₃ | 8,00 % | Verdrillung [°]: | 90 |
| CCG-V-F | 16,00 % | V₁₀ [V]: | 1,59 |
| BCH-2F.F | 8,00 % | | |
| BCH-3F.F | 8,00 % | | |
| BCH-3F.F.F | 8,00 % | | |
| PUQU-2-F | 5,00 % | | |
| PUQU-3-F | 9,00 %, | | |
| BCH-32 | 4,00 % | | |
| CCP-V-1 | 5,00 % | | |

### Beispiel 40

| | | | |
|---|---|---|---|
| CC-3-V | 20,00 % | Klärpunkt [°C]: | +81,0 |
| CC-3-V1 | 11,00 % | Δn [589 nm, 20 °C]: | +0,0994 |
| CCP-30CF₃ | 8,00 % | d · Δn [20 °C]: | 0,50 |
| CCP-20CF₃ | 8,00 % | Verdrillung [°]: | 90 |
| PGU-2-F | 8,00 % | V₁₀ [V]: | 1,55 |
| PUQU-3-F | 12,00 % | | |
| CGZP-2-OT | 9,00 % | | |
| CCZU-2-F | 4,00 % | | |
| CCP-2F.F.F | 3,00 % | | |
| CCG-V-F | 2,00 % | | |
| CCP-V-1 | 11,00 % | | |
| BCH-32 | 4,00 % | | |

### Beispiel 41

| | | | |
|---|---|---|---|
| CCH-35 | 4,00 % | S → N [°C]: | < -40,0 |
| CC-5-V | 12,00 % | Klärpunkt [°C]: | +80,5 |
| PCH-53 | 4,00 % | Δn [589 nm, 20 °C]: | +0,0808 |
| CC-3-V1 | 10,00 % | γ₁ [20 °C, m Pa·s]: | 81 |
| CCG-V-F | 20,00 % | d · Δn [20 °C]: | 0,50 |
| CCP-2F.F.F | 10,00 % | Verdrillung [°]: | 90 |
| CCP-3F.F.F | 10,00 % | V₁₀ [V]: | 1,82 |
| PUQU-3-F | 9,00 % | | |
| CCP-20CF₃ | 8,00 % | | |
| CCP-30CF₃ | 5,00 % | | |
| CCP-V-1 | 8,00 % | | |

### Beispiel 42

| | | | |
|---|---|---|---|
| CCP-2F.F.F | 9,00 % | S → N [°C]: | < -40,0 |
| CCP-3F.F.F | 10,00 % | Klärpunkt [°C]: | +73,0 |
| CCQU-2-F | 11,00 % | Δn [589 nm, 20 °C]: | +0,0667 |
| CCQU-3-F | 11,00 % | | |
| CCQU-5-F | 4,00 % | | |
| CCZU-2-F | 4,00 % | | |
| CCZU-3-F | 14,00 % | | |
| CCP-20CF₃.F | 5,00 % | | |
| CCCG-V-F | 5,00 % | | |
| CGU-2-F | 3,00 % | | |
| CC-5-V | 14,00 % | | |
| CCH-501 | 7,00 % | | |
| PCH-7F | 3,00 % | | |

### Beispiel 43

| | | | |
|---|---|---|---|
| CC-5-V | 11,00 % | Klärpunkt [°C]: | +88,0 |
| CCH-35 | 4,00 % | Δn [589 nm, 20 °C]: | +0,0801 |
| CGU-2-F | 10,00 % | d · Δn [20 °C]: | 0,50 |
| CGU-3-F | 10,00 % | Verdrillung [°]: | 90 |
| CCP-2F.F.F | 5,00 % | V₁₀ [V]: | 1,59 |
| CCQG-2-F | 14,00 % | | |
| CCQG-3-F | 14,00 % | | |
| CCQG-5-F | 10,00 % | | |
| ECCP-3F.F | 12,00 % | | |
| ECCP-5F.F | 10,00 % | | |

### Beispiel 44

| | | | |
|---|---|---|---|
| CC-3-V1 | 5,00 % | S → N [°C]: | < -20,0 |
| CCH-35 | 5,00 % | Klärpunkt [°C]: | +77,5 |
| CC-5-V | 18,00 % | Δn [589 nm, 20 °C]: | +0,0800 |
| CCQU-2-F | 11,50 % | d · Δn [20 °C]: | 0,50 |
| CCQU-3-F | 12,00 % | Verdrillung [°]: | 90 |
| CGU-2-F | 9,00 % | V₁₀ [V]: | 1,29 |
| CGU-3-F | 6,00 % | | |
| CCZU-2-F | 4,00 % | | |
| CCZU-3-F | 15,00 % | | |
| CGZP-2-OT | 10,50 % | | |
| CGZP-3-OT | 4,00 % | | |

### Beispiel 45

| | | | |
|---|---|---|---|
| CCP-2F.F.F | 9,00 % | S → N [°C]: | < -40,0 |
| CCP-3F.F.F | 10,00 % | Klärpunkt [°C]: | +76,0 |
| CCQU-2-F | 11,00 % | Δn [589 nm, 20 °C]: | +0,0671 |
| CCQU-3-F | 11,00 % | Δε [1 kHz, 20 °C]: | 8.0 |
| CCQU-5-F | 4,00 % | | |
| CCZU-2-F | 4,00 % | | |
| CCZU-3-F | 14,00 % | | |
| CCP-20CF₃.F | 5,00 % | | |
| CCG-V-F | 5,00 % | | |
| CGU-2-F | 3,00 % | | |
| CC-5-V | 16,00 % | | |
| CCH-501 | 7,00 % | | |
| PCH-7F | 1,00 % | | |

### Beispiel 46

| | | | |
|---|---|---|---|
| CCP-2F.F.F | 8,00 % | Klärpunkt [°C]: | +80,5 |
| CCP-3F.F.F | 8,00 % | Δn [589 nm, 20 °C]: | +0,0838 |
| CCP-5F.F.F | 7,00 % | d · Δn [20 °C]: | 0,50 |
| CCP-20CF₃ | 8,00 % | Verdrillung [°]: | 90 |
| CCP-30CF₃ | 8,00 % | V₁₀ [V]: | 1,27 |
| CGU-2-F | 10,00 % | | |
| CGU-3-F | 3,00 % | | |
| BCH-3F.F.F | 7,00 % | | |
| CCG-V-F | 10,00 % | | |
| CC-3-V1 | 4,00 % | | |
| CCQU-2-F | 8,00 % | | |
| CCQU-3-F | 10,00 % | | |
| CCQU-5-F | 9,00 % | | |

### Beispiel 47

| | | | |
|---|---|---|---|
| CCP-2F.F.F | 10,00 % | S → N [°C]: | < -40,0 |
| CCP-3F.F.F | 10,00 % | Klärpunkt [°C]: | +82,5 |
| CCP-5F.F.F | 4,00 % | Δn [589 nm, 20 °C]: | +0,0791 |
| CCP-20CF₃ | 8,00 % | d · Δn [20 °C]: | 0,50 |
| CCP-30CF₃ | 8,00 % | Verdrillung [°]: | 90 |
| CCP-40CF₃ | 4,00 % | V₁₀ [V]: | 1,38 |
| CCZU-2-F | 5,00 % | | |
| CCZU-3-F | 15,00 % | | |
| CCZU-5-F | 4,00 % | | |
| PUQU-3-F | 12,00 % | | |
| CCH-35 | 5,00 % | | |
| CC-5-V | 15,00 % | | |
| CGZP-2-OT | 0,00 % | | |

### Beispiel 48

| | | | |
|---|---|---|---|
| CCP-2F.F.F | 10,00 % | S → N [°C]: | < -40,0 |
| CCP-20CF₃ | 8,00 % | Klärpunkt [°C]: | +71,5 |
| CCP-30CF₃ | 4,00 % | Δn [589 nm, 20 °C]: | +0,1044 |
| CGZP-2-OT | 12,00 % | Δε [1 kHz, 20 °C]: | 14,5 |
| CGZP-3-OT | 4,00 % | γ₁ [20 °C, m Pa·s]: | 115 |
| CCZU-2-F | 4,00 % | d · Δn [20 °C]: | 0,50 |
| CCZU-3-F | 9,00 % | Verdrillung [°]: | 90 |
| PUQU-3-F | 20,00 % | V₁₀ [V]: | 1,02 |
| CGU-2-F | 5,00 % | | |
| PGU-2-F | 6,00 % | | |
| CC-3-V1 | 9,00 % | | |
| CCH-35 | 2,00 % | | |
| CCP-V-1 | 7,00 % | | |

### Beispiel 49

| | | | |
|---|---|---|---|
| CC-3-V1 | 9,00 % | S → N [°C]: | < -40,0 |
| CC-5-V | 12,00 % | Klärpunkt [°C]: | +85,5 |
| CCQU-2-F | 12,00 % | Δn [589 nm, 20 °C]: | +0,0775 |
| CCQU-3-F | 11,00 % | γ₁ [20 °C, m Pa·s]: | 115 |
| CCP-3F.F.F | 7,00 % | d · Δn [20 °C]: | 0,50 |
| CCQG-2-F | 12,00 % | Verdrillung [°]: | 90 |
| CCQG-3-F | 12,00 % | V₁₀ [V]: | 1,55 |
| CCQG-5-F | 8,00 % | | |
| CGU-2-F | 5,00 % | | |
| BCH-3F.F.F | 12,00 % | | |

### Beispiel 50

| | | | |
|---|---|---|---|
| CC-5-V | 10,00 % | S → N [°C]: | < -40,0 |
| CC-3-V1 | 8,00 % | Klärpunkt [°C]: | +79,0 |
| CCQG-2-F | 10,00 % | Δn [589 nm, 20 °C]: | +0,0996 |
| CCQG-3-F | 11,00 % | d · Δn [20 °C]: | 0,50 |
| CCQU-2-F | 11,00 % | Verdrillung [°]: | 90 |
| BCH-3F.F.F | 15,00 % | V₁₀ [V]: | 1,49 |
| BCH-2F.F | 8,00 % | | |
| BCH-3F.F | 8,00 % | | |
| CGU-2-F | 10,00 % | | |
| BCH-32 | 5,00 % | | |
| CCP-V-1 | 4,00 % | | |

### Beispiel 51

| | | | |
|---|---|---|---|
| CCP-30CF₃ | 8,00 % | S → N [°C]: | < -40,0 |
| CCP-40CF₃ | 6,00 % | Klärpunkt [°C]: | +78,5 |
| CCP-2F.F.F | 7,00 % | Δn [589 nm, 20 °C]: | +0,1042 |
| CGZP-2-OT | 14,00 % | γ₁ [20 °C, m Pa·s]: | 178 |
| CGZP-3-OT . | 10,00 % | d · Δn [20°C]: | 0,50 |
| CCZU-2-F | 4,00 % | Verdrillung [°]: | 90 |
| CCZU-3-F | 15,00 % | V₁₀ [V]: | 0,93 |
| CCZU-5-F | 3,00 % | | |
| CGU-2-F | 4,00 % | | |
| PGU-2-F | 10,00 % | | |
| CUQU-3-F | 16,00 % | | |
| CCP-V-1 | 3,00 % | | |

### Beispiel 52

| | | | |
|---|---|---|---|
| CCP-30CF₃ | 8,00 % | Klärpunkt [°C]: | +80,5 |
| CCP-40CF₃ | 6,00 % | Δn [589 nm, 20 °C]: | +0,1060 |
| CCP-50CF₃ | 2,00 % | γ₁ [20 °C, m Pa·s]: | 181 |
| CCP-2F.F.F | 7,00 % | d · Δn [20 °C]: | 0,50 |
| CGZP-2-OT | 13,50 % | Verdrillung [°]: | 90 |
| CGZP-3-OT | 9,50 % | V₁₀ [V]: | 0,97 |
| CCZU-2-F | 4,00 % | | |
| CCZU-3-F | 15,00 % | | |
| CCZU-5-F | 3,00 % | | |
| CGU-3-F | 2,00 % | | |
| PGU-2-F | 9,00 % | | |
| PGU-3-F | 3,00 % | | |
| CUQU-2-F | 7,00 % | | |
| CUQU-3-F | 9,00 % | | |
| CCP-V-1 | 2,00 % | | |

### Beispiel 53

| | | | |
|---|---|---|---|
| CCP-20CF₃ | 8,00 % | S → N [°C]: | < -40,0 |
| CCP-30CF₃ | 8,00 % | Klärpunkt [°C]: | +72,0 |
| CGZP-2-OT | 12,00 % | Δn [589 nm, 20 °C]: | +0,1056 |
| CGZP-3-OT | 8,00 % | γ₁ [20 °C, m Pa·s]: | 131 |
| CCZU-2-F | 3,00 % | d · Δn [20 °C]: | 0,50 |
| CCZU-3-F | 13,00 % | Verdrillung [°]: | 90 |
| CUQU-2-F | 6,00 % | V₁₀ [V]: | 1,02 |
| CUQU-3-F | 6,00 % | | |
| CUQU-5-F | 2,00 % | | |
| CGU-2-F | 5,00 % | | |
| CGU-3-F | 6,00 % | | |
| PGU-2-F | 7,00 % | | |
| PGU-3-F | 5,00 % | | |
| CC-3-V1 | 9,00 % | | |
| CCH-35 | 2,00 % | | |

### Beispiel 54

| | | | |
|---|---|---|---|
| CC-3-V | 4,00 % | S → N [°C]: | < -30,0 |
| CCP-30CF₃ | 8,00 % | Klärpunkt [°C]: | +79,5 |
| CCP-40CF₃ | 7,50 % | Δn [589 nm, 20 °C]: | +0,1058 |
| CCP-2F.F.F | 10,00 % | γ₁ [20 °C, m Pa·s]: | 157 |
| CGZP-2-OT | 14,00 % | d · Δn [20 °C]: | 0,50 |
| CGZP-3-OT | 10,00 % | Verdrillung [°]: | 90 |
| CCZU-2-F | 4,00 % | V₁₀ [V]: | 0,95 |
| CCZU-3-F | 15,00 % | | |
| CCZU-5-F | 3,00 % | | |
| PGU-2-F | 4,50 % | | |
| PUQU-3-F | 20,00 % | | |

### Beispiel 55

| | | | |
|---|---|---|---|
| CC-3-V1 | 8,00 % | Klärpunkt [°C]: | +87,5 |
| CC-5-V | 8,00 % | Δn [589 nm, 20 °C]: | +0,0876 |
| CCQU-2-F | 12,00 % | d · Δn [20 °C]: | 0,50 |
| CCQU-3-F | 13,00 % | Verdrillung [°]: | 90 |
| CCP-2F.F.F | 4,00 % | V₁₀ [V]: | 1,58 |
| CCG-V-F | 4,00 % | | |
| BCH-3F.F.F | 7,00 % | | |
| CGU-2-F | 10,00 % | | |
| CGU-3-F | 6,00 % | | |
| ECCP-3F.F | 8,00 % | | |
| ECCP-5F.F | 8,00 % | | |
| CCP-V-1 | 11,00 % | | |
| CBC-33 | 1,00 % | | |

### Beispiel 56

| | | | |
|---|---|---|---|
| CC-5-V | 8,00 % | S → N [°C]: | < -40,0 |
| CC-3-V1 | 7,00 % | Klärpunkt [°C]: | +80,5 |
| ECCP-3F.F | 8,00 % | Δn [589 nm, 20 °C]: | +0,0978 |
| ECCP-5F.F | 8,00 % | d · Δn [20 °C]: | 0,50 |
| CCQU-2-F | 12,00 % | Verdrillung [°]: | 90 |
| CCQU-3-F | 11,00 % | V₁₀ [V]: | 1,50 |
| BCH-3F.F.F | 15,00 % | | |
| BCH-2F.F | 8,00 % | | |
| BCH-3F.F | 5,00 % | | |
| CGU-2-F | 10,00 % | | |
| BCH-32 | 5,00 % | | |
| CCP-V-1 | 3,00 % | | |

### Beispiel 57

| | | | |
|---|---|---|---|
| CCP-2F.F.F | 8,00 % | S → N [°C]: | < -40,0 |
| CCP-20CF₃ | 6,00 % | Klärpunkt [°C]: | +79,5 |
| CCP-30CF₃ | 4,00 % | Δn [589 nm, 20 °C]: | +0,0855 |
| CGU-2-F | 10,00 % | d · Δn [20 °C]: | 0,50 |
| CGU-3-F | 4,00 % | Verdrillung [°]**:** | 90 |
| BCH-3F.F.F | 7,00 % | V₁₀ [V]: | 1,24 |
| BCH-32 | 2,00 % | | |
| CCZU-2-F | 4,00 % | | |
| CCZU-3-F | 14,00 % | | |
| CCG-V-F | 10,00 % | | |
| CC-3-V1 | 9,00 % | | |
| CCQU-2-F | 11,00 % | | |
| CCQU-3-F | 11,00 % | | |

### Beispiel 58

| | | | |
|---|---|---|---|
| CCP-2F.F.F | 10,00 % | S → N [°C]: | < -40,0 |
| CCP-3F.F.F | 10,00 % | Klärpunkt [°C]: | +79,0 |
| CCP-5F.F.F | 5,00 % | Δn [589 nm, 20 °C]: | +0,0865 |
| CCP-20CF₃ | 8,00 % | d · Δn [20 °C]: | 0,50 |
| CCP-30CF₃ | 8,00 % | Verdrillung [°]: | 90 |
| CGU-2-F | 10,00 % | V₁₀ [V]: | 1,24 |
| CGU-3-F | 5,00 % | | |
| BCH-3F.F.F | 6,00 % | | |
| BCH-32 | 2,00 % | | |
| CCG-V-F | 6,00 % | | |
| CC-3-V1 | 3,00 % | | |
| CCQU-2-F | 8,00 % | | |
| CCQU-3-F | 10,00 % | | |
| CCQU-5-F | 11,00 % | | |

### Beispiel 59

| | | | |
|---|---|---|---|
| CC-5-V | 18,00% | S → N [°C]: | < -40,0 |
| CC-3-V1 | 7,00 % | Klärpunkt [°C]: | +72,0 |
| CCH-35 | 3,00 % | Δn [589 nm, 20 °C]: | +0,0842 |
| CCG-V-F | 4,00 % | γ1 [20 °C, m Pa.s]: | 93 |
| CCQU-2-F | 10,00 % | d · Δn [20 °C]: | 0,50 |
| CCQU-3-F | 7,00 % | Verdrillung [°]: | 90 |
| BCH-3F.F.F | 7,00 % | V₁₀ [V]: | 1,28 |
| CGU-2-F | 10,00 % | | |
| CGU-3-F | 8,00 % | | |
| CCZU-2-F | 3,00 % | | |
| CCZU-3-F | 12,00 % | | |
| CGZP-2-OT | 8,00 % | | |
| CGZP-3-OT | 2,00 % | | |
| CCP-V-1 | 1,00 % | | |

### Beispiel 60

| | | | |
|---|---|---|---|
| CCP-20CF₃ | 8,00 % | S → N [°C]: | < -40,0 |
| CCP-30CF₃ | 7,00 % | Klärpunkt [°C]: | +80,5 |
| CCP-40CF₃ | 3,00 % | Δn [589 nm, 20 °C]: | +0,0897 |
| CCP-50CF₃ | 5,00 % | d · Δn [20 °C]: | 0,50 |
| CCP-2F.F.F | 10,00 % | Verdrillung [°]: | 90 |
| CCP-3F.F.F | 5,00 % | V₁₀ [V]: | 1,22 |
| CGU-2-F | 11,00 % | | |
| CGU-3-F | 6,00 % | | |
| BCH-3F.F.F | 9,00 % | | |
| BCH-32 | 3,00 % | | |
| CCQU-2-F | 11,00 % | | |
| CCQU-3-F | 11,00 % | | |
| CCQU-5-F | 11,00 % | | |

### Beispiel 61

| | | | |
|---|---|---|---|
| CGZP-2-OT | 12,00 % | S → N [°C]: | < -40,0 |
| CGZP-3-OT | 3,00 % | Klärpunkt [°C]: | +69,0 |
| CC-5-V | 20,00 % | Δn [589 nm, 20 °C]: | +0,0900 |
| CC-3-V1 | 10,00 % | γ₁ [20 °C, m Pa-s]: | 88 |
| CCP-2F.F.F | 4,00 % | d · Δn [20 °C]: | 0,50 |
| CCP-20CF₃ | 2,00 % | Verdrillung [°]: | 90 |
| BCH-3F.F.F | 8,00 % | V₁₀ [V]: | 1,34 |
| CGU-2-F | 10,00 % | | |
| CGU-3-F | 10,00 % | | |
| BCH-32 | 4,00 % | | |
| CCQU-2-F | 10,00 % | | |
| CCQU-3-F | 7,00 % | | |

### Beispiel 62

| | | | |
|---|---|---|---|
| CC-5-V | 9,00 % | S → N [°C]: | < -40,0 |
| CC-3-V1 | 10,00 % | Klärpunkt [°C]: | +79,0 |
| CCQG-2-F | 12,00 % | Δn [589 nm, 20 °C]: | +0,0998 |
| CCQG-3-F | 12,00 % | γ₁ [20 °C, m Pa·s]: | 114 |
| CCQG-5-F | 9,00 % | d · Δn [20 °C]: | 0,50 |
| BCH-2F.F | 8,00 % | Verdrillung [°]: | 90 |
| BCH-3F.F | 7,00 % | V₁₀ [V]: | 1,51 |
| BCH-3F.F.F | 14,00 % | | |
| CGU-2-F | 10,00 % | | |
| CGU-3-F | 5,00 % | | |
| BCH-32 | 4,00 % | | |

### Beispiel 63

| | | | |
|---|---|---|---|
| CC-5-V | 8,00 % | S → N [°C]: | < -40,0 |
| CC-3-V1 | 10,00 % | Klärpunkt [°C]: | +80,0 |
| CCQG-2-F | 12,00 % | Δn [589 nm, 20 °C]: | +0,0978 |
| CCQG-3-F | 12,00 % | d · Δn [20 °C]: | 0,50 |
| CCQG-5-F | 10,00 % | Verdrillung [°]: | 90 |
| BCH-2F.F | 8,00 % | V₁₀ [V]: | 1,51 |
| BCH-3F.F | 6,00 % | | |
| BCH-3F.F.F | 15,00 % | | |
| CGU-2-F | 10,00 % | | |
| CGU-3-F | 5,00 % | | |
| CCP-V-1 | 2,00 % | | |
| BCH-32 | 2,00 % | | |

### Beispiel 64

| | | | |
|---|---|---|---|
| CCP-2F.F.F | 10,00 % | S → N [°C]: | < -40,0 |
| CCP-3F.F.F | 10,00 % | Klärpunkt [°C]: | +74,5 |
| CCP-5F.F.F | 4,00 % | Δn [589 nm, 20 °C]: | +0,0930 |
| CCQG-2-F | 10,00 % | γ₁ [20 °C, m Pa·s]: | 155 |
| CCQG-3-F | 10,00 % | d · Δn [20 °C]: | 0,50 |
| CCP-20CF₃ | 8,00 % | Verdrillung [°]: | 90 |
| CCP-30CF₃ | 7,00 % | V₁₀ [V]: | 1,19 |
| CCP-50CF₃ | 4,00 % | | |
| CGU-2-F | 11,00 % | | |
| CGU-3-F | 11,00 % | | |
| CGU-5-F | 6,00 % | | |
| BCH-3F.F.F | 7,00 % | | |
| BCH-32 | 2,00 % | | |

### Beispiel 65

| | | | |
|---|---|---|---|
| CC-5-V | 6,00 % | S → N [°C]: | < -40,0 |
| CC-3-V1 | 10,00 % | Klärpunkt [°C]: | +82,0 |
| CCQG-2-F | 12,00 % | Δn [589 nm, 20 °C]: | +0,1002 |
| CCQG-3-F | 12,00 % | d · Δn [20 °C]: | 0,50 |
| CCQG-5-F | 10,00 % | Verdrillung [°]: | 90 |
| BCH-2F.F | 8,00 % | V₁₀ [V]: | 1,46 |
| BCH-3F.F | 5,00 % | | |
| BCH-3F.F.F | 15,00 % | | |
| CGU-2-F | 10,00 % | | |
| CGU-3-F | 6,00 % | | |
| BCH-32 | 2,00 % | | |
| CCP-V-1 | 4,00 % | | |

### Beispiel 66

| | | | |
|---|---|---|---|
| CC-3-V1 | 6,00 % | S → N [°C]: | < -40,0 |
| CC-5-V | 13,00 % | Klärpunkt [°C]: | +86,5 |
| CCQG-2-F | 12,00 % | Δn [589 nm, 20 °C]: | +0,08750 |
| CCQG-3-F | 12,00 % | γ₁ [20 °C, m Pa·s]: | 121 |
| CCQG-5-F | 10,00 % | d · Δn [20 °C]: | 0,50 |
| CCP-20CF₃ | 3,00 % | Verdrillung [°]: | 90 |
| CCP-30CF₃ | 5,00 % | V₁₀ [V]: | 1,62 |
| ECCP-3F.F | 10,00 % | | |
| BCH-3F.F.F | 10,00 % | | |
| CGU-2-F | 10,00 % | | |
| CGU-3-F | 7,00 % | | |
| BCH-32 | 2,00 % | | |

### Beispiel 67

| | | | |
|---|---|---|---|
| CC-5-V | 8,00 % | S → N [°C]: | < -40,0 |
| CC-3-V1 | 7,00 % | Klärpunkt [°C]: | +78,0 |
| ECCP-3F.F | 9,00 % | Δn [589 nm, 20°C:] | +0,0984 |
| ECCP-5F.F | 9,00 % | d · Δn [20 °C]: | 0,50 |
| CCQU-2-F | 12,00 % | Verdrillung [°]: | 90 |
| CCQU-3-F | 11,00 % | V₁₀ [V]: | 1,47 |
| BCH-3F.F.F | 15,00 % | | |
| BCH-2F.F | 8,00 % | | |
| BCH-3F.F | 6,00 % | | |
| CGU-2-F | 10,00 % | | |
| BCH-32 | 5,00 % | | |

### Beispiel 68

| | |
|---|---|
| CC-3-V1 | 8,00 % |
| CC-5-V | 6,00 % |
| CCP-20CF₃ | 6,00 % |
| CCQU-2-F | 11,00 % |
| CCQU-3-F | 11,00 % |
| CCP-2F.F.F | 6,00 % |
| CGU-2-F | 11,00 % |
| CGU-3-F | 10,00 % |
| CCZU-2-F | 4,00 % |
| CCZU-3-F | 14,00 % |
| CGZP-2-OT | 11,00 % |
| CGZP-3-OT | 2,00 % |

### Beispiel 69

| | | | |
|---|---|---|---|
| CCP-2F.F.F | 6,00 % | S → N [°C]: | < -40,0 |
| CCP-3F.F.F | 8,00 % | Klärpunkt [°C]: | +81,5 |
| CCP-5F.F.F | 4,00 % | Δn [589 nm, 20 °C]: | +0,0808 |
| CGU-2-F | 10,00 % | d · Δn [20 °C]: | 0,50 |
| CGU-3-F | 12,00 % | Verdrillung [°]: | 90 |
| CCZU-2-F | 5,00 % | V₁₀ [V]: | 1,01 |
| CCZU-3-F | 14,00 % | | |
| CCZU-5-F | 4,00 % | | |
| CCQU-2-F | 10,00 % | | |
| CCQU-3-F | 12,00 % | | |
| CCQU-5-F | 8,00 % | | |
| CCOC-3-3 | 2,00 % | | |
| CCOC-4-3 | 3,00 % | | |
| CCOC-3-5 | 2,00 % | | |

### Beispiel 70

| | | | |
|---|---|---|---|
| CGU-2-F | 9,00 % | Klärpunkt [°C]: | +74,0 |
| CCZU-2-F | 5,00 % | Δn [589 nm, 20 °C]: | +0,0783 |
| CCZU-3-F | 14,00 % | | |
| CCZU-5-F | 4,00 % | | |
| CCQU-2-F | 10,00 % | | |
| CCQU-3-F | 12,00 % | | |
| CCQU-5-F | 8,00 % | | |
| CDU-2-F | 10,00 % | | |
| CDU-3-F | 10,00 % | | |
| CDU-5-F | 6,00 % | | |
| CGZP-2-OT | 8,00 % | | |
| CGZP-3-OT | 4,00 % | | |

### Beispiel 71

| | | | |
|---|---|---|---|
| CGU-2-F | 5,00 % | S → N [°C]: | < -40,0 |
| CCZU-2-F | 4,00 % | Klärpunkt [°C]: | +78,5 |
| CCZU-3-F | 14,00 % | Δn [589 nm, 20 °C]: | +0,0809 |
| CCZU-5-F | 4.00 % | d · Δn [20 °C]: | 0,50 |
| CCQU-2-F | 10,00 % | Verdrillung [°]: | 90 |
| CCQU-3-F | 12,00 % | V₁₀ [V]: | 0,90 |
| CCQU-5-F | 5,00 % | | |
| CDU-2-F | 10,00 % | | |
| CDU-3-F | 12,00 % | | |
| CDU-5-F | . 6,00 % | | |
| CGZP-2-OT | 12,00 % | | |
| CGZP-3-OT | 6,00 % | | |

### Beispiel 72

| | | | |
|---|---|---|---|
| CC-3-V1 | 4,00 % | S → N [°C]: | < -40,0 |
| CCH-35 | 5,00 % | Klärpunkt [°C]: | +71,5 |
| CC-5-V | 17,00 % | Δn [589 nm, 20 °C]: | +.0,0772 |
| CCH-3CF₃ | 4,00 % | γ₁ [20 °C, m Pa·s]: | 96 |
| CCQU-2-F | 10,00 % | d · Δn [20 °C]: | 0.50 |
| CCQU-3-F | 9,00 % | Verdrillung [°]: | 90 |
| CCP-2F.F.F | 4,00 % | V₁₀ [V]: | 1,29 |
| CGU-2-F | 9,00 % | | |
| CGU-3-F | 6,00 % | | |
| CCZU-2-F | 4,00 % | | |
| CCZU-3-F | 14,00 % | | |
| CGZP-2-OT | 9,00 % | | |
| CGZP-3-OT | 5,00 % | | |

### Beispiel 73

| | | | |
|---|---|---|---|
| CCP-2F.F.F | 11,00 % | S → N [°C]: | < -40,0 |
| CCP-3F.F.F | 12,00 % | Klärpunkt [°C]: | +79,0 |
| CCP-5F.F.F | 4,00 % | Δn [589 nm, 20 °C]: | +0,0804 |
| CGU-2-F | 8,00 % | γ₁ [20 °C, m Pa·s]: | 177 |
| CGU-3-F | 4,00 % | d · Δn [20 °C]: | 0,50 |
| CCZU-2-F | 5,00 % | Verdrillung [°]: | 90 |
| CCZU-3-F | 14,00 % | V₁₀ [V]: | 1,00 |
| CCZU-5-F | 4,00 % | | |
| CCQU-2-F | 10,00 % | | |
| CCQU-3-F | 12,00 % | | |
| CCQU-5-F | 8,00 % | | |
| CGZP-2-OT | 8,00 % | | |

### Beispiel 74

| | |
|---|---|
| CCP-2F.F.F | 8,00 % |
| CCP-3F.F.F | 4,00 % |
| CCZU-2-F | 5,00 % |
| CCZU-3-F | 14,00 % |
| CGU-2-F | 7,00 % |
| CGZP-2-OT | 10,00 % |
| CGZP-3-OT | 5,00 % |
| CCQU-2-F | 9,00 % |
| CCQU-3-F | 12,00 % |
| CCQU-5-F | 6,00 % |
| CDU-2-F | 10,00 % |
| CDU-3-F | 10,00 % |

### Beispiel 75

| | |
|---|---|
| CC-5-V | 18,00 % |
| CCH-3-CF₃ | 5,00 % |
| CCQU-2-F | 9,00 % |
| CCQU-3-F | 9,00 % |
| CCQU-5-F | 5,00 % |
| CCP-2F.F.F | 9,00 % |
| CCP-3F.F.F | 4,00 % |
| CCG-V-F | 5,00 % |
| CGU-2-F | 9,00 % |
| CCZU-2-F | 3,00 % |
| CCZU-3-F | 13,00 % |
| CGZP-2-OT | 11,00 % |

### Beispiel 76

| | | | |
|---|---|---|---|
| CC-3-V1 | 4,00 % | S → N [°C]: | < +40,0 |
| CC-5-V | 17,00 % | Klärpunkt [°C]: | -69,0 |
| CCH-3CF₃ | 6,00 % | Δn [589 nm, 20 °C]: | +0,0738 |
| CCQU-2-F | 9,00 % | γ₁ [20 °C, m Pa·s]: | 97 |
| CCQU-3-F | 10,00 % | d · Δn [20 °C]: | 0,50 |
| CCQU-5-F | 5,00 % | Verdrillung [°]: | 90 |
| CCP-2F.F.F | 10,00 % | V₁₀ [V]: | 1,22 |
| BCH-3F.F.F | 2,50 % | | |
| CGU-2-F | 8,50 % | | |
| CCZU-2-F | 3,00 % | | |
| CCZU-3-F | 14,00 % | | |
| CGZP-2-OT | 9,00 % | | |
| CGZP-3-OT | 2,00 % | | |

## Patentansprüche

1. Flüssigkristallines Medium auf der Basis eines Gemisches von polaren Verbindungen mit positiver dielektrischer Anisotropie, **dadurch gekennzeichnet, dass** es
eine oder mehrere Alkenylverbindungen der Formel I, 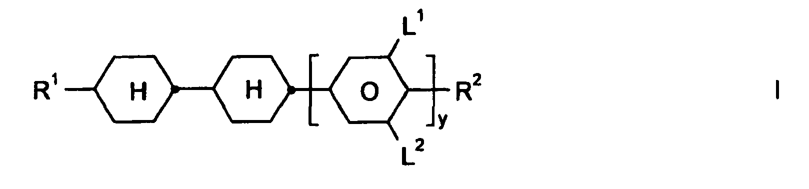 eine, zwei oder mehr Verbindungen der Formeln IA-1 - IA-15, 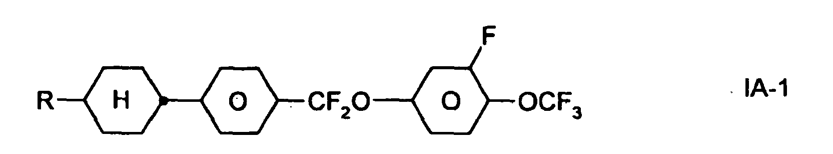 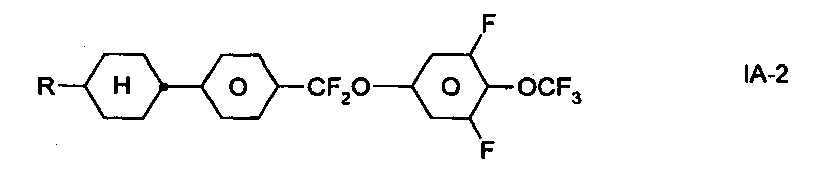 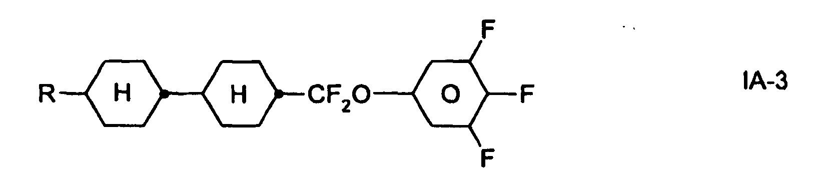 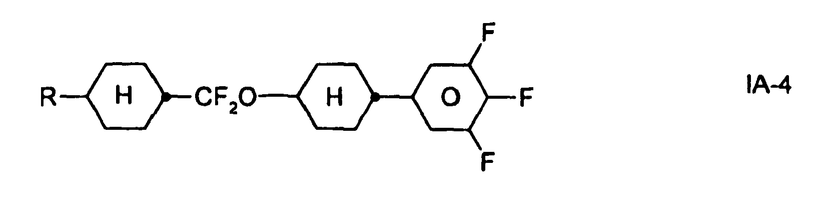 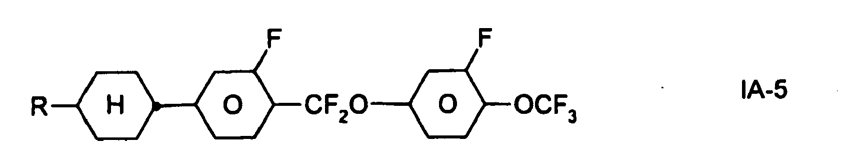 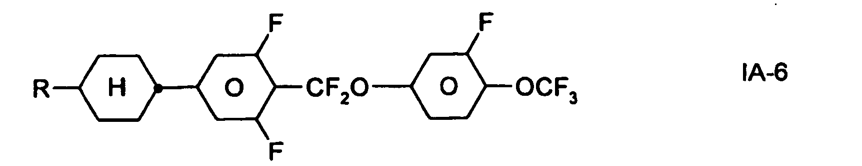 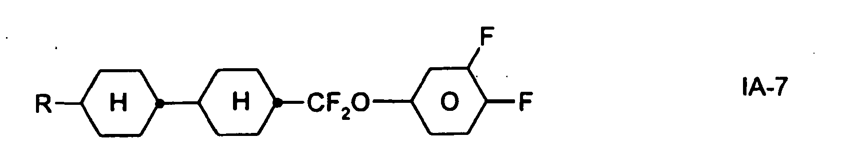 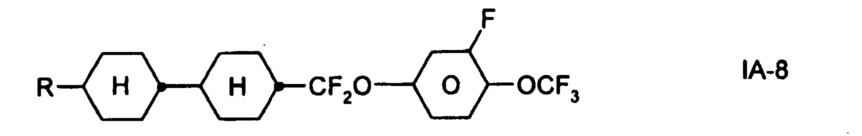 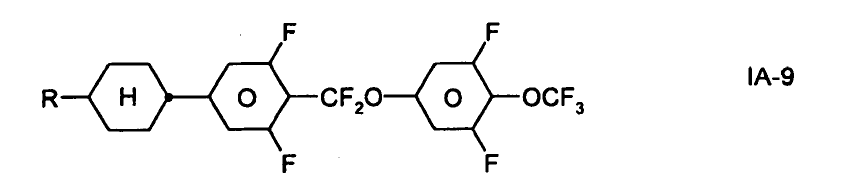 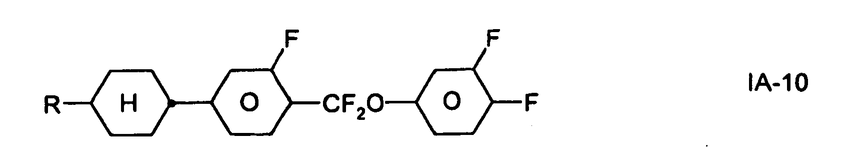 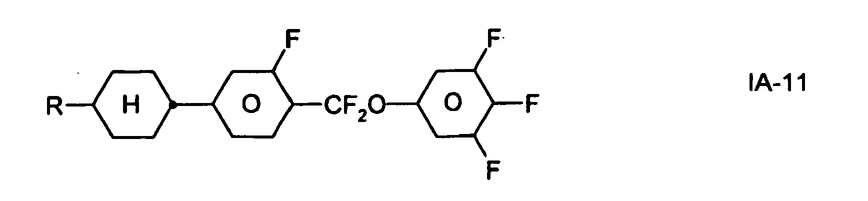 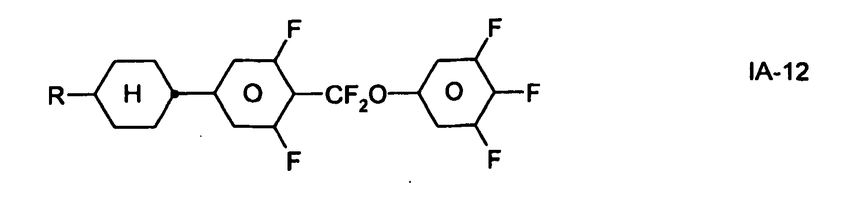 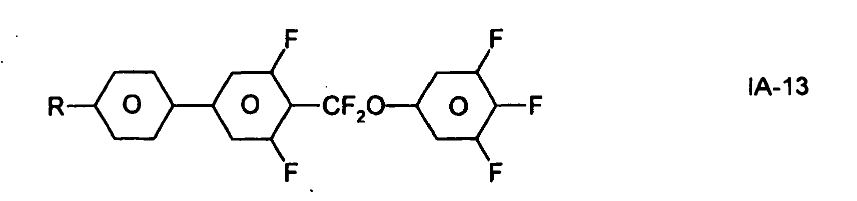 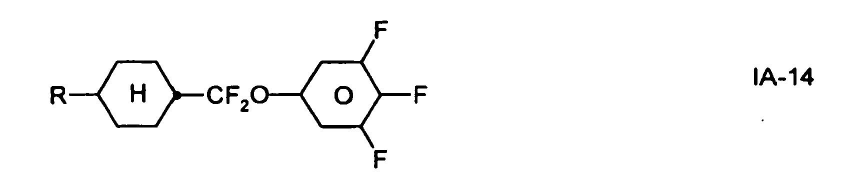 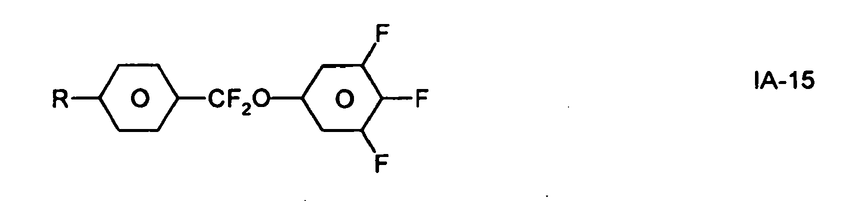 und
eine oder mehrere Verbindungen ausgewählt aus der Gruppe bestehend aus den allgemeinen Formeln II, III, IV, V und VI, 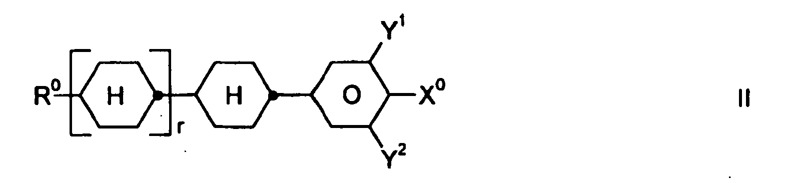 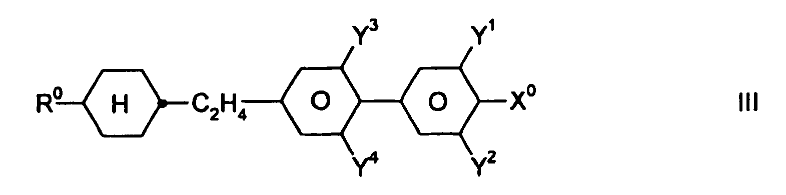 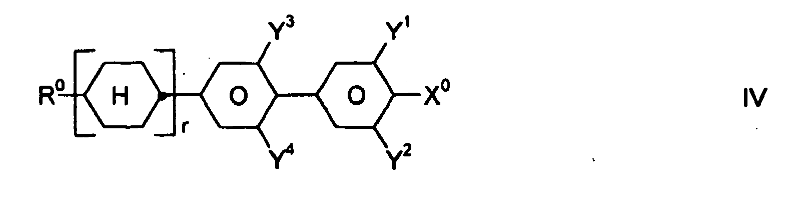 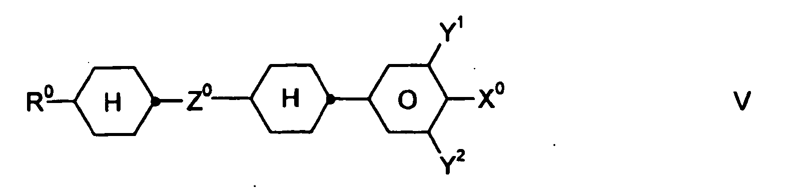 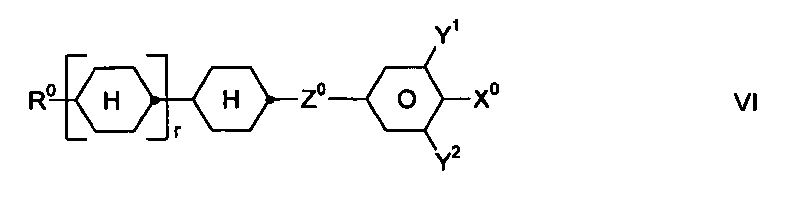 enthält, worin die einzelnen Reste folgende Bedeutungen besitzen:
R einen halogenierten oder unsubstituierten Alkyl- oder Alkoxyrest mit 1 bis 15 C-Atomen, wobei in diesen Resten auch eine oder mehrere CH₂-Gruppen jeweils unabhängig voneinander durch -C≡C-, -CH=CH-, -O-, -CO-O- oder -Q-CO- so ersetzt sein können, dass O-Atome nicht direkt miteinander verknüpft sind,
R¹ ein Alkenylrest mit 2 bis 7 C-Atomen,
R² eine der Bedeutungen von R oder, falls y 1 oder 2 ist, auch Q-Y,
Q CF₂, OCF₂, CFH, OCFH, OCHFCF₂, OCF₂CHFCF₂ oder eine Einfachbindung,
Y F oder Cl,
y 0, 1 oder 2,
L¹ und L² jeweils unabhängig voneinander H oder F,
R⁰ n-Alkyl, Oxaalkyl, Fluoralkyl oder Alkenyl mit jeweils bis zu 9 C-Atomen,
x⁰ F, Cl, halogeniertes Alkyl, Alkenyl oder Alkoxy mit bis zu 6 C-Atomen,
Z⁰ -C₂F₄-, -C₂H₄-, -(CH₂)₄-, -OCH₂- oder -CH₂O-,
Y¹ und Y² jeweils F,
Y³ und Y⁴ jeweils unabhängig voneinander H oder F, und
r 0 oder 1.

2. Medium nach Anspruch 1, **dadurch gekennzeichnet, dass** es eine oder mehrere Verbindungen der folgenden Formeln enthält, 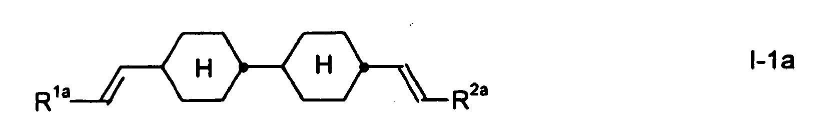 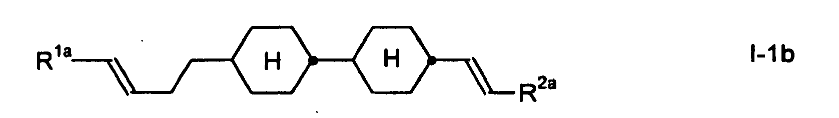 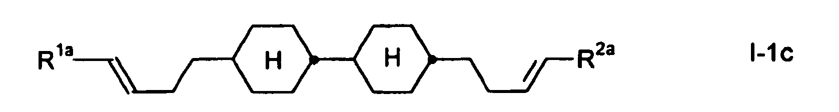 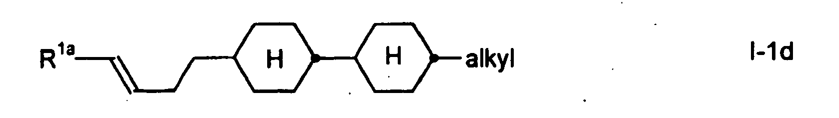 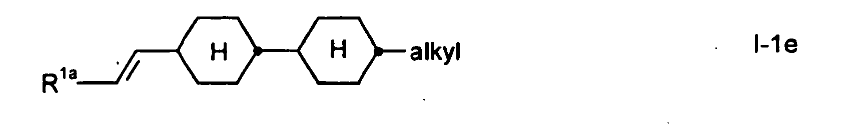 worin R^{1a} und R^{2a} jeweils unabhängig voneinander H, CH₃, C₂H₅ oder n-C₃H₇ und alkyl eine Alkylgruppe mit 1 bis 7 C-Atomen bedeuten.

3. Medium nach Anspruch 1 oder 2, **dadurch gekennzeichnet, dass** es zusätzlich eine oder mehrere Verbindungen ausgewählt aus der Gruppe bestehend aus den allgemeinen Formeln VII bis XIII, 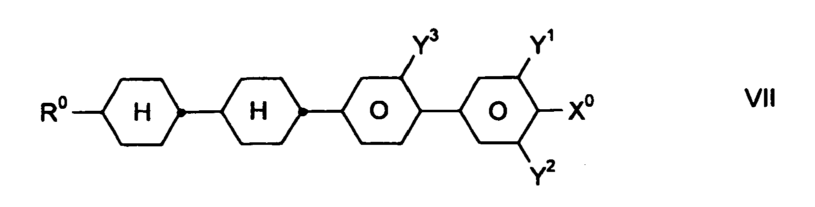 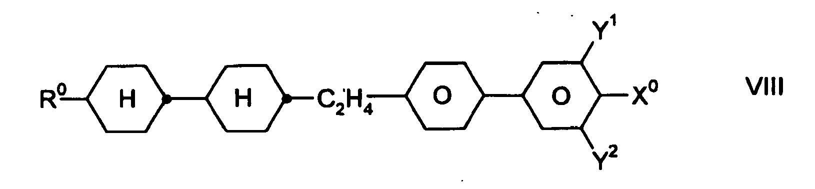 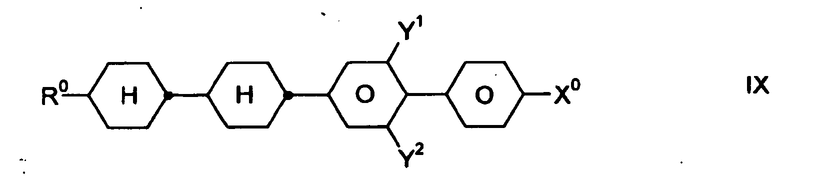 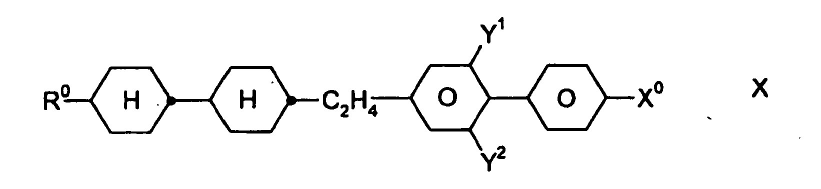 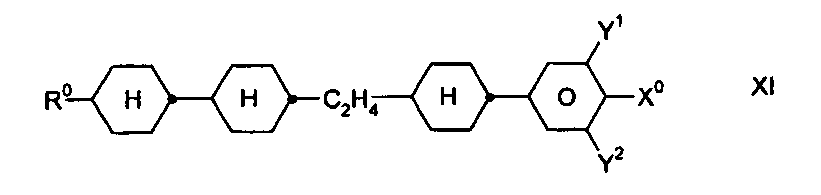 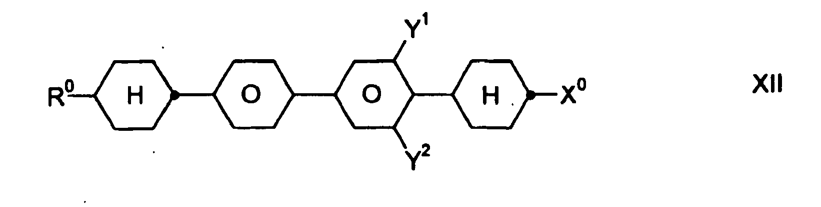 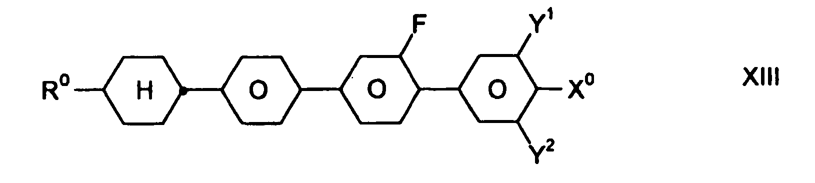 worin R⁰, X⁰, Y¹ und Y² jeweils unabhängig voneinander eine der in Anspruch 1 angegebene Bedeutung haben und Y³ H oder F bedeuten,
enthält.

4. Medium nach mindestens einem der Ansprüche 1 bis 3, **dadurch gekennzeichnet, dass** es zusätzlich eine oder mehrere Verbindungen der Formel XVIII, 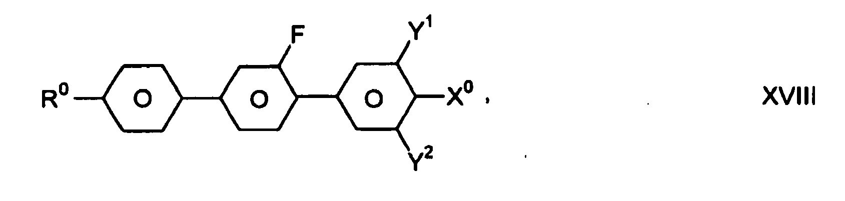 worin R⁰, X⁰, Y¹, Y² die in Anspruch 1 angegebenen Bedeutungen haben,
enthält.

5. Medium nach mindestens einem der Ansprüche 1 bis 4, **dadurch gekennzeichnet, dass** der Anteil an Verbindungen der Formeln IA-1 - IA-15 und I bis VI zusammen im Gesamtgemisch mindestens 50 Gew.-% beträgt.

6. Medium nach mindestens einem der Ansprüche 1 bis 5, **dadurch gekennzeichnet, dass** es zusätzlich eine oder mehrere Verbindungen der Formeln Ea bis Ed enthält, 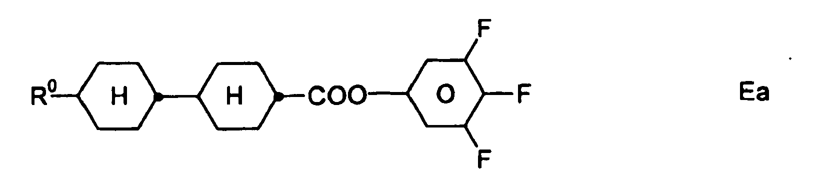 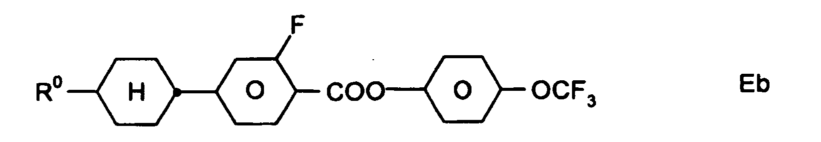 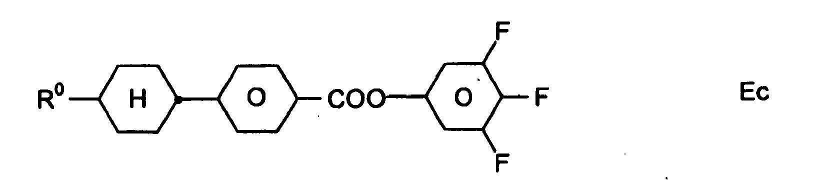 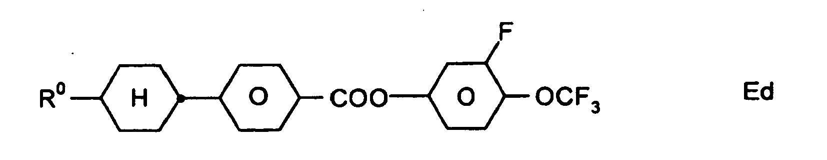 worin R⁰ die in Anspruch 1 angegebene Bedeutung hat.

7. Medium nach mindestens einem der Ansprüche 1 bis 6, **dadurch gekennzeichnet, dass** es eine oder mehrere Verbindungen der Formeln IIb, IIe oder IIg enthält, 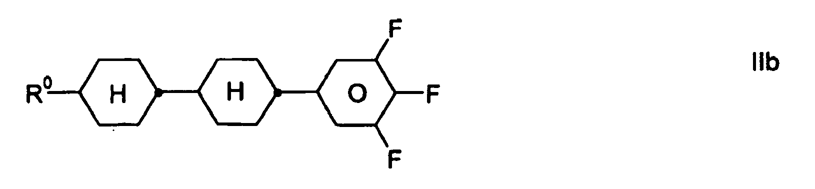 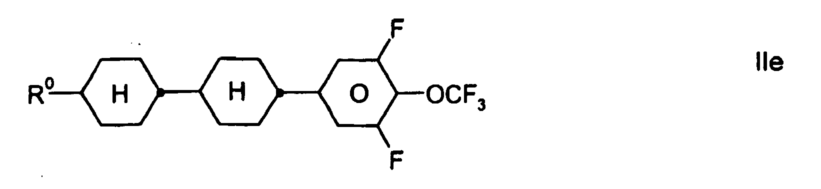 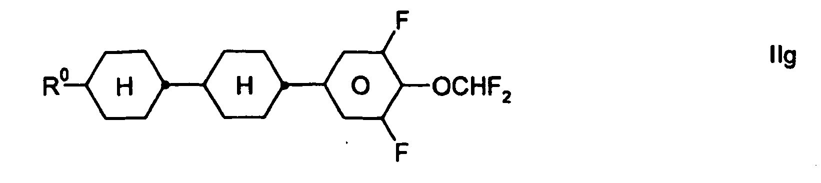 worin R⁰ die in Anspruch 1 angegebene Bedeutung hat.

8. Medium nach mindestens einem der Ansprüche 1 bis 7, **dadurch gekennzeichnet, dass** der Anteil an Verbindungen der Formel IA-1 - IA-15 im Gesamtgemisch 10 bis 50 Gew.% beträgt.

9. Verwendung des flüssigkristallinen Mediums nach mindestens einem der Ansprüche 1 bis 8 für elektrooptische Zwecke.

10. Elektrooptische Flüssigkristallanzeige enthaltend ein flüssigkristallines Medium nach mindestens einem der Ansprüche 1 bis 8.

## Claims

1. Liquid-crystalline medium based on a mixture of polar compounds of positive dielectric anisotropy, **characterised in that** it comprises
one or more alkenyl compounds of the formula I 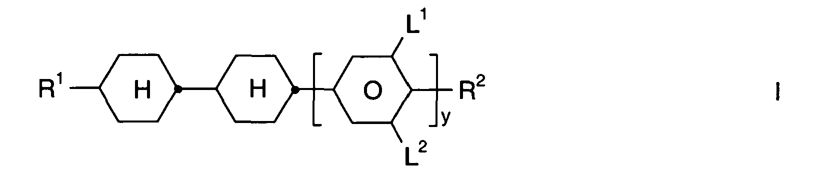 one, two or more compounds of the formulae IA-1 - IA-15 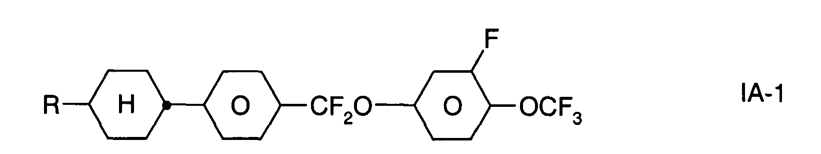 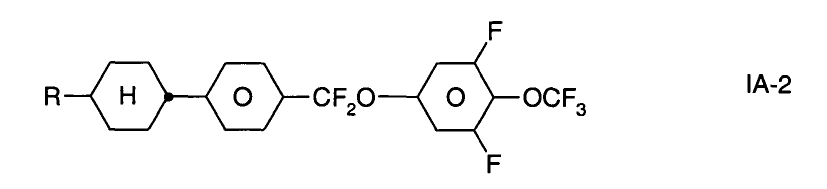 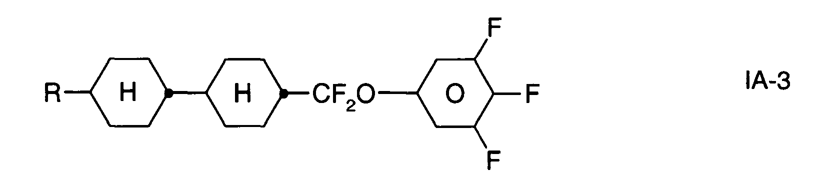 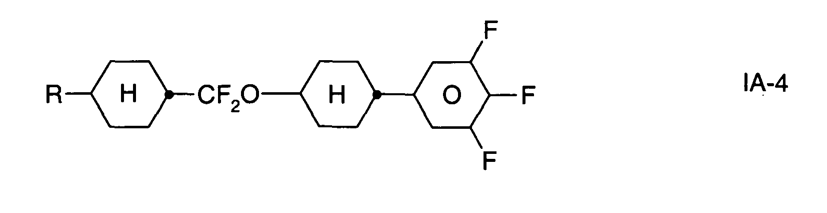 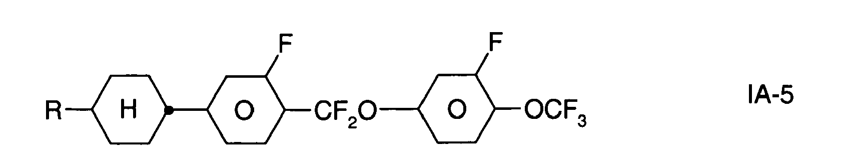 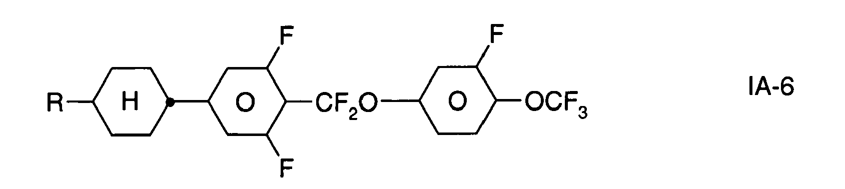 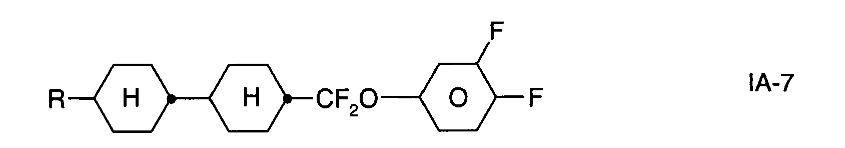 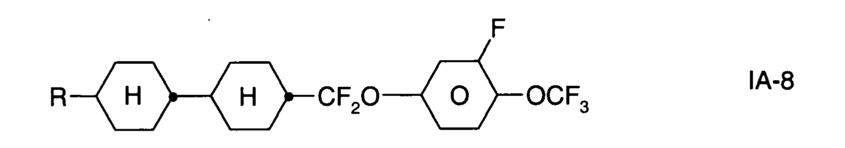 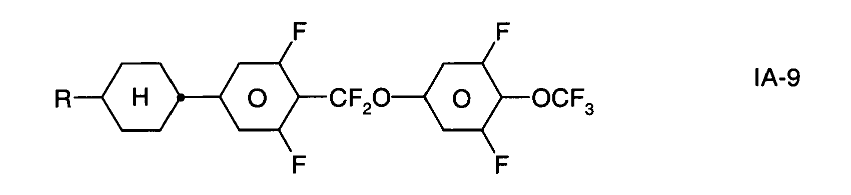 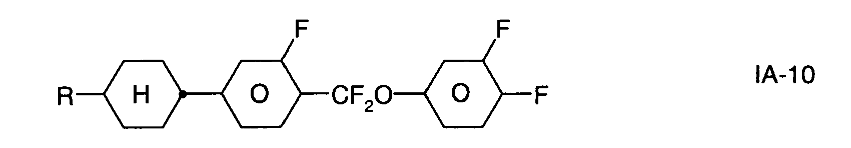 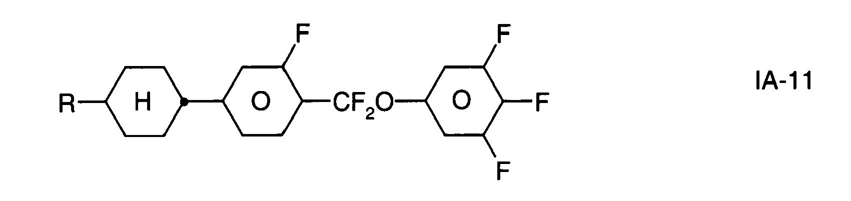 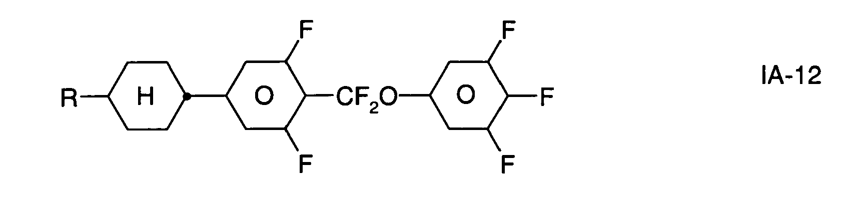 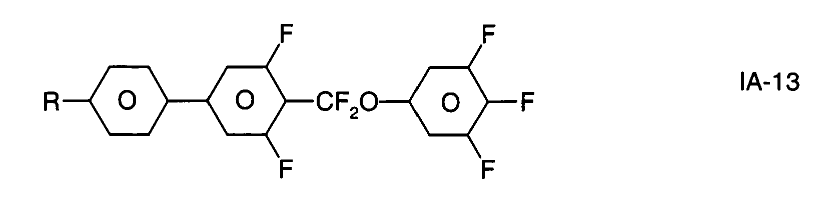 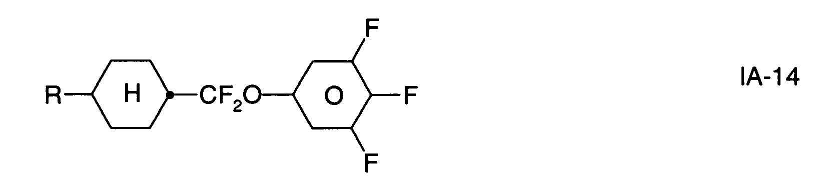 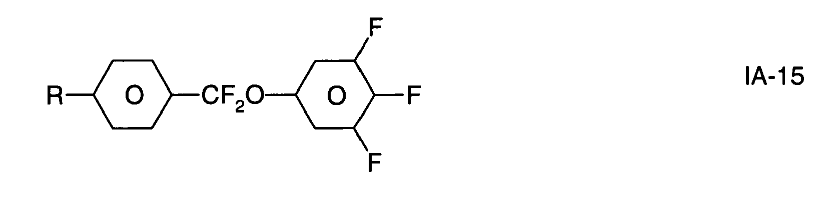 and
one or more compounds selected from the group consisting of the general formulae II, III, IV, V and VI 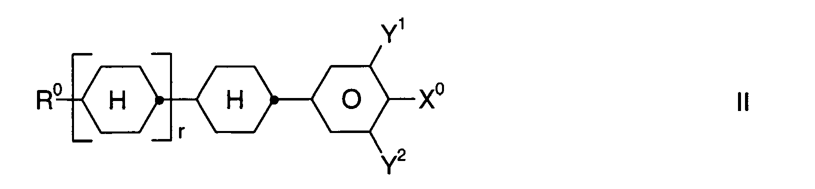 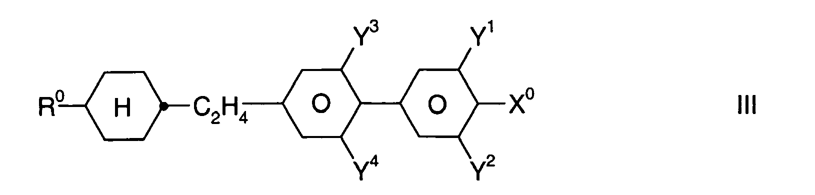 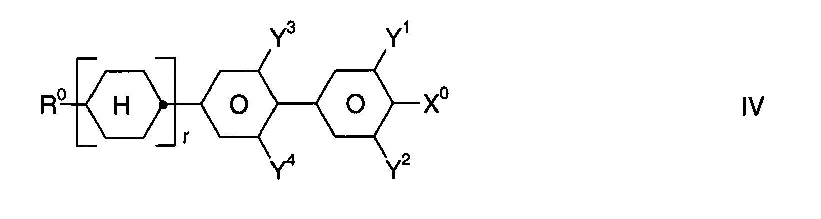 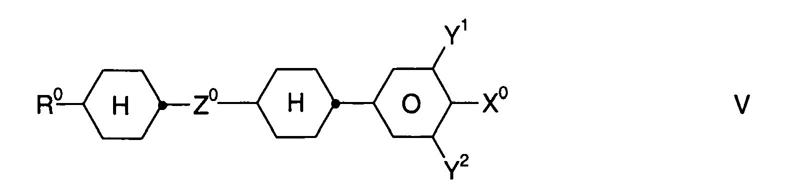 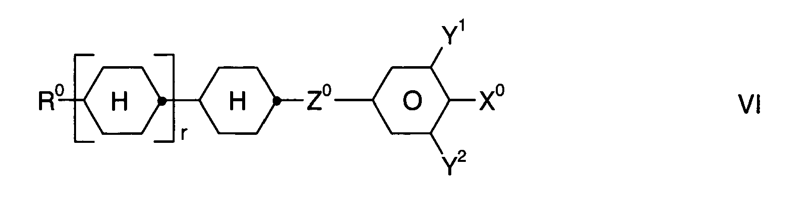 in which the individual radicals have the following meanings:
R denotes a halogenated or unsubstituted alkyl or alkoxy radical having 1 to 15 C atoms, where, in addition, one or more CH₂ groups in these radicals may each be replaced, independently of one another, by -C≡C-, -CH=CH-, -O-, -CO-O- or -O-CO- in such a way that O atoms are not linked directly to one another,
R¹ denotes an alkenyl radical having 2 to 7 C atoms,
R² has one of the meanings of R or, if y is 1 or 2, also denotes Q-Y,
Q denotes CF₂, OCF₂, CFH, OCFH, OCHFCF₂, OCF₂CHFCF₂ or a single bond,
Y denotes F or Cl,
y denotes 0, 1 or 2,
L¹ and L² each, independently of one another, denote H or F,
R⁰ denotes n-alkyl, oxaalkyl, fluoroalkyl or alkenyl, each having up to 9 C atoms,
X⁰ denotes F, Cl, halogenated alkyl, alkenyl or alkoxy having up to 6 C atoms,
Z⁰ denotes -C₂F₄-, -C₂H₄-, -(CH₂)₄-, -OCH₂- or -CH₂O-,
Y¹ and Y² each denote F,
Y³ and Y⁴ each, independently of one another, denote H or F, and
r denotes 0 or 1.

2. Medium according to Claim 1, **characterised in that** it comprises one or more compounds of the following formulae: 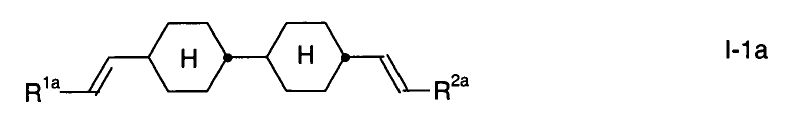 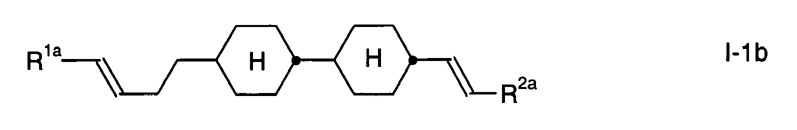 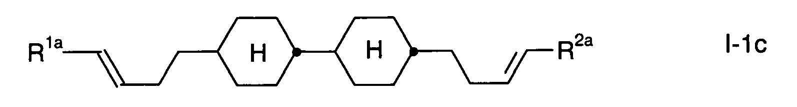 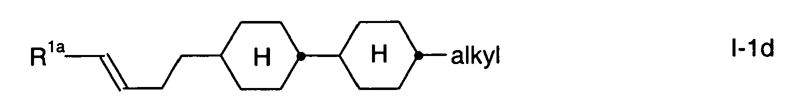 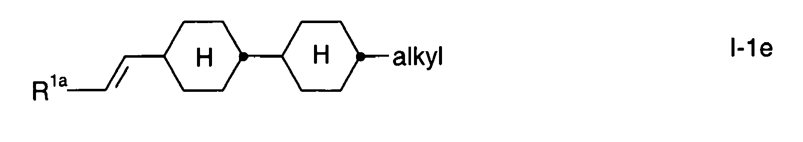 in which R^{1a} and R^{2a} each, independently of one another, denote H, CH₃, C₂H₅ or n-C₃H₇, and alkyl denotes an alkyl group having 1 to 7 C atoms.

3. Medium according to Claim 1 or 2, **characterised in that** it additionally comprises one or more compounds selected from the group consisting of the general formulae VII to XIII 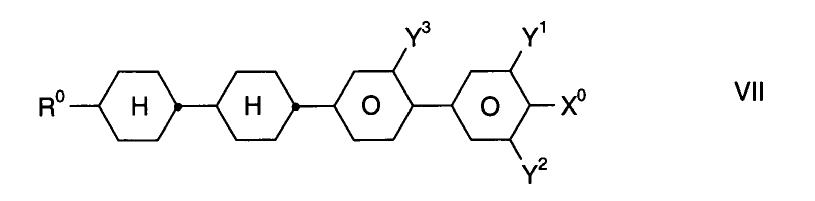 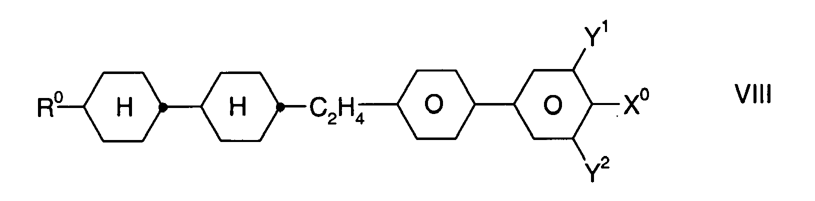 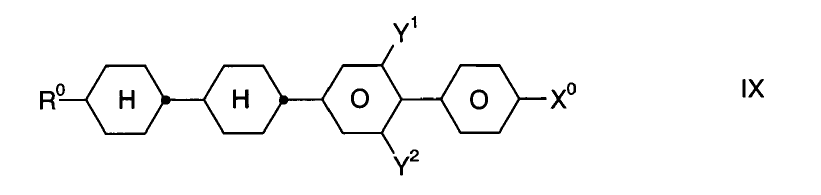 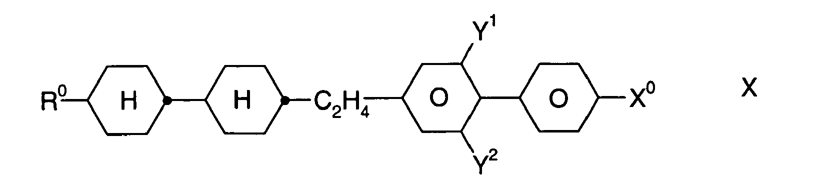 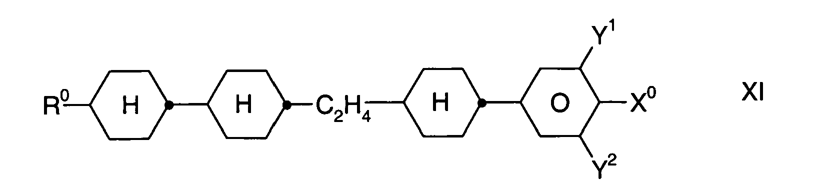 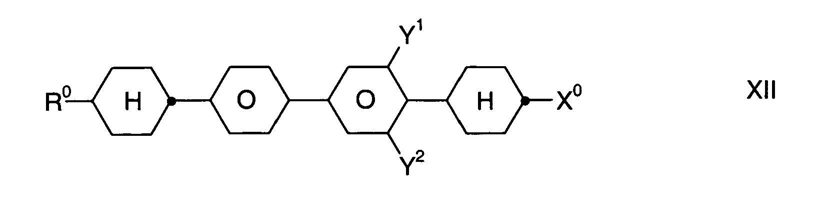 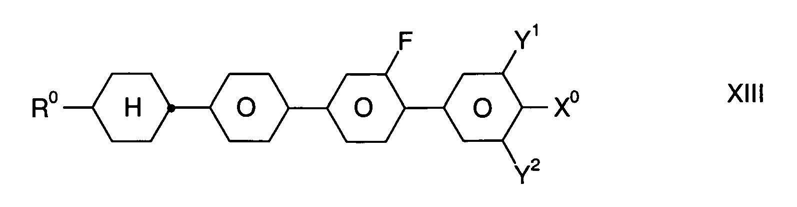 in which R⁰, X⁰, Y¹ and Y² each, independently of one another, have one of the meanings indicated in Claim 1, and Y³ denotes H or F.

4. Medium according to at least one of Claims 1 to 3, **characterised in that** it additionally comprises one or more compounds of the formula XVIII 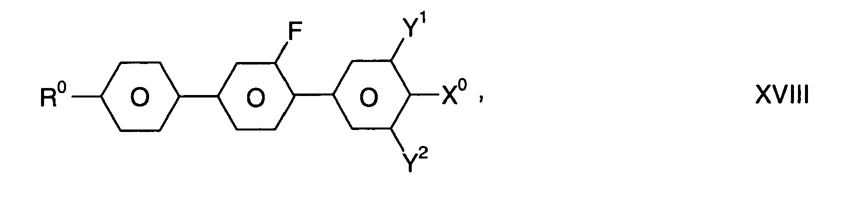 in which R⁰, X⁰, Y¹, Y² have the meanings indicated in Claim 1.

5. Medium according to at least one of Claims 1 to 4, **characterised in that** the proportion of compounds of the formulae IA-1 - IA-15 and I to VI together in the mixture as a whole is at least 50% by weight.

6. Medium according to at least one of Claims 1 to 5, **characterised in that** it additionally comprises one or more compounds of the formulae Ea to Ed 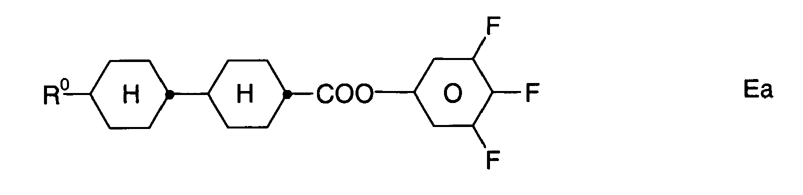 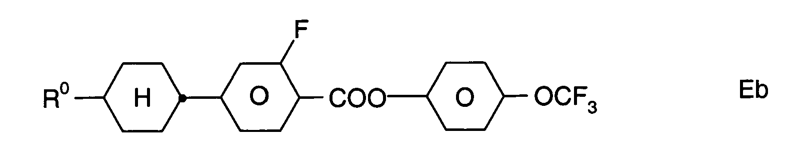 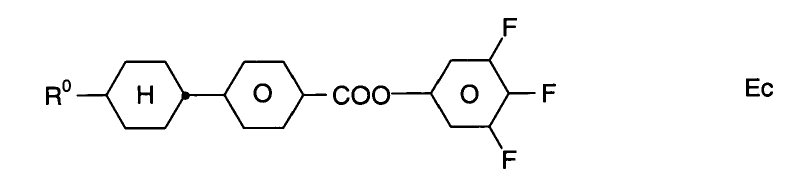 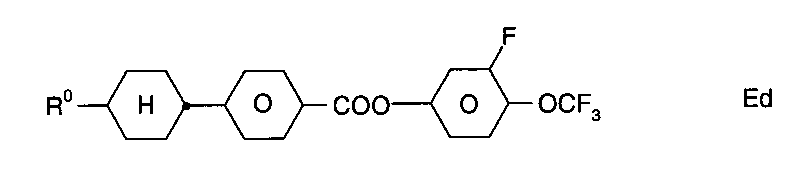 in which R⁰ has the meaning indicated in Claim 1.

7. Medium according to at least one of Claims 1 to 6, **characterised in that** it comprises one or more compounds of the formula IIb, IIe or IIg 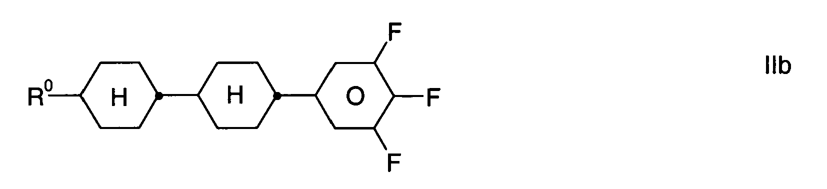 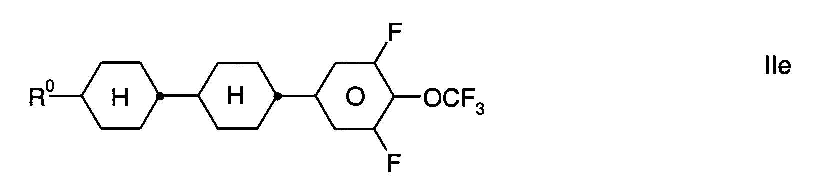 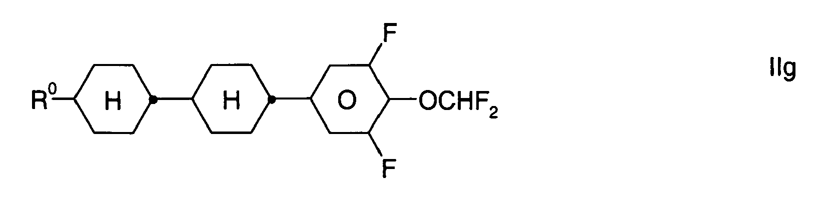 in which R⁰ has the meaning indicated in Claim 1.

8. Medium according to at least one of Claims 1 to 7, **characterised in that** the proportion of compounds of the formulae IA-1 - IA-15 in the mixture as a whole is 10 to 50% by weight.

9. Use of the liquid-crystalline medium according to at least one of Claims 1 to 8 for electro-optical purposes.

10. Electro-optical liquid-crystal display containing a liquid-crystalline medium according to at least one of Claims 1 to 8.

## Revendications

1. Milieu cristallin liquide basé sur un mélange de composés polaires d'anisotropie diélectrique positive, **caractérisé en ce qu'**il comprend
un ou plusieurs composés alkényle de la formule I, 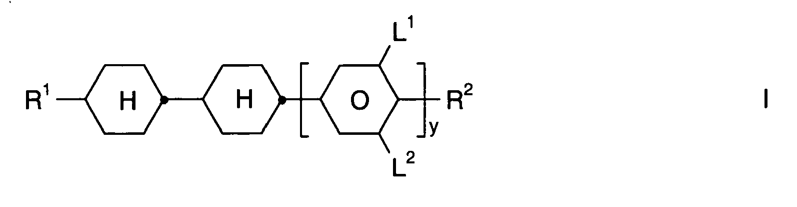 un, deux ou plus de deux composés des formules IA-1 - IA-15, 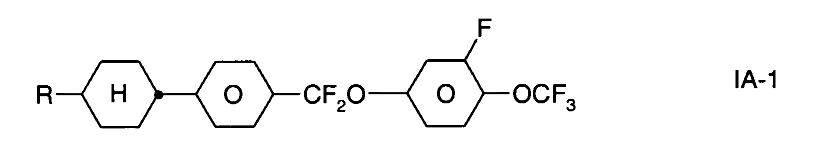 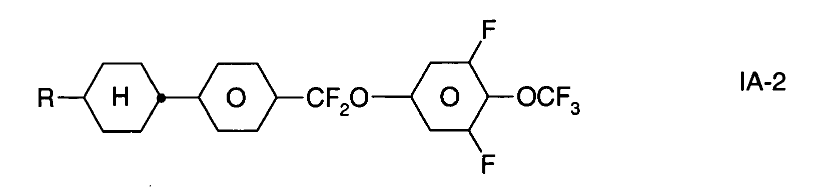 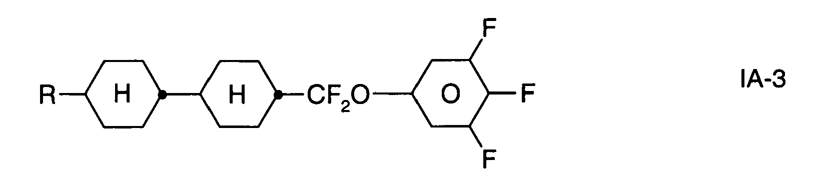 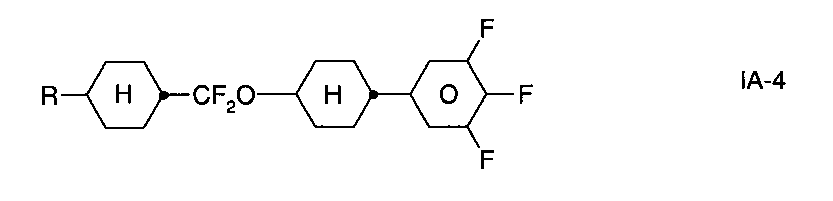 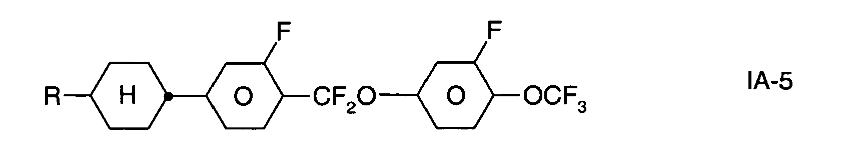 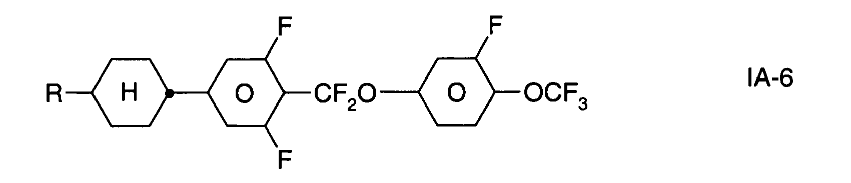 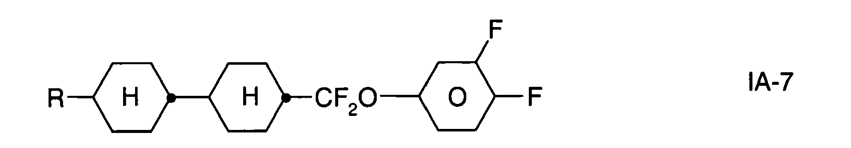 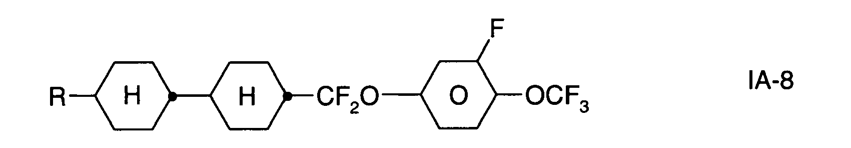 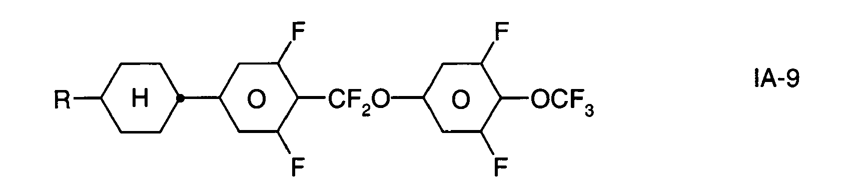 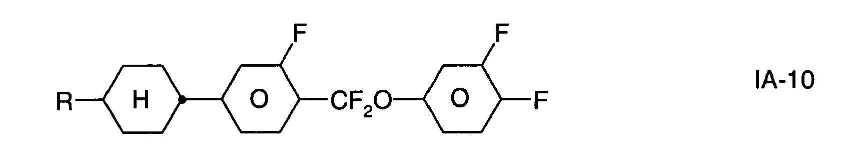 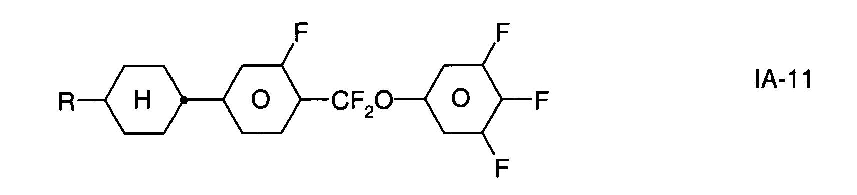 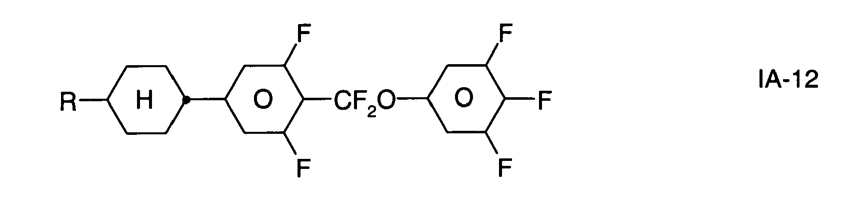 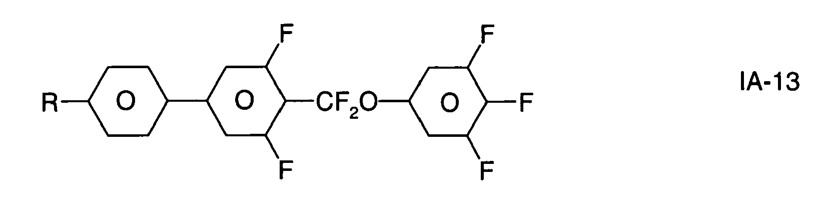 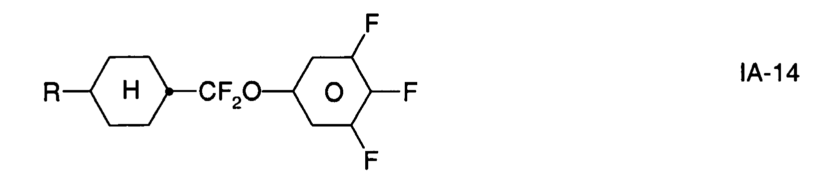 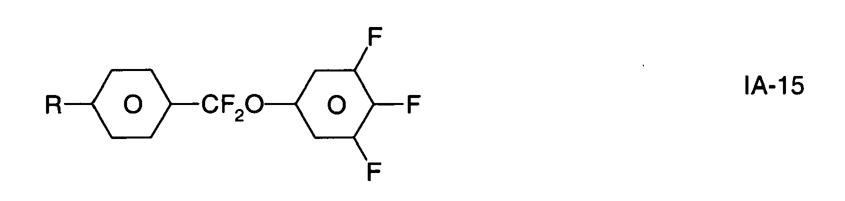 et
un ou plusieurs composés choisis parmi le groupe constitué des formules générales II, III, IV, V et VI, 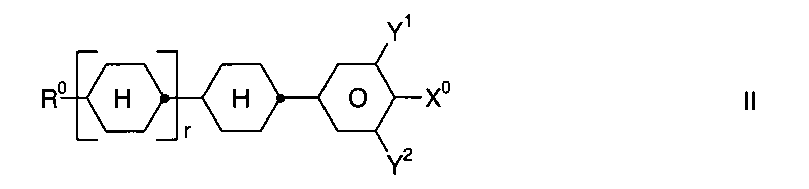 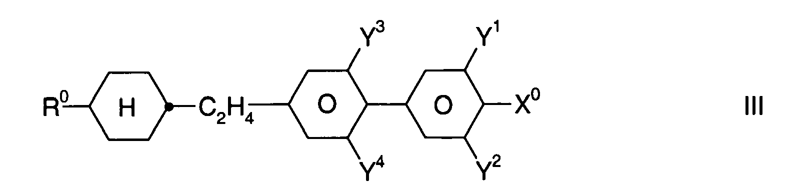 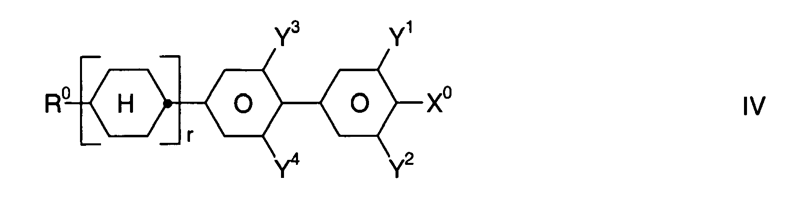 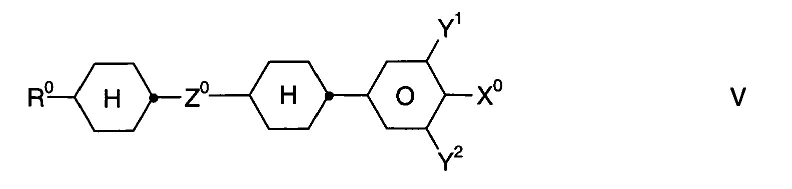 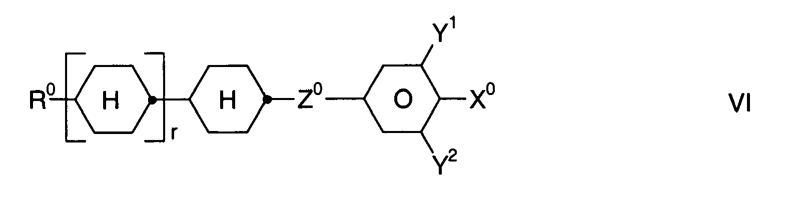 dans lesquelles les radicaux individuels ont les significations suivantes :
R représente un radical alkyle ou alcoxy halogéné ou non substitué ayant 1 à 15 atomes de C, où, en addition, un ou plusieurs groupes CH₂ dans ces radicaux peuvent chacun être remplacés, indépendamment les uns des autres, par -C≡C-, -CH=CH-, -O-, -CO-O- ou -O-CO- de telle sorte que des atomes de O ne soient pas liés directement l'un à l'autre,
R¹ représente un radical alkényle ayant 2 à 7 atomes de C,
R² a une des significations de R ou, si y est 1 ou 2, représente aussi Q-Y,
Q représente CF₂, OCF₂, CFH, OCFH, OCHFCF₂, OCF₂CHFCF₂ ou une liaison simple,
Y représente F ou Cl,
y représente 0, 1 ou 2,
L¹ et L² chacun, indépendamment l'un de l'autre, représentent H ou F,
R⁰ représente n-alkyle, oxaalkyle, fluoroalkyle ou alkényle, chacun ayant jusqu'à 9 atomes de C,
X⁰ représente F, Cl, alkyle, alkényle ou alcoxy halogéné ayant jusqu'à 6 atomes de C,
Z⁰ représente -C₂F₄-, -C₂H₄-, -(CH₂)₄-, -OCH₂- ou -CH₂O-,
Y¹ et Y² chacun représentent F,
Y³ et Y⁴ chacun, indépendamment l'un de l'autre, représentent H ou F, et
r représente 0 ou 1.

2. Milieu selon la revendication 1, **caractérisé en ce qu'**il comprend un ou plusieurs composés des formules suivantes, 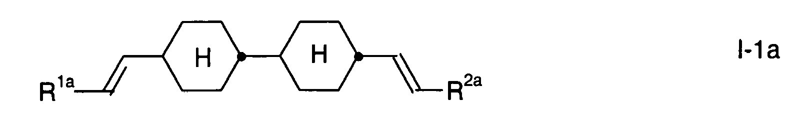 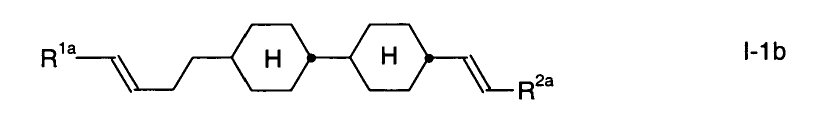 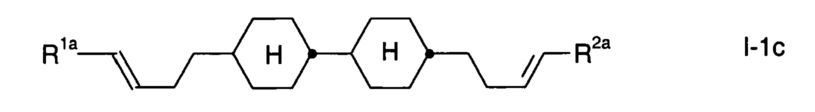 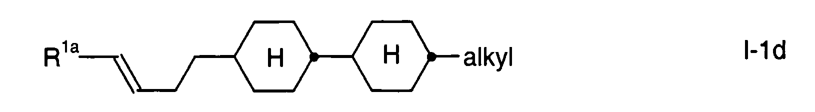 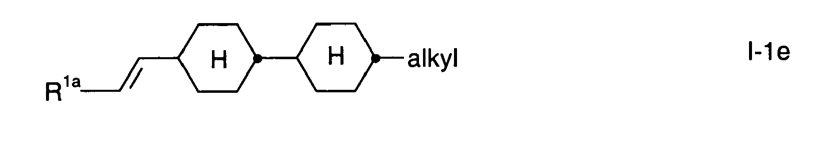 dans lesquelles R^{1a} et R^{2a} chacun, indépendamment l'un de l'autre, représentent H, CH₃, C₂H₅ ou n-C₃H₇, et alkyl représente un groupe alkyle ayant 1 à 7 atomes de C.

3. Milieu selon la revendication 1 ou 2, **caractérisé en ce qu'**il comprend additionnellement un ou plusieurs composés choisis parmi le groupe constitué des formules générales VII à XIII, 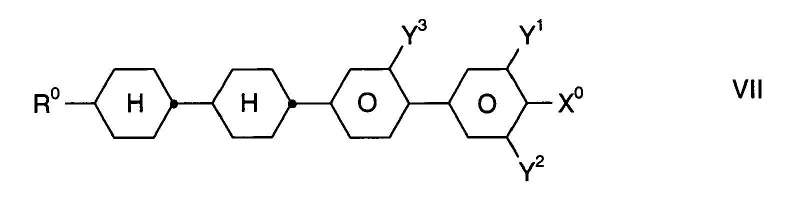 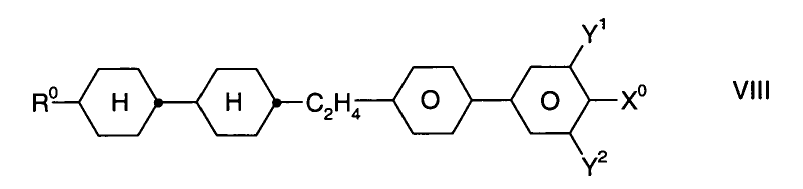 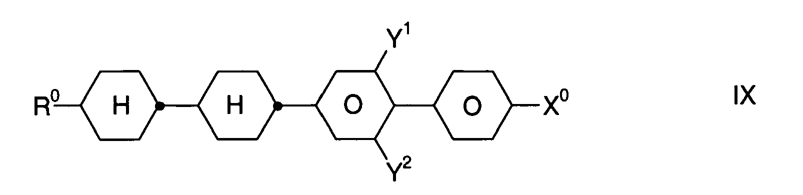 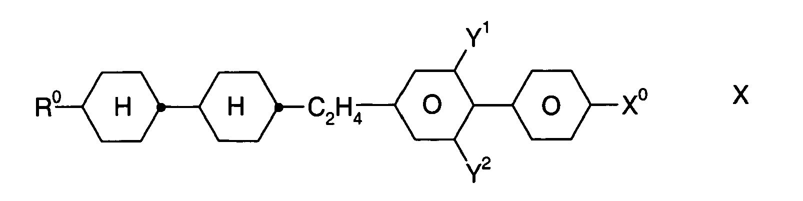 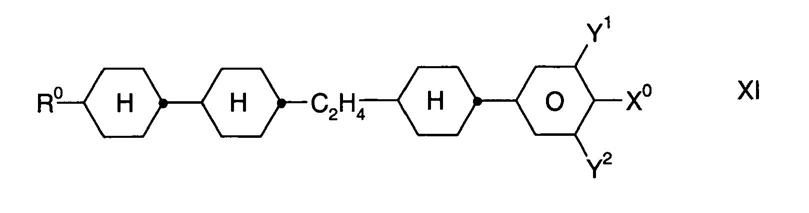 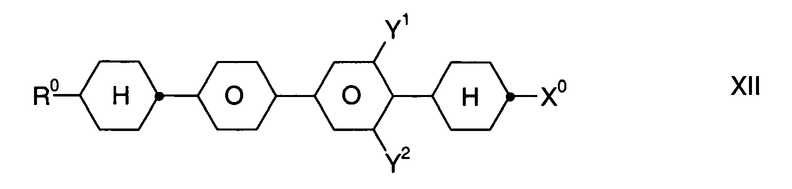 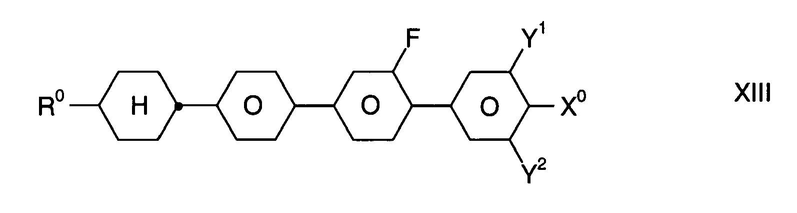 dans lesquelles R⁰, X⁰, Y¹ et Y² chacun, indépendamment les uns des autres, ont une des significations indiquées dans la revendication 1, et Y³ représente H ou F.

4. Milieu selon au moins l'une des revendications 1 à 3, **caractérisé en ce qu'**il comprend additionnellement un ou plusieurs composés de la formule XVIII, 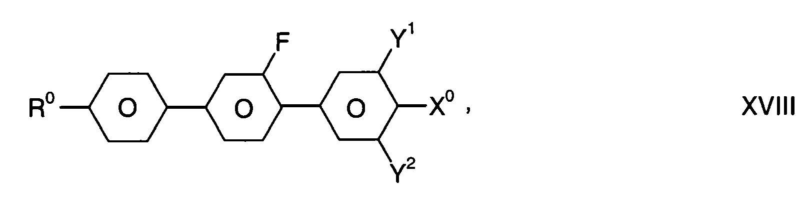 dans laquelle R⁰, X⁰, Y¹, Y² ont les significations indiquées dans la revendication 1.

5. Milieu selon au moins l'une des revendications 1 à 4, **caractérisé en ce que** la proportion de composés des formules IA-1 - IA-15 et I à VI ensemble dans le mélange dans sa globalité est d'au moins 50% en poids.

6. Milieu selon au moins l'une des revendications 1 à 5, **caractérisé en ce qu'**il comprend additionnellement un ou plusieurs composés des formules Ea à Ed, 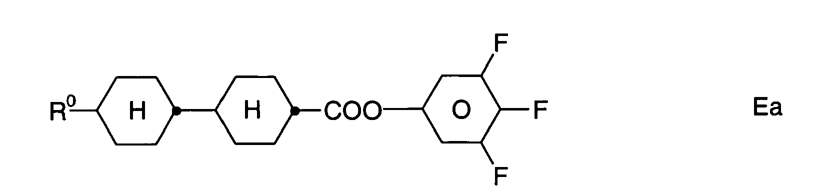 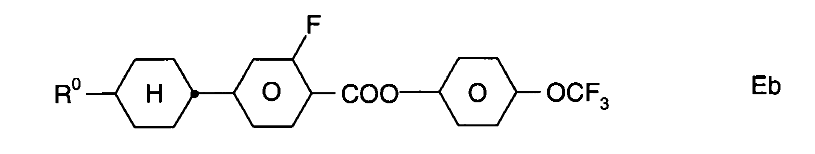 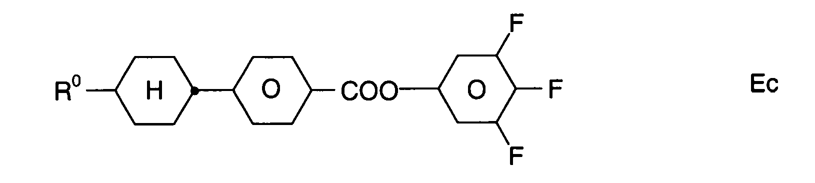 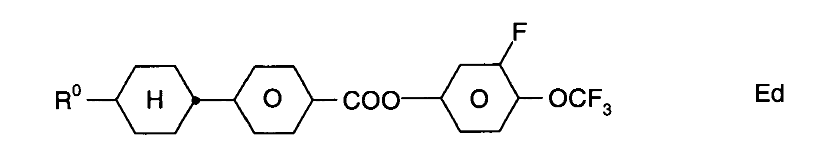 dans lesquelles R⁰ a la signification indiquée dans la revendication 1.

7. Milieu selon au moins l'une des revendications 1 à 6, **caractérisé en ce qu'**il comprend un ou plusieurs composés de la formule IIb, IIe ou IIg, 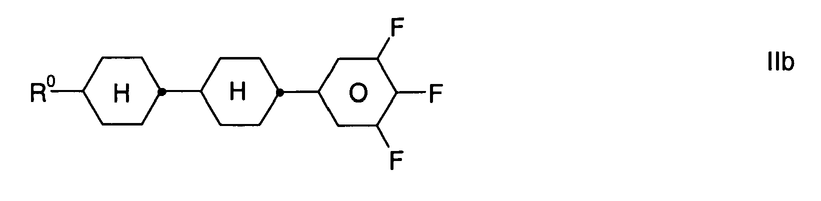 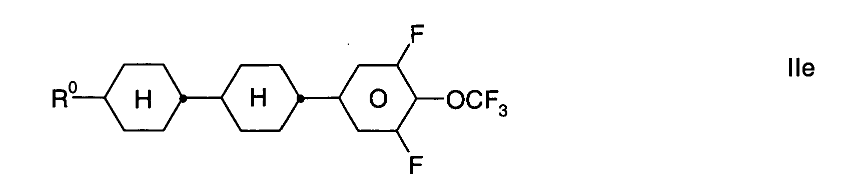 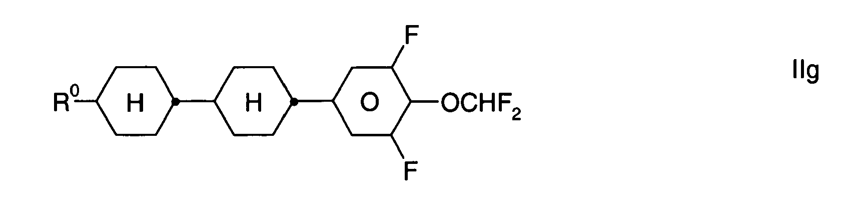 dans lesquelles R⁰ a la signification indiquée dans la revendication 1.

8. Milieu selon au moins l'une des revendications 1 à 7, **caractérisé en ce que** la proportion de composés des formules IA-1 - IA-15 dans le mélange dans sa globalité est de 10 à 50% en poids.

9. Utilisation du milieu cristallin liquide selon au moins l'une des revendications 1 à 8 pour des applications électro-optiques.

10. Affichage à cristaux liquides électro-optique contenant un milieu cristallin liquide selon au moins l'une des revendications 1 à 8.
